(19)

Europäisches Patentamt

European Patent Office

Office européen des brevets

(11) **EP 4 044 334 A2**

(12) **EUROPEAN PATENT APPLICATION**

(43) Date of publication:
**17.08.2022 Bulletin 2022/33**

(21) Application number: **22152256.8**

(22) Date of filing: **19.01.2022**

(51) International Patent Classification (IPC):
*H01M 50/184* (2021.01)   *H01M 50/531* (2021.01)
*H01M 10/04* (2006.01)   *H01M 50/107* (2021.01)
*H01M 50/152* (2021.01)   *H01M 50/167* (2021.01)
*H01M 50/186* (2021.01)   *H01M 50/533* (2021.01)
*H01M 50/536* (2021.01)

(52) Cooperative Patent Classification (CPC):
**H01M 10/0431; H01M 50/107; H01M 50/152;
H01M 50/167; H01M 50/179; H01M 50/184;
H01M 50/186; H01M 50/188; H01M 50/534;
H01M 50/536; H01M 50/538; H01M 50/545;
H01M 50/586; H01M 50/593;** H01M 50/213; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021   KR 20210007278
19.02.2021   KR 20210022894
19.02.2021   KR 20210022891
19.02.2021   KR 20210022897
19.02.2021   KR 20210022881
23.02.2021   KR 20210024424
08.03.2021   KR 20210030300
08.03.2021   KR 20210030291
09.04.2021   KR 20210046798
04.05.2021   KR 20210058183
14.06.2021   KR 20210077046
28.06.2021   KR 20210084326
01.10.2021   KR 20210131225
01.10.2021   KR 20210131208
01.10.2021   KR 20210131205
01.10.2021   KR 20210131207
01.10.2021   KR 20210131215
14.10.2021   KR 20210137001
15.10.2021   KR 20210137856
22.10.2021   KR 20210142196
09.11.2021   KR 20210153472
19.11.2021   KR 20210160823
24.11.2021   KR 20210163809
26.11.2021   KR 20210165866
03.12.2021   KR 20210172446
10.12.2021   KR 20210177091
31.12.2021   KR 20210194611
31.12.2021   KR 20210194612**

**31.12.2021   KR 20210194572
31.12.2021   KR 20210194593
31.12.2021   KR 20210194610
05.01.2022   KR 20220001802**

(71) Applicant: **LG Energy Solution, Ltd.
Seoul 07335 (KR)**

(72) Inventors:
• **LIM, Jae-Won**
**07335 Seoul (KR)**
• **KIM, Hak-Kyun**
**07335 Seoul (KR)**
• **LEE, Je-Jun**
**07335 Seoul (KR)**
• **JUNG, Ji-Min**
**07335 Seoul (KR)**
• **HWANGBO, Kwang-Su**
**07335 Seoul (KR)**
• **KIM, Do-Gyun**
**07335 Seoul (KR)**
• **MIN, Geon-Woo**
**07335 Seoul (KR)**
• **LIM, Hae-Jin**
**07335 Seoul (KR)**
• **JO, Min-Ki**
**07335 Seoul (KR)**
• **CHOI, Su-Ji**
**07335 Seoul (KR)**
• **KIM, Jae-Woong**
**07335 Seoul (KR)**
• **PARK, Jong-Sik**
**07335 Seoul (KR)**
• **CHOE, Yu-Sung**
**07335 Seoul (KR)**
• **LEE, Byoung-Gu**
**07335 Seoul (KR)**
• **RYU, Duk-Hyun**
**07335 Seoul (KR)**

**(Cont. next page)**

- **LEE, Kwan-Hee**
  **07335 Seoul (KR)**
- **LEE, Jae-Eun**
  **07335 Seoul (KR)**
- **KANG, Bo-Hyun**
  **07335 Seoul (KR)**
- **KONG, Jin-Hak**
  **07335 Seoul (KR)**
- **LEE, Soon-O**
  **07335 Seoul (KR)**
- **CHOI, Kyu-Hyun**
  **07335 Seoul (KR)**
- **PARK, Pil-Kyu**
  **07335 Seoul (KR)**

(74) Representative: **Goddar, Heinz J.**
    **Boehmert & Boehmert**
    **Anwaltspartnerschaft mbB**
    **Pettenkoferstrasse 22**
    **80336 München (DE)**

(54) **BATTERY WITH CURRENT COLLECTOR, BATTERY PACK AND VEHICLE INCLUDING SUCH BATTERY**

(57)    A battery according to an embodiment of the present invention includes: a rolled electrode assembly (10) having a structure in which a first electrode and a second electrode each having a sheet shape and a separator arranged between the first electrode and second electrode are wound in one direction, the first electrode including a first uncoated portion (11) not coated with an active material and exposed to the outside of the separator at a long side end thereof, at least a part of the first uncoated portion (11) being used as an electrode tab by itself; a battery housing (20) in which the electrode assembly (10) is accommodated through an opening portion formed at a side thereof; a current collector (30) including a tab coupling portion (32) coupled to the first uncoated portion (11) and a housing coupling portion (33) extending from the tab coupling portion (32) and electrically coupled to an inner surface of the battery housing (20); and a cap (40) covering the opening portion.

**FIG. 1a**

(52) Cooperative Patent Classification (CPC): (Cont.)
    H01M 50/249; H01M 50/503; H01M 2220/20

**Description**

TECHNICAL FIELD

The present disclosure relates to a battery with a current collector, as well as to a battery pack and a vehicle including the battery.

BACKGROUND ART

A battery according to the related art generally has a structure in which a tab for connecting a jelly-roll to an external terminal is welded and connected to a foil of the jelly-roll. The battery having the above structure has a limited current path and has very high resistance of the jelly-roll itself.

Accordingly, a method of reducing the resistance by increasing the number of tabs for connecting the jelly-roll to the external terminal has been attempted, but there is a limitation in reducing the resistance to a desired level and sufficiently securing current paths only by increasing the number of tabs.

Therefore, it is demanded to develop a new jelly-roll structure for reducing self-resistance of the jelly-roll and to develop a current collector structure suitable for the new jelly-roll structure. In particular, the necessity for application of the jelly-roll and the current collector having a new structure is much required for a device, e.g., an electric vehicle, which needs a battery pack having high output/high capacity.

Also, there is a need to develop a battery having a structure in which a coupling force between a current collector and a battery housing is improved and maintained at an improved level, and a current collector applied to the battery.

In addition, there is a need to develop a battery having improved energy density, by minimizing a dead space in a battery housing when a current collector and the battery housing are coupled to each other.

As a battery has recently been applied to an electric vehicle, a form factor of the battery has increased. That is, a diameter and a height of a battery have increased when compared to a conventional battery having a form factor of 1865, 2170, or the like. An increase in a form factor leads to increased energy density, enhanced safety against thermal runaway, and improved cooling efficiency.

The energy density of a battery may be further increased when an unnecessary space in a battery housing is minimized along with an increase in a form factor. Accordingly, it is necessary to design an entire structure of a battery as a low-resistive structure so that a current collector minimizes the amount of heat generated during rapid charging while increasing the capacity of a battery.

TECHNICAL PROBLEM

The present invention is designed to solve the problems of the related art, and therefore the present invention is directed to providing a current collector having a structure suitable for an electrode assembly having a low-resistive structure, and a battery including the current collector.

The present invention is also directed to providing a current collector having a structure capable of improving a coupling force of a coupling portion between the current collector and a battery housing, and a battery including the current collector.

The present invention is also directed to providing a current collector having a structure capable of improving the energy density of a battery, and a battery including the current collector.

The present invention is also directed to providing a current collector having a structure capable of improving convenience in a welding process for electrical connection between a battery housing and the current collector and improving productivity when a battery is manufactured, and a battery including the current collector.

However, the technical purpose to be solved by the present invention are not limited to the above, and other objects not mentioned herein will be clearly understood by one of ordinary skill in the art from the following invention.

SUMMARY OF THE INVENTION

A battery according to a first aspect of the present invention includes: a rolled electrode assembly comprising a first electrode and a second electrode, each having a sheet shape, and a separator arranged between the first electrode and the second electrode. The first electrode, the second electrode and the separator are wound in a winding direction. The winding direction may in particular correspond to a direction perpendicular to a height of the battery. The first electrode includes a first uncoated portion free of an active material coating, possibly free of any active material and/or layer. Thus, the first uncoated portion may be a portion of the first electrode not coated with and/or comprising any active material layer. Thus, while the rest of the first electrode may be coated at least in part with an active material layer, the first uncoated portion may be free of such active material layer.

The first electrode, in particular the first uncoated portion, extends beyond an edge of the separator, in particular in a direction parallel to a height of the battery (axial direction) and/or perpendicular to the direction in which the first electrode, the second electrode and the separator are wound. The first uncoated portion protrudes from said edge of the separator, in particular in said direction parallel to the height of the battery and/or perpendicular to the direction in which the first electrode, the second electrode and the separator are wound. Said edge of the separator may correspond to a long side end thereof. In other words, the first electrode portion may be exposed by the separator at said edge thereof, in particular at a long side end thereof. For example, the first uncoated portion may be exposed to an exterior of the separator at said edge of the separator.

A direction along a perimeter and/or circumference of the battery may be referred to herein as "circumferential direction". The circumferential direction may be perpendicular to a height of the battery and to a radial direction of the battery. For example, for a battery having a substantially cylindrical shape, the circumferential direction may correspond to a direction along the circumference of the circular cross-section of the battery, a radial direction may correspond to a direction parallel to a radius of the circular cross-section of the battery, and the axial direction of height may correspond to a vertical direction parallel to an axis of revolution symmetry of the battery.

The aforementioned edge of the separator may correspond to an edge of the sheet-shaped separator. An edge of the separator may for example correspond to a long side end of the separator, i.e. to a longer or longest side end of the sheet-shaped separator. For example, for a separator having a substantially rectangular shape before being rolled to form the electrode assembly of the battery, an edge of the rectangle formed by the unrolled separator corresponding to the longer side of the rectangle may correspond to an edge, in particular to a "long side end", of the separator. The edge or the long side end of the separator may hence be perpendicular to a height direction of the battery. In said direction perpendicular to the height of the battery, the first uncoated portion of the first electrode may protrude from and/or extend beyond the separator. Notably, the separator and each of the first and second electrodes need not necessarily have a rectangular shape any may have other shapes.

The battery according to the first aspect of the present invention further comprises a battery housing in which the electrode assembly is received. The battery housing has an opening portion formed at a side thereof, preferably at a bottom side thereof, which may correspond to a bottom side of the battery. The opening portion may in particular be configured such that the electrode assembly can be inserted into the battery housing through the opening portion, for example during the manufacturing of the battery. Thus, the electrode assembly may be enclosed and/or surrounded by the battery housing, in particular partly enclosed and/or surrounded by the battery housing. When the electrode assembly is arranged within the battery housing, the battery housing may enclose and/or surround the electrode assembly except for the opening portion, at which the electrode assembly may be exposed by the battery housing (before the cap to be described below is arranged in place).

The battery according to the first aspect of the present invention further comprises a (first) current collector comprising a tab coupling portion coupled to the first uncoated portion of the first electrode. Thus, at least a part of the first uncoated portion acts as an electrode tab, i.e. is used for electrically connecting the first electrode to the current collector, in particular to the tab coupling portion thereof. The current collector further comprises a housing coupling portion extending from the tab coupling portion and coupled, in particular electrically coupled, to an inner surface of the battery housing. Thus, the first electrode is electrically connected to the battery housing by the current collector via the tab coupling portion, which is connected, in particular electrically connected, to at least a part of the first uncoated portion of the first electrode, and via the housing coupling portion, which is electrically connected to the inner surface of the battery housing.

The battery according to the first aspect of the present invention further comprises a cap covering the opening portion. The cap may totally cover the opening portion of the battery housing. Thus, when the electrode assembly is arranged within the battery housing and the cap is arranged to cover the opening portion of the battery housing, the battery housing and the cap may enclose and/or surround the electrode assembly completely.

Preferably, the battery housing may include a beading portion formed on an end portion adjacent to the opening portion and press-fitted inward. The beading portion may be arranged next to and/or close to a portion of the battery housing forming one end of the battery housing, in particular a bottom end, at which the opening portion may be formed. One or more sidewalls of the battery housing may recess radially inwards at the beading portion.

In some preferred embodiments, the battery housing may include a crimping portion formed at a position between the opening portion and the beading portion, and extending and bent toward the opening portion.

Preferably, the housing coupling portion may be press-fixed by the crimping portion. The housing coupling portion may hence be retained in position by a pressure applied by the crimping portion.

According to preferred embodiments, the housing coupling portion may include: a contact portion coupled to the beading portion of the battery housing; and a connecting portion configured to connect the tab coupling portion to the contact portion. Preferably, at least a part of the connecting portion, possibly the entire connecting portion, may be convex upward with respect to an imaginary straight line extending from an end portion of the contact portion to an end portion of the tab coupling portion. The connecting portion may have a raised portion arranged higher than the beading portion. In particular, the connecting portion may have a structure that is uplifted upward to be over the beading portion. Preferably, the connecting portion may include at least one bent part. The at least one bent part may be arranged over an imaginary plane that bisects the imaginary straight line that extends from the end portion of the contact portion to the end portion of the tab coupling portion and is parallel to a bottom surface of the battery housing, i.e. over an imaginary plane that passes through a center of said imaginary straight line. Additionally or alternatively, the at least one bent part may be bent at an obtuse angle so as not to overlap, in particular with itself, when viewed along a longitudinal axis of the battery housing.

A boundary point between the contact portion and the connecting portion may be bent at an obtuse angle. An inclination of the connecting portion may decrease stepwise or gradually toward the beading portion. An angle between the tab coupling portion and the connecting portion may range from 0° to 90°.

In preferred embodiments, the connecting portion may support the cap.

The tab coupling portion and the contact portion may be arranged at a same height.

The contact portion may include a flat surface coupled to a top surface of the beading portion facing the opening portion.

In preferred embodiments, the beading portion may include: a beading portion top surface arranged over an innermost point that is press-fitted inward; and a beading portion bottom surface arranged under the innermost point that is press-fitted inward. Preferably, at least one tab coupling portion of the current collector may be arranged at a lower position than the beading portion bottom surface.

In preferred embodiments, at least one of the beading portion top surface and the beading portion bottom surface may be inclined, in particular at a certain angle, with respect to a bottom surface of the battery housing. In this case, the contact portion may be arranged on an inclined top surface of the beading portion.

At least one of the beading portion top surface and the beading portion bottom surface may be parallel to a bottom surface of the battery housing in at least a region. Preferably, the contact portion may be mounted on a flat top surface of the beading portion.

The beading portion top surface and the beading portion bottom surface may be asymmetric with respect to an imaginary reference plane that passes through the innermost point of the beading portion and is parallel to a bottom surface of the battery housing.

In preferred embodiments, the relation $PD \geq R_{1,min}+R_{2,min}+W_{bead,min}$ is fulfilled, wherein PD is a press-fitting depth of the beading portion, $R_{1,min}$ is a minimum value of a radius of curvature of the beading portion, $W_{bead,min}$ is a minimum value of a welding bead width, and $R_{2,min}$ is a minimum value of a radius of curvature at a boundary region between the beading portion and the inner surface of the battery housing. A "radius of curvature" of the beading portion may in particular refer to a radius of curvature defined in a sectional plane parallel to the height of the battery and perpendicular to the radial direction of the battery.

In preferred embodiments, a press-fitting depth of the beading portion may range from 0.2 mm to 10 mm.

According to preferred embodiments, if a press-fitting depth of the beading portion is PD, a maximum value of the press-fitting depth is $PD_{max}$, an overlap length that is a shortest distance, in particular in the radial direction, from an end portion of the contact portion to a vertical line that passes through an innermost point of the beading portion is OV, a minimum value of a radius of curvature of the beading portion is $R_{1,min}$, a minimum value of a welding bead width is $W_{bead,min}$, and a minimum value of a radius of curvature at a boundary region between the beading portion and the inner surface of the battery housing is $R_{2,min}$, a ratio OV/PD fulfils

$$(R_{1,min}+W_{bead,min})/PD_{max} \leq OV/PD \leq (PD_{max}-R_{2,min})/PD_{max}.$$

In preferred embodiments, the contact portion may be welded to the beading portion. Preferably, the contact portion may be welded to a flat top surface of the beading portion. More preferably, a welding region between the contact portion and the beading portion may be narrower than the flat top surface of the beading portion.

In preferred embodiments, if a press-fitting depth of the beading portion is PD, a maximum value of the press-fitting depth is $PD_{max}$, a distance from an innermost point of the beading portion to a central point of an outermost welding bead in a radial direction is W, an overlap length that is a shortest distance from an end portion of the contact portion to a vertical line that passes through the innermost point of the beading portion is OV, a minimum value of the overlap length OV is $OV_{min}$, a maximum value of the overlap length OV is $OV_{max}$, and a minimum value of a welding bead width is $W_{bead,min}$, a ratio W/PD fulfils

$$(OV_{min}-0.5*W_{bead,min})/PD_{max} \leq W/PD \leq (OV_{max}-0.5*W_{bead,min})/PD_{max}.$$

In preferred embodiments, at least one welding bead may be formed between the beading portion and the contact portion. Preferably, the at least one welding bead may form a welding pattern having a straight line shape extending in a circumferential direction. Additionally or alternatively, at least one welding bead may be formed between the beading portion and the contact portion, wherein the at least one welding bead may forms a welding pattern having an arc shape extending in a circumferential direction. Additionally or alternatively, a welding bead formed between the beading portion and the contact portion may form a welding pattern, wherein the welding pattern may have a linear shape comprising one or more spot welding points. Additionally or alternatively, a plurality of welding beads formed between the beading portion and the contact portion may be formed in a same contact portion. Additionally or alternatively, a width of a welding bead formed between the beading portion and the contact portion may be equal to or greater than 0.1 mm.

In preferred embodiments of the invention, the first uncoated portion and the tab coupling portion may be welded in a radial direction of the electrode assembly.

In preferred embodiments of the invention, the tab coupling portion may be welded to the first uncoated portion while being parallel to a bottom surface of the battery housing.

In preferred embodiments of the invention, a plurality of welding beads formed between the first uncoated portion and the tab coupling portion may form a welding pattern having a straight line shape extending in the radial direction of the electrode assembly.

In A welding bead formed between the first uncoated portion and the tab coupling portion may form a welding pattern, wherein the welding pattern may have a linear shape comprising one or more spot welding points.

A width of a welding bead formed between the first uncoated portion and the tab coupling portion may be equal to or greater than 0.1 mm.

In preferred embodiments, if a minimum value of a distance from the innermost point of the beading portion to the central point of the outermost welding bead in the radial direction is W1, and a distance from the innermost point of the beading portion to the central point of an outermost welding bead in the radial direction when the overlap length is OV is W, then

$$W1 = R1 + 0.5 * W_{bead,min},$$

and

$$W = OV - 0.5 * W_{bead,min}.$$

The beading portion may have a flat section parallel to a bottom surface of the battery housing in at least a region, and if the overlap length is OV and a radius of curvature of the beading portion is R1, a length of the flat section of the beading portion contacting the current collector may be OV - R1. Preferably, a radial extension of a welding pattern formed between the beading portion and the contact portion may be equal to or greater than $W_{bead,min}$ and equal to or less than OV - R1.

In preferred embodiments, a ratio of the radial extension of the welding pattern to a length of the flat section may range from 10% to 40% or from 10% to 30% or from 20% to 40% or from 15% to 35%.

In preferred embodiments, at least a part of the first uncoated portion may include a plurality of segments mutually separated in the winding direction of the electrode assembly. Each of the segments of the plurality of segments may hence be separated from each of the neighboring segments in the winding direction, while it may be materially connected with the rest of the first electrode without material separation in a direction perpendicular to the winding direction, e.g. in a direction parallel to a height of the battery. Thus, an extension of the fist electrode in said direction perpendicular to the winding direction may be different at different points of the longitudinal direction of the first electrode sheet. In particular, in portions of the first electrode along the longitudinal direction thereof corresponding to one of the plurality of segments, the first electrode may have an extension in said direction perpendicular to the winding direction greater than an extension of the first electrode in segments along the longitudinal direction thereof corresponding to interspaces between the segments.

The plurality of segments may be bent in a radial direction of the rolled electrode assembly forming a tab surface. Preferably, the plurality of segments may overlap in multiple layers in the radial direction of the electrode assembly forming the tab surface. By being bent in the radial direction of the rolled electrode assembly, the plurality of segments overlap with each other in the radial direction and form the tab surface.

In preferred embodiments, the tab surface may comprise a first radial section and a second radial section, wherein the first radial section may in particular surround the second radial section at least in part. In the first radial section, the number of overlapping layers of the segments may increase sequentially from a first radial position (i.e. a first position in the radial direction of the rolled electrode assembly) corresponding to an outer circumference of the rolled electrode assembly (e.g. an outermost radial position of the first electrode) to a second radial position at which the number of overlapping layers of the plurality of segments reaches a maximum value. The second radial section covers a radial region from the second radial position to a third radial position corresponding to a radial position of an innermost segment of the plurality of segments, i.e. of a segment of the plurality of segments that is arranged closest to the radial center in the radial direction. The third radial position is in particular closer to the radial center than the second radial position. The first radial section may be also referred to herein as "stack number increasing section" and the second radial section may be also referred to herein as "stack number uniform section".

Preferably, the tab coupling portion may be coupled to the tab surface overlapping the stack number uniform section. More preferably, the number of overlapping layers in the stack number uniform section may be 5 or more, 6 or more or 10 or more. These configurations were experimentally found out by the present inventors to be advantageous. More preferably, the tab coupling portion may be welded to the tab surface, and a welding region of the tab coupling portion may overlap at least 50% of an extension of the second radial section (i.e. the stack number uniform section) in the radial direction of the electrode assembly.

In preferred embodiments, a total radial extension T of the tab coupling portion may fulfil JR - 2\*F ≤ T < JR, wherein JR is an outer diameter of the electrode assembly, and F is a height of an outermost segment (of the plurality of segments) of the electrode assembly, e.g. of a segment that is arranged furthest away from the radial center of the battery in the radial direction, in particular further away than all other segments. The height of a segment may refer herein to a distance in a direction parallel to the height of the battery by which an unbent segment protrudes from the separator at a corresponding edge. The outermost segment may be arranged further away from the radial center of the battery than any other segment of the plurality of segments.

According to preferred embodiments, the current collector may comprise a current collector hole arranged at a central portion of the current collector. The current collector hole may preferably have circular shape. Preferably, a diameter of the current collector hole may be equal to or greater than a diameter of a winding central hole formed in a core of the electrode assembly.

However, in some embodiments, a diameter of the current collector hole may also be less than a diameter of a winding central hole formed in a core of the electrode assembly. Preferably, if a diameter of the winding central hole is R3, a diameter of the current collector hole may be equal to or greater than 0.5\*R3 and less than R3 or equal to or greater than 0.7\*R3 and less than R3.

In preferred embodiments, the battery may include a sealing element, for example a sealing gasket, arranged between the battery housing and the cap. Preferably, the contact portion may be arranged between the sealing element and the beading portion. A thickness of the sealing element may vary in a circumferential direction. "Circumferential direction" may refer herein in general, to any direction perpendicular to the radial direction and to the height of the battery. However, it is also possible that a thickness of the sealing element may increase alternately and decreased in a circumferential direction. Further, it is also possible that a thickness of the sealing element in a region where the sealing element does not contact the contact portion may be greater than a thickness of the sealing element in a region where the sealing element contacts the contact portion

According to preferred embodiments, the sealing element may have a same compressibility in a region where the sealing element contact the contact portion and in a region where the sealing element does not contact the contact portion. Alternatively, a compressibility of the sealing element in a region where the sealing element does not contact the contact portion may be less than a compressibility of the sealing element in a region where the sealing element contacts the contact portion.

In preferred embodiments, the current collector may comprise a plurality of leg structures extending in a radial direction in a state where the tab coupling portion and the housing coupling portion are connected to each other. Preferably, the leg structures may be arranged in a radial shape, a cross shape, or a combined shape thereof about a central portion of the current collector. A plurality of housing coupling portions may be provided. In particular, each of the leg structures may comprise a respective housing coupling portion, wherein the plurality of housing coupling portions may be connected to one another and integrally formed.

In preferred embodiments of the invention, the connecting portion may include at least one bending portion whose extension direction changes at least once. Thus, an extension direction of the at least one bending portion may not be always the same throughout the extension of the connecting portion, but may instead change along the extension of the bending portion. A protruding outermost point of the bending portion may be spaced apart by a certain interval from an innermost point of the beading portion. Due to the bending portion, an angle between the contact portion and the connecting portion may be an acute angle. The connecting portion may be elastically biased upward by the bending portion.

In preferred embodiments, a circumferential length of the contact portion may be equal to a circumferential length of the tab coupling portion. "Circumferential length" may refer herein to an extension of the contact portion in the circumferential direction. For example, the contact portion may have a constant circumferential length or width throughout a extension thereof in the radial direction. Additionally or alternatively, a circumferential length of the contact portion may be equal to a circumferential length of the connecting portion. However, in further related embodiments, a circumferential length of the contact portion may be greater than a circumferential length of the tab coupling portion and, additionally or alternatively, a circumferential length of the contact portion may be greater than a circumferential length of the connecting portion.

According to preferred embodiments, the contact portion may have an arc shape extending in a circumferential direction along the beading portion of the battery housing. Additionally or alternatively, the contact portion may have an arc shape extending in opposite directions along a circumferential direction, from an intersection between the connecting portion and the contact portion. Thus, starting out from an intersection region in which the connecting portion and the contact portion are mutually adjacent, the contact portion may have a first arc portion extending clockwise in the circumferential direction from said intersection region and a second arc portion extending anticlockwise in the circumferential direction from said intersection region. Preferably, , a sum of lengths of the contact portions extending in the circumferential direction may correspond to a length of an inner circumference of the battery housing. This may amply, that a sum of circumferential lengths covered by the contact portions may partly or totally cover the extension of the battery housing in the circumferential direction. Additionally or alternatively, the connecting portion may have an arc shape extending in the circumferential direction along the contact portion. Thus, the contact portion and/or the connecting portion may have an arc or curved shaped, for example the shape of a circumferential arc, wherein an extension of at least one of the contact portions in the circumferential direction, possibly of each one of the contact portions, may correspond to an extension of at least one of the connecting portions in the circumferential direction, possibly of each one of the connecting portions.

In some preferred embodiments, a boundary region between the tab coupling portion and the housing coupling portion may be bent so that an end portion of the housing coupling portion faces the beading portion.

According to preferred embodiments, a boundary region between the contact portion and the connecting portion may be bent. The "boundary region" may refer herein to a region or portion of the housing coupling portion at which the contact portion and the connecting portion are mutually adjacent. Additionally or alternatively, the boundary region between the contact portion and the connecting portion may have a complementary shape corresponding to an inner surface of the beading portion. Additionally or alternatively, the boundary region between the contact portion and the connecting portion may be coupled to the beading portion while having a shape matching an inner surface of the beading portion.

In preferred embodiments, a boundary region between the tab coupling portion and the housing coupling portion may be arranged radially inwards from an innermost point of the beading portion formed on the battery housing. The "boundary region" may refer herein to a region or portion of the current collector at which the tab coupling portion and the housing coupling portion are mutually adjacent. In other words, considering the arrangement in the radial direction of the battery, the boundary region between the tab coupling portion and the housing coupling portion may be arranged inwards from the innermost point of the beading portion of the battery housing, i.e. closer to the radial center of the battery than the innermost point of the beading portion of the battery housing.

Preferably, when viewed along a longitudinal axis of the battery housing, the tab coupling portion may not overlap the beading portion. This may in particular imply that the tab coupling portion may extend over a radial region in the radial direction of the battery different from a radial region in the radial direction of the battery over which the beading portion extends. Thus, the tab coupling portion and the beading portion can have no common radial position or coordinate.

In preferred embodiments, the second electrode may include a second uncoated portion free of an active material coating, possibly free of any active material and/or any active material layer. Thus, the second uncoated portion may be a portion of the second electrode not coated with and/or comprising any active material layer. Thus, while the rest of the second electrode may be coated at least in part with an active material layer, the second uncoated portion may be free of such active material layer. Thus, the second uncoated portion is not coated with an active material and/or an active material layer.

The second uncoated portion extends beyond an edge of the separator, in particular beyond a further edge of the separator opposite an edge of the separator beyond which the first uncoated portion extends, in particular in a direction parallel to a height of the battery and/or perpendicular to the direction in which the first electrode, the second electrode and the separator are wound. The second uncoated portion may protrude from said further edge of the separator, in particular in said direction parallel to the height of the battery and/or perpendicular to the direction in which the first electrode, the second electrode and the separator are wound. Said further edge of the separator may correspond to a long side end thereof, in particular to a long side end of the separator opposite a long side end of the separator from which the first uncoated portion protrudes. In other words, the second portion may be exposed by the separator at said edge thereof, in particular at a long side end thereof. For example, the second uncoated portion may be exposed to an exterior of the separator at said edge of the separator.

The aforementioned edges of the separator may correspond to edges of the sheet-shaped separator. A first edge of the separator may for example correspond to a first long side end of the separator, i.e. to a first longer or longest side end of the sheet-shaped separator and a second edge of the separator may for example correspond to a second long side end of the separator, i.e. to a second longer or longest side end of the sheet-shaped separator. For example, for a separator having a substantially rectangular shape before being rolled to form the electrode assembly of the battery, a first edge of the rectangle formed by the unrolled separator corresponding to a first longer side of the rectangle may correspond to a first edge, in particular to a first "long side end", of the separator. This first edge or first long side end of the separator may be perpendicular to a height direction of the battery and/or parallel to the winding direction. A second edge of the rectangle formed by the unrolled separator corresponding to a second longer side of the rectangle parallel and opposite to the first longer side or first edge may correspond to a second edge, in particular to a second "long side end", of the separator. This second edge or second long side end of the separator may be perpendicular to the height direction of the battery and/or parallel to the winding direction. In said direction perpendicular to the height of the battery, the first uncoated portion of the first electrode may protrude from and/or extend beyond the separator at the first edge and the second uncoated portion of the second electrode may protrude from and/or extend beyond the separator at the second edge. Notably, the separator and each of the first and second electrodes need not necessarily have a rectangular shape any may have other shapes. The battery further includes a terminal provided opposite to the opening portion and electrically connected to the second uncoated portion. Thus, like the first uncoated portion, the second uncoated portion can act as an electrode tab, in particular for electrically connecting the terminal to the second electrode. The terminal may be arranged opposite to the opening portion in the direction in which the height of the battery extends. For example, the opening portion may be arranged at a bottom side of the battery and the terminal may be arranged at a top side of the battery. If the battery has, for example, a cylindrical shape, the opening portion may be arranged at a bottom base of the battery and the terminal may be arranged a top base of the battery.

The battery may further include a second current collector formed between the second uncoated portion and the terminal and including a tab coupling portion coupled to the second uncoated portion and a terminal coupling portion coupled to the terminal. Preferably, the terminal coupling portion may cover a winding central hole of the electrode assembly. Thus, in contrast to some embodiments of the central portion of the first collector described above, the terminal coupling portion of the second collector may include no central hole or opening overlapping the winding central hole of the electrode assembly.

In preferred embodiments, the second current collector may have a an extension in the radial direction greater than an extension in the radial direction of the first collector. The second current collector may protrude from the first current collector (from a footprint thereof) in the radial direction. For example, a longest radial distance from a center of the terminal coupling portion of the second current collector to an end of the tab coupling portion of the second current collector may be greater than a longest radial distance from a central portion of the first current collector to an end of the tab coupling portion of the first current collector. For example, a radial extension of the second collector may substantially correspond to a radial extension of the rolled electrode assembly, while the first collector may have a smaller radial extension.

In some preferred embodiments, the tab coupling portion of the second current collector may be coupled to a bent end portion of the second uncoated portion. Preferably, a welding region in which the tab coupling portion of the second current collector is coupled to the bent end portion of the second uncoated portion is formed such that a distance from a radial center of the terminal coupling portion of the second current collector to the welding region of the second current collector is equal to or has a distance deviation of 5% or less from a distance from a central portion of the (first) current collector to a welding region in which the tab coupling portion of the (first) current collector is coupled to the first uncoated portion, in particular to a bent end portion thereof. Preferably, the welding region of the second current collector may have a radial extension greater than a radial extension of the welding region on the tab coupling portion of the (first) current collector. The "first current collector" may refer herein to the current collector that is electrically connected to the first electrode, in particular to the first uncoated portion thereof.

In preferred embodiments, one or more holes for injecting an electrolytic solution may be formed in the tab coupling portion of the collector.

In preferred embodiments of the invention, a form factor ratio obtained by dividing a diameter of the battery by a height of the battery may be greater than 0.4. For example, the battery may have a diameter of 46 mm and a height of 80 mm, corresponding to a form factor 46/80 of 0,575.

In preferred embodiments, a resistance measured or measurable between a positive electrode of the battery, which may correspond to one of the first and second electrodes, and a negative electrode of the battery, which may correspond to the other one of the first and second electrodes, may be equal to or less than 4 m$\Omega$, equal to or less than 1 m$\Omega$ or equal to or less than 0,5 m$\Omega$.

A battery according to any of the embodiments of the first aspect of the invention described may comprise, possibly instead of the cap covering the opening portion, a sealing element arranged between the opening portion of the battery housing and the current collector, wherein a portion of the current collector contacting the inner surface of the battery housing is arranged between the inner surface of the battery housing and the sealing element.

In particular, a battery may comprise: a rolled electrode assembly comprising a first electrode, a second electrode, and a separator arranged between the first and second electrodes, wherein the first electrode and the second electrode each have a sheet shape, wherein the first electrode, the second electrode and the separator are wound in one direction (a winding direction). The first electrode comprises a first uncoated portion free of an active material, wherein the first uncoated portion extends beyond an edge of the separator. Thus, at least a part of the first uncoated portion may act or be used as an electrode tab by itself. The battery further comprises a battery housing in which the electrode assembly is received, wherein the battery housing has an opening portion formed at a side thereof, in particular at a bottom side thereof. The battery further comprises a current collector electrically connected to the first uncoated portion and to an inner surface of the battery housing. Thus, the first uncoated portion and the battery housing are electrically coupled by means of the current collector. According to this aspect of the invention, possibly instead of an cap described for the first aspect of the invention, which is optional for this aspect of the invention, the battery may further comprise a sealing element arranged between the opening portion of the battery housing and the current collector, wherein a portion of the current collector contacting the inner surface of the battery housing is arranged between the inner surface of the battery housing and the sealing element. Preferably, the battery housing may include a beading portion formed on an end portion adjacent to the opening portion and press-fitted inward.

In preferred embodiments, an extension direction of a welding pattern formed between the first uncoated portion and the tab coupling portion and an extension direction of a welding pattern formed between the beading portion and the contact portion may be perpendicular to each other.

In preferred embodiments, an innermost point of the beading portion may be arranged radially inwards with respect to a distal point of the crimping portion. This may in particular mean that a point of the beading portion closest to the radial center of the battery may be closer to the radial center of the battery than a point of the crimping portion furthest from the radial center of the battery.

In preferred embodiments, in particular when the battery comprises the sealing element and the cap, the sealing element may surround the cap, wherein a radial extension of a portion of the sealing element covering a bottom surface of the cap may be less than a radial extension of a portion of the sealing element covering a top surface of the cap. Thus, a portion of a bottom surface of the cap covered by the sealing element may be smaller than a portion of the top portion of the cap

In preferred embodiments, a ratio of an area where the current collector does not contact a top surface of the electrode assembly to an area of a circle having an outer diameter corresponding to a diameter of the electrode assembly may be equal to or greater than 30% and less than 100%, preferably equal to or greater than 60% and less than 100%.

A second aspect of the invention refers to a battery pack comprising a plurality of batteries according to any of the embodiments of the first aspect of the invention described above.

Preferably, the plurality of batteries may be arranged in a certain number of columns, wherein a terminal and an outer surface of a top side of a battery housing of each battery may be arranged facing in the same direction. The "top side" of a battery housing may in particular correspond to the side of the battery housing on which the corresponding terminal is arranged, which may correspond to a top base for the battery, for example a top circular base of a cylindrical battery. In particular, a terminal and an outer surface of a top side of a battery housing of each of the batteries of the battery pack may be are arranged facing a plurality of bus bars configured to connect the plurality of batteries in series and in parallel. In particular, each of the plurality of bus bars may be arranged over adjacent batteries, wherein each of the plurality of bus bars may comprise: a body portion extending between terminals of adjacent batteries and/or between adjacent columns of batteries; a plurality of first bus bar terminals extending from a side of the body portion and electrically coupled to an electrode terminal of a battery arranged at one side of the bus bar, for example to the left of the bus bar; and a plurality of second bus bar terminals extending from the other side of the body portion and electrically connected to an outer surface of a top side of a battery housing of a battery arranged at the other side of the bus bar, for example to the right of the bus bar.

A third aspect of the invention refers to a vehicle comprising a battery according to any of the embodiments of the first aspect of the invention and/or a battery pack according to any of the embodiments of the second aspect of the invention. The vehicle may for example be an electric car.

A current collector according to the invention may include: at least one tab coupling portion coupled to a first uncoated portion of an electrode assembly; and at least one housing coupling portion extending from the tab coupling portion and electrically coupled to a beading portion of a battery housing.

ADVANTAGEOUS EFFECTS

According to the present invention, resistance may be greatly reduced in electrical connection between an electrode assembly and a battery housing.

Also, according to the present invention, a coupling force of a coupling portion between a current collector and a battery housing may be improved.

In addition, according to the present invention, the energy density of a battery may be improved.

Also, according to the present invention, when a battery is manufactured, convenience in a welding process for electrical connection between a battery housing and a current collector may be improved, and thus, productivity may be improved.

However, effects obtainable from the present invention may be non-limited by the above-mentioned effect. Other unmentioned effects may be clearly understood from the following description by one of ordinary skill in the art to which the present invention pertains.

DESCRIPTION OF DRAWINGS

The accompanying drawings illustrate exemplary preferred embodiments of the different aspects of the invention and together with the foregoing disclosure, serve to provide further understanding of the technical features of the invention, and thus, the present disclosure is not construed as being limited to the drawing.

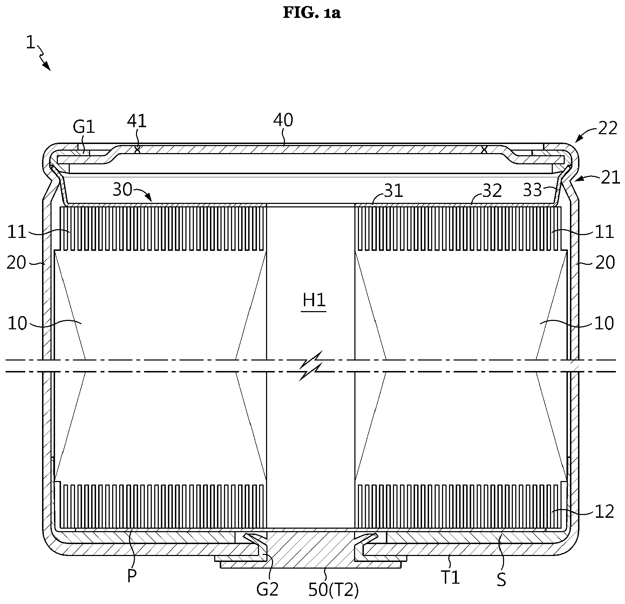

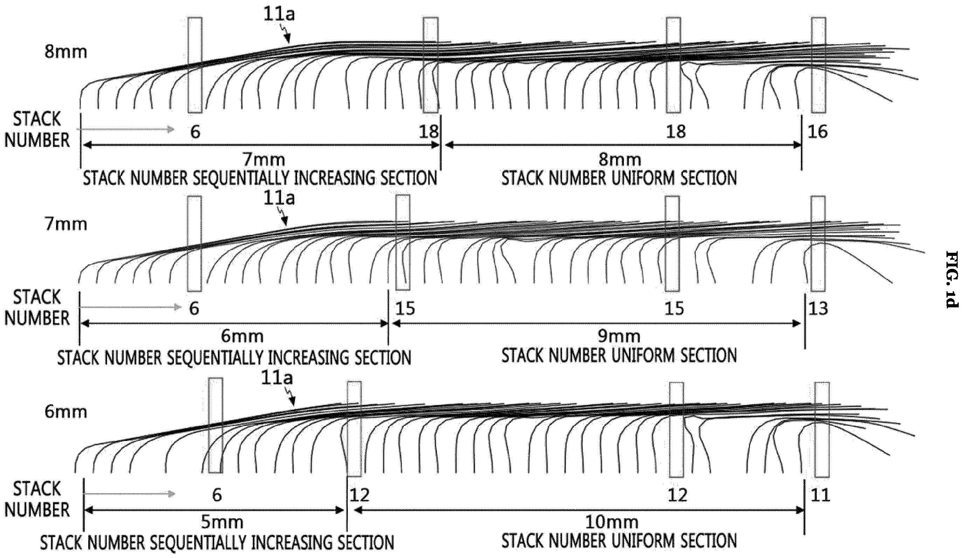

FIG. 1a is a longitudinal sectional view illustrating a part of a battery, according to an embodiment of the present invention.

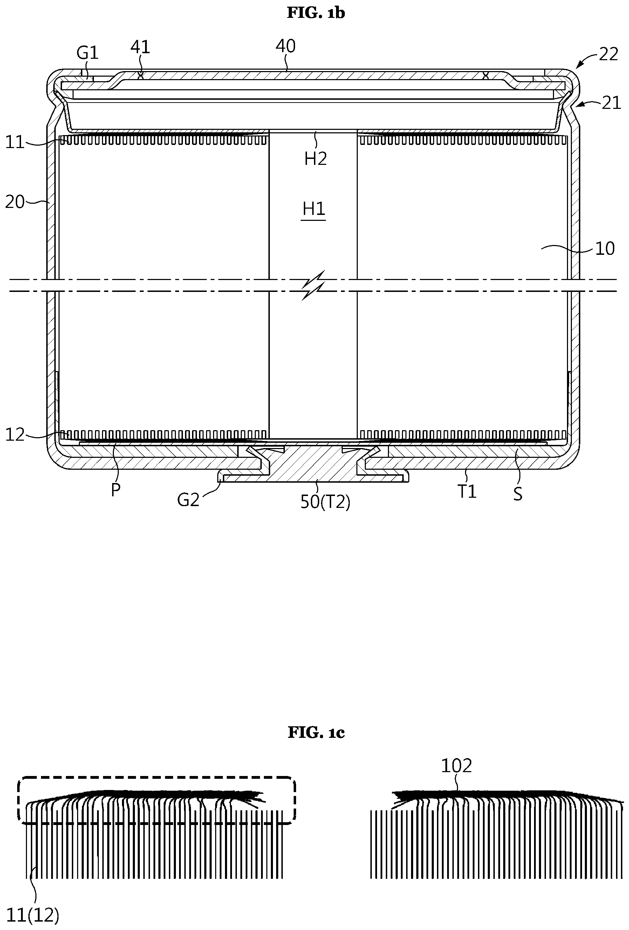

FIG. 1b is a longitudinal sectional view illustrating a part of a battery, according to another embodiment of the present invention.

FIG. 1c is an enlarged view illustrating an upper portion of an electrode assembly of FIG. 1b.

FIG. id is an enlarged view illustrating an upper portion of a first uncoated portion of FIG. 1c.

FIG. 2 is a longitudinal sectional view illustrating a part of a battery, according to another embodiment of the present invention.

FIG. 3 is a longitudinal sectional view illustrating a part of a battery, according to another embodiment of the present invention.

FIG. 4a is a view for describing a current collector included in the battery of FIG. 3.

FIG. 4b is a view for describing an embodiment where a bending portion is omitted in the current collector of FIG. 4a.

FIG. 5 is a view for describing a current collector, according to another embodiment of the present invention.

FIG. 6 is a view for describing a current collector, according to another embodiment of the present invention.

FIG. 7 is a view for describing a relationship between a current collector hole and a winding hole.

FIG. 8a is a view for describing a welding region between a current collector and a first uncoated portion and a welding region between the current collector and a beading portion of FIG. 4a.

FIG. 8b is a view for describing a welding region between a current collector and a first uncoated portion and a welding region between the current collector and a beading portion of FIG. 4b.

FIG. 9 is a view for describing a welding region between a current collector and a first uncoated portion and a welding region between the current collector and a beading portion of FIG. 5.

FIG. 10 is a view for describing a welding region between a current collector and a first uncoated portion and a welding region between the current collector and a beading portion of FIG. 6.

FIG. 11 is a view for describing a position, a length, and a width of a welding bead formed in a welding region between a contact portion and a beading portion.

FIG. 12 is a view for describing a relationship between a diameter of an inner surface of a battery housing and a total diameter of a current collector.

FIG. 13a is a view for describing a welding process of a current collector.

FIG. 13b is a view for describing a beading process of a battery housing.

FIG. 13c is a view for describing a crimping process of a battery housing.

FIG. 13d is a view for describing a sizing process of a battery housing.

FIG. 13e is a view for describing a change in a current collector after a sizing process according to a shape of the current collector before a sizing process.

FIG. 13f is a view for describing a shape of a current collector for maintaining a welding region even after a sizing process.

FIG. 13g is a view for describing a shape of a current collector for maintaining a welding region even after a sizing process.

FIG. 14 is a plan view illustrating an electrode plate structure, according to a preferred embodiment of the present invention.

FIG. 15 is a cross-sectional view illustrating an electrode assembly in which an uncoated portion segmentation structure of an electrode plate is applied to a first electrode plate and a second electrode plate, taken along a longitudinal direction Y, according to an embodiment of the present invention.

FIG. 16a is a cross-sectional view illustrating an electrode assembly in which an uncoated portion is bent, taken along the longitudinal direction Y, according to an embodiment of the present invention.

FIG. 16b is a perspective view illustrating an electrode assembly in which an uncoated portion is bent, according to an embodiment of the present invention.

FIG. 17 is a top plan view illustrating a state where a plurality of batterys are connected in series and in parallel by using a bus bar, according to an embodiment of the present invention.

FIG. 18a is a view for describing a second current collector, according to an embodiment of the present invention.

FIG. 18b is a view for describing a second current collector, according to another embodiment of the present invention.

FIG. 19 is a view for describing a battery pack including a battery, according to an embodiment of the present invention.

FIG. 20 is a view for describing a vehicle including the battery pack of FIG. 19.

EXAMPLES

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention, so it should be understood that other equivalents and modifications could be made thereto without departing from the scope of the invention.

In addition, in order to help the understanding of the present invention, the accompanying drawings are not drawn to scale, but dimensions of some components may be exaggerated. Also, the same reference signs may be assigned to the same components in different embodiments.

When it is explained that two objects are identical, this means that these objects are 'substantially identical'. Accordingly, the substantially identical objects may include deviations considered low in the art, for example, deviations within 5%. Also, when it is explained that certain parameters are uniform in a certain region, this may mean that the parameters are uniform in terms of an average.

Referring to FIG. 1a, a battery 1 according to an embodiment of the present invention includes an electrode assembly 10, a battery housing 20, a current collector (first current collector) 30, and a cap 40. The battery 1 may further include a terminal 50 and/or a sealing element G1 and/or an insulating gasket G2 and/or a current collector (second current collector) P and/or an insulator S. The terminal 50 may be provided opposite to an opening portion, and may be electrically connected to a second uncoated portion 12.

The electrode assembly 10 includes a first uncoated portion 11 and the second uncoated portion 12. In more detail, the electrode assembly may be manufactured by winding a stack formed by sequentially stacking a first electrode, a separator, a second electrode, and a separator at least once. That is, the electrode assembly 10 applied to the present invention may be a rolled electrode assembly. In this case, an additional separator may be provided on an outer circumferential surface of the electrode assembly 10 for insulating from the battery housing 20. The electrode assembly 10 may have a rolled structure well known in the related art without limitation.

The electrode assembly 10 may be a rolled electrode assembly having a structure in which a first electrode current collector and a second electrode current collector each having a sheet shape and a separator arranged between the first and second electrode current collectors are wound in one direction. The first electrode may include the first uncoated portion 11 that is not coated with an active material layer and is exposed to the outside of the separator at a long side end thereof. The second electrode may include the second uncoated portion 12 that is not coated with an active material layer and is exposed to the outside of the separator at a long side end thereof. At least a part of the first uncoated portion 11 may be used as an electrode tab by itself. At least a part of the second uncoated portion 12 itself may be used as an electrode tab by itself.

In detail, the first electrode includes a first electrode current collector and a first electrode active material coated on one surface or both surfaces of the first electrode current collector. An uncoated portion on which the first electrode active material is not coated exists at one end in a width direction of the first electrode current collector (direction parallel to a height direction of the battery 1 of FIG. 1a). The uncoated portion functions as a first electrode tab. The first uncoated portion 11 is provided in an upper portion of the electrode assembly 10 accommodated in the battery housing 20 in a height direction (direction parallel to a height direction of the battery 1 of FIG. 1a). The first uncoated portion 11 may be, for example, a negative electrode tab.

The second electrode includes a second electrode current collector and a second electrode active material coated on one surface or both surfaces of the electrode current collector. An uncoated portion on which the second electrode active material is not coated exists at the other end in a width direction of the second electrode current collector (direction parallel to the height direction of the battery 1 of FIG. 1a). The uncoated portion functions as a second electrode tab. The second uncoated portion 12 is provided on a lower portion in a height direction of the electrode assembly 10 accommodated in the battery housing 20. The second uncoated portion 12 may be, for example, a positive electrode tab.

In the present invention, a positive electrode active material coated on a positive electrode plate and a negative electrode active material coated on a negative electrode plate may be any type of active material, provided that the active material is well known in the art.

In an example, the positive active electrode active material may include an alkali metal compound expressed by a general chemical formula $A[A_xM_y]O_{2+z}$ (A includes at least one of Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; and stoichiometric coefficients x, y, and z are selected so that the compound maintains electrically neutral).

In another embodiment, the positive electrode active material may be an alkali metal compound $xLiM^1O_2(1x)Li_2M^2O_3$ ($M^1$ includes at least one element having an average oxide state of 3; $M^2$ includes at least one element having an average oxidation state of 4; and $0 \leq x \leq 1$) disclosed in US 6,677,082, US 6,680,143, etc.

In another example, the positive electrode active material may be lithium metal phosphate expressed by a general chemical formula $Li_aM^1_xFe_{1x}M^2_yP_{1y}M^3_zO_{4z}$ ($M^1$ includes at least one element selected from Ti, Si, Mn, Co, Fe, V, Cr, Mo, Ni, Nd, Al, Mg, and Al; $M^2$ includes at least one element selected from Ti, Si, Mn, Co, Fe, V, Cr, Mo, Ni, Nd, Al, Mg, Al, As, Sb, Si, Ge, V, and S; $M^3$ includes an element of a halogen group selectively containing F; $0 < a \leq 2$, $0 \leq x \leq 1$, $0 \leq y < 1$, $0 \leq z < i$; and stoichiometric coefficients a, x, y, and z are selected so that the compound matains electrically neutral), or $Li_3M_2(PO_4)_3$ [M includes at least one element selected from Ti, Si, Mn, Fe, Co, V, Cr, Mo, Ni, Al, Mg, and Al].

Preferably, the positive electrode active material may include primary particles and/or secondary particles in which the primary particles are aggregated.

In an example, the negative electrode active material may use a carbon material, lithium metal or lithium metal compounds, silicon or silicon compounds, tin or tin compounds, etc. Metal oxide such as $TiO_2$ or $SnO_2$ having a potential of less than 2 V may be also used as the negative electrode active material. As the carbon material, low crystalline carbon and high crystalline carbon may be used.

The separator may include a porous polymer film, for example, made of a polyolefin-based polymer such as an ethylene homopolymer, a propylene homopolymer, an ethylene/butene copolymer, an ethylene/hexene copolymer, or an ethylene/methacrylate copolymer, in a single or stack structure thereof. In another example, the separator may be a common porous non-woven fabric, for example, a non-woven fabric made of glass fiber having a high melt point or polyethylene terephthalate fiber.

At least one surface of the separator may include a coating layer of inorganic particles. Otherwise, the separator itself may be made of a coating layer of inorganic particles. The inorganic particles included in the coating layer may be coupled to a binder so that an interstitial volume exists between adjacent inorganic particles.

The inorganic particles may include an inorganic material having a dielectric constant of 5 or more. In a non-limiting example, the inorganic particles may include at least one material selected from the group consisting of $Pb(Zr,Ti)O_3$ (PZT), $Pb_{1x}La_xZr_{1y}Ti_yO_3$ (PLZT), $PB(Mg_3Nb_{2/3})O_3\text{-}PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, $MgO$, $CaO$, $ZnO$, and $Y_2O_3$.

An electrolyte may be a salt having a structure such as $A^+B^-$. Here, $A^+$ includes an alkali metal cation such as $Li^+$, $Na^+$, or $K^+$ or a combination thereof. In addition, $B^-$ includes at least one anion selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The electrolyte may also be dissolved in an organic solvent. The organic solvent may use propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof.

The battery housing 20 is a receiving body of a substantially cylindrical shape having an opening portion at one side thereof, and includes a metal material having conductivity. A side surface of the battery housing 20 and a bottom surface of the battery housing 20, opposite to the opening portion, are generally integrally formed with each other. That is, the battery housing 20 is generally formed so that an upper end in a height direction is opened and a lower end except for a central portion is closed. The bottom surface of the battery housing 20 may have a substantially flat shape. The battery housing 20 may receive the electrode assembly 10 through the opening portion formed at one side in the height direction thereof. The battery housing 20 may also receive the electrolyte through the opening portion.

The battery housing 20 may include a beading portion 21 that is formed on an end portion adjacent to the opening portion and is press-fitted inward. The battery housing 20 may include a crimping portion 22 that is formed at a position between the opening portion and the beading portion 21 and extends and is bent toward the opening portion.

In detail, the battery housing 20 may include the beading portion 21 formed on an upper end portion thereof. The battery housing 20 may further include the crimping portion 22 formed above the beading portion 21. The beading portion 21 is formed by press-fitting an outer circumference of the battery housing 20 to a certain depth. The beading portion 21 is formed over the electrode assembly 10. An inner diameter of the battery housing 20 at a region where the beading portion 21 is formed is less than a diameter of the electrode assembly 10.

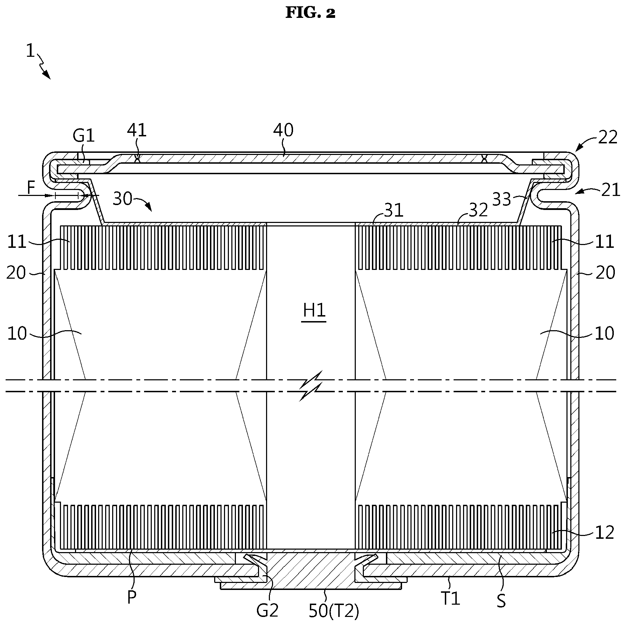

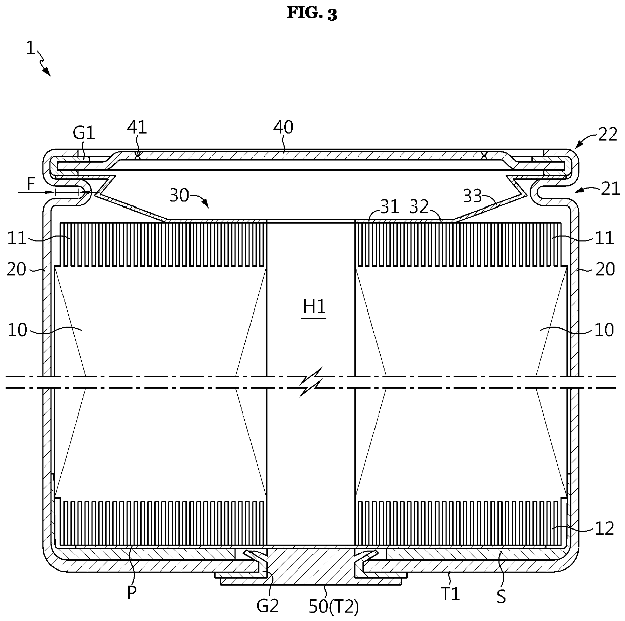

The beading portion 21 provides a support surface on which the cap 40 may be mounted. Also, the beading portion 21 may provide a support surface on which at least a part of a circumferential edge of the current collector 30 described below may be mounted and coupled. That is, on a top surface of the beading portion 21, at least a part of a circumferential edge of the current collector 30 of the present invention and/or a circumferential edge of the cap 40 of the present invention may be mounted. As shown in FIGS. 2 and 3, in order to stably support at least a part of the circumferential edge of the current collector 30 and/or the circumferential edge of the cap 40, at least a part of the top surface of the beading portion 21 may extend in a direction substantially parallel to the bottom surface of the battery housing 20, that is, a direction substantially perpendicular to a sidewall of the battery housing 20.

The beading portion 21 may include: a beading portion top surface arranged over an innermost point that is press-fitted inward; and a beading portion bottom surface arranged under the innermost point that is press-fitted inward.

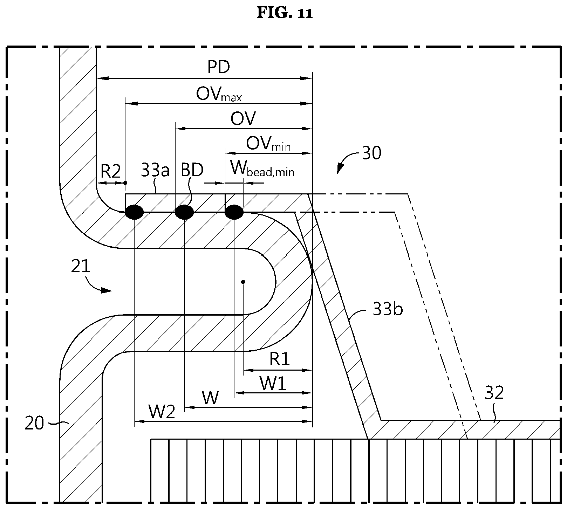

For example, a press-fitting depth PD of the beading portion 21 may range from about 0.2 mm to about 10 mm. For a minimum value of the press-fitting depth PD of the beading portion 21, a radius of curvature R1 of the beading portion 21, a welding bead width $W_{bead}$, and a radius of curvature R2 at a boundary region between the beading portion 21 and an inner surface of the battery housing 20 should be considered together. For example, referring to FIG. 11, in order to enable welding, an additional space in addition to the radius of curvature R1 of the beading portion 21 and the radius of curvature R2 at the boundary region between the beading portion 21 and the inner surface of the battery housing 20 is required. This is because, when the press-fitting depth PD is R1+R2, a flat section F does not exist in the beading portion. Furthermore, in order to enable welding, an additionally required space should be equal to or greater than a minimum width $W_{bead,min}$ of a welding bead BD. Accordingly, the minimum value of the press-fitting depth PD satisfies the following relation.

$$PD \geq R_{1,min} + R_{2,min} + W_{bead,min}$$

For example, minimum values of $R_{1,min}$ and $R_{2,min}$ may each be about 0.05 mm, and $W_{bead,min}$ may be about 0.1 mm. In this case, the minimum value of the press-fitting depth PD may be equal to or greater than about 0.2 mm.

In another aspect, a maximum value of the press-fitting depth PD of the beading portion 21 may vary according to a material and a thickness of the battery housing 20. In an example, when a material of the battery housing 20 is a steel material and a maximum thickness of the battery housing 20 is about 1 mm, the maximum value of the press-fitting depth PD of the beading portion 21 may be about 10 mm. Accordingly, in an embodiment, the press-fitting depth PD of the beading portion 21 may have a value between about 0.2 mm and about 10 mm.

In another aspect of the present invention, as shown in FIG. 1a, at least one of the beading portion top surface and the beading portion bottom surface may be inclined at a certain angle with respect to the bottom surface of the battery housing 20. Alternatively, as shown in FIGS. 2 and 3, at least one of the beading portion top surface and the beading portion bottom surface may include a section parallel to the bottom surface of the battery housing 20 in at least a region. That is, the beading portion top surface and the beading portion bottom surface may include the flat section F (see FIG. 3) in at least a part.

The crimping portion 22 is formed over the beading portion 21. The crimping portion 22 extends and is bent to surround a circumferential edge of the cap 40 arranged over the beading portion 21. Due to this bent shape of the crimping portion 22, the cap 40 is fixed to the beading portion 21.

In another aspect, an innermost point of the beading portion 21 may be arranged more inside in a radial direction than a distal point of the crimping portion 22. For example, referring to FIG. 2, the distal point of the crimping portion 22 may be arranged more outside in the radial direction than the innermost point of the beading portion 21. According to this structure, the flat beading portion 21 may be maintained even after a sizing process. For example, if the innermost point of the beading portion 21 is arranged more outside in the radial direction than the distal point of the crimping portion 22, a radial extension of a top surface of the crimping portion 22 would be greater than a radial extension of the beading portion 21. In this case, the area of the top surface of the crimping portion 22 to which pressure is applied in the sizing process may be increased, and thus, the beading portion 21 may not be flat after the sizing process. Accordingly, in the present invention, it is preferable that the innermost point of the beading portion 21 is arranged more inside than a distal end of the crimping portion 22 in the radial direction.

Also, the crimping portion 22 may be omitted, and the cap 40 may be fixed while covering the opening portion of the battery housing 20 through another fixing structure. For example, a battery in which a beading portion is omitted is disclosed in Patent Application Publication No. KR 10-2019-0030016 A of the present applicant, and such a structure may be applied to the present invention.

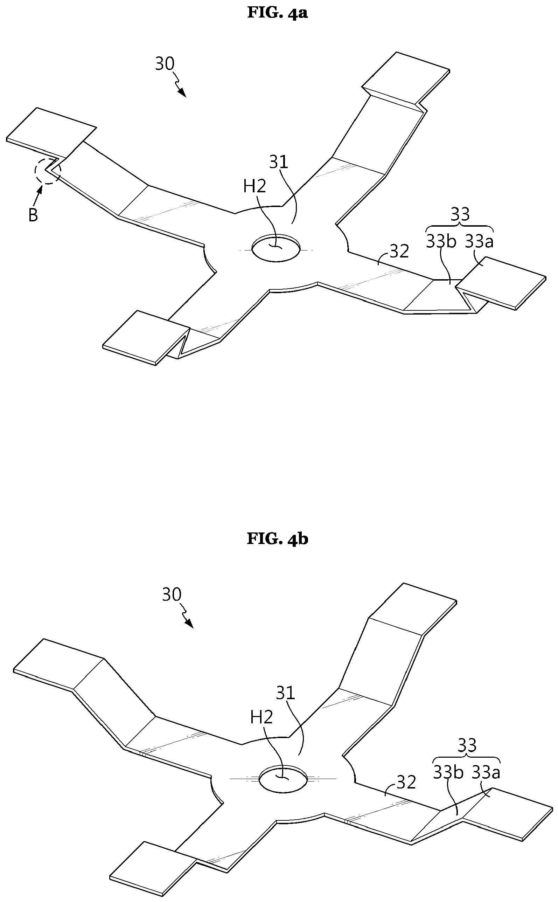

The current collector (first current collector) 30 according to an embodiment of the present invention will now be described with reference to FIGS. 3 and 4a.

First, referring to FIG. 3, the current collector 30 according to an embodiment of the present invention is accommodated in the battery housing 20, and is electrically connected to the electrode assembly 10 and is also electrically connected to the battery housing 20. That is, the current collector 30 electrically connects the electrode assembly 10 to the battery housing 20. Preferably, the current collector 30 may be electrically coupled to the first uncoated portion 11 and the beading portion 21 of the battery housing 20. At least one tab coupling portion 32 of the current collector 30 may be arranged at a lower position than the beading portion bottom surface.

The current collector 30 includes the tab coupling portion 32 electrically coupled to the first uncoated portion 11, and a housing coupling portion 33 extending from the tab coupling portion 32 and electrically coupled to the beading portion 21 on an inner surface of the battery housing 20. A boundary region between the tab coupling portion 32 and the housing coupling portion 33 may be bent so that an end portion of the housing coupling portion 33 faces the beading portion 21. That is, referring to FIG. 2 or the like, the boundary region between the tab coupling portion 32 and the housing coupling portion 33 may be bent upward.

Optionally, the current collector 30 may further include a central portion 31, in a core region of the current collector 30. The central portion 31 may have a substantially circular shape. The central portion 31 may be selectively coupled to the first uncoated portion 11. In this case, the housing coupling portion 33 may be press-fixed by the crimping portion 22.

The current collector 30 may have at least one leg structure extending in the radial direction in a state where the tab coupling portion 32 and the housing coupling portion 33 are connected to each other. Preferably, a plurality of leg structures may be provided. For example, referring to FIGS. 4a through 6, the current collector 30 may include four leg structures. When a plurality of leg structures are provided, a plurality of housing coupling portions 33 may also be provided. In this case, although not shown, the plurality of housing coupling portions 33 may be connected to one another and may be integrally formed. The leg structures may be arranged in a radial shape, a cross shape, or a combined shape about the central portion 31.

The central portion 31 and at least one tab coupling portion 32 may be arranged over the electrode assembly 10, and when the beading portion 21 is formed on the battery housing 20, the central portion 31 and the at least one tab coupling portion 32 may be arranged under the beading portion 21. One or more holes for injecting an electrolytic solution may be formed in the tab coupling portion 32.

When a total radial extension of the tab coupling portion 32 is T, an outer diameter of the electrode assembly 10 is JR, and a height of an outermost segment 11a of the electrode assembly is F, the following relation may be satisfied.

$$JR - 2*F \leq T < JR.$$

Preferably, the total radial extension T of the tab coupling portion 32 may be equal to or greater than a length obtained by subtracting the height of the segment 11a arranged at the outermost side from the outer diameter of the electrode assembly 10 twice. When the relation is satisfied, the tab coupling portion 32 covers an end portion of the segment 11a arranged at the outermost side. That is, the current collector 30 may have an outer diameter covering an end portion of the segment 11a that is bent at a last winding turn of the first electrode. In this case, welding may be performed in a state where the segments 11a that form a tab surface 102 coupled to the tab coupling portion 32 are uniformly pressed by the current collector 30, and even after the welding, a close stacked state of the segments 11a may be maintained well. The close stacked state refers to a state where there is substantially no gap between the segments as shown in FIG. 1c. The close stacked state contributes to lower the resistance of the battery 1 to a level suitable for rapid charging (e.g., 4 m$\Omega$) or less.

In another aspect, the total radial extension T of the tab coupling portion 32 may be less than an outer diameter JR of the electrode assembly 10. If the total radial extension T of the tab coupling portion 32 is greater than the outer diameter JR of the electrode assembly 10, a dead space in the battery housing 20 may be increased, thereby adversely affecting the energy density of the battery 1. Accordingly, it is preferable that the total radial extension T is less than the outer diameter JR of the electrode assembly 10.

The central portion 31 includes a circular current collector hole H2 formed at a position corresponding to a winding central hole H1 formed at a central portion of the electrode assembly 10. The winding central hole H1 and the current collector hole H2 communicating with each other may function as paths for irradiating a laser welding beam or inserting a welding rod for welding between the terminal 50 and the current collector (second current collector) P or welding between the terminal 50 and a lead tab (not shown), or paths for irradiating a laser welding beam.

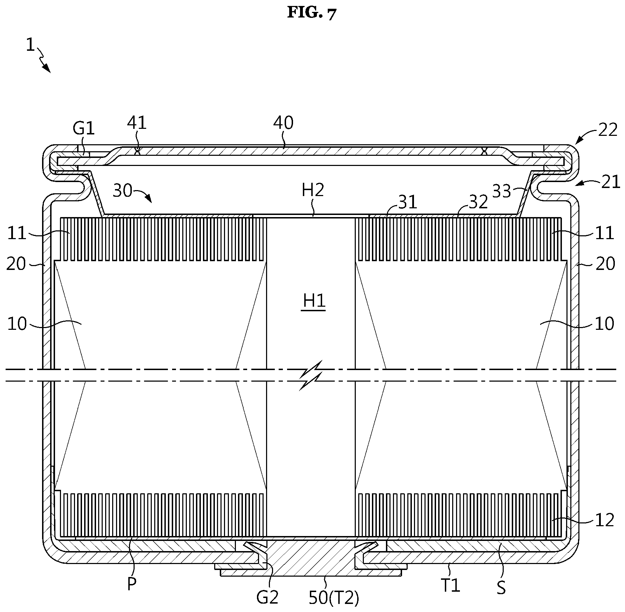

FIG. 7 is a view for describing a relationship between a current collector hole and a winding hole.

Referring to FIG. 7, a diameter of the current collector hole H2 may be equal to or greater than a diameter of the winding central hole H1 formed in a core of the electrode assembly 10. For example, the reason why the diameter of the current collector hole H2 is set to be greater than the diameter of the winding central hole H1 formed in the core of the electrode assembly 10 is that it is necessary to secure a space according to the insertion of a welding guide, when the laser welding beam is irradiated or the welding rod is inserted for welding between the terminal 50 and the current collector (second current collector) P or welding between the terminal 50 and the lead tab (not shown). When the diameter of the current collector hole H2 is excessively less than the diameter of the winding central hole Hi, the winding central hole H1 may be covered and may act as an interference factor during continuous resistance welding (CRW).

Unlike the embodiment, according to another embodiment of the present invention, the diameter of the current collector H2 may be less than the diameter of the winding central hole H1 formed in the core of the electrode assembly 10. For example, when the diameter of the winding central hole H1 is R3, the diameter of the current collector hole H2 may be equal to or greater than 0.5*R3 and less than R3, and preferably, may be equal to or greater than 0.7*R3 and less than R3.

In general, when gas is discharged from a winding central portion during venting, due to strong pressure, a separator or an uncoated portion at the center of winding may be separated from a top surface of the electrode assembly 10. In this case, when the diameter of the current collector hole H2 is less than the diameter of the winding central hole H1 formed in the core of the electrode assembly 10, the separator or the uncoated portion at the center of winding may be prevented from being separated from the top surface of the electrode assembly 10. However, when the diameter of the current collector hole H2 is excessively small, the injection of an electrolytic solution may be degraded, and a space for welding between the second current collector P and the terminal 50 is required, and thus, it is preferable that the diameter of the current collector hole H2 is equal to or greater than 0.5*R3 and it is more preferable that the diameter of the current collector hole H2 is equal to or greater than 0.7*R3.

In another aspect, the central portion 31 may have a substantially circular plate shape. For example, referring to FIG. 4a, the central portion 31 may have an annular plate shape at the center of which the current collector hole H2 is formed.

The at least one tab coupling portion 32 may extend substantially radially from the central portion 31 of the current collector 30 to a sidewall of the battery housing 20. For example, a plurality of tab coupling portions 32 may be provided. For example, referring to FIG. 4a, the plurality of tab coupling portions 32 may be spaced apart from one another along a circumference of the central portion 31. As such, because the battery 1 of the present invention includes the plurality of tab coupling portions 32, a coupling area with the first uncoated portion 11 may be increased. Accordingly, a coupling force between the first uncoated portion 11 and the tab coupling portion 32 may be secured and electrical resistance may be reduced.

The tab coupling portion 32 may be welded to the first uncoated portion 11. Examples of a welding method include, but are not limited to, laser welding, resistance welding, and ultrasonic welding. The tab coupling portion 32 may be welded to the first uncoated portion 11 while being parallel to the bottom surface of the battery housing 20. The first uncoated portion 11 and the tab coupling portion 32 may be welded in the radial direction of the electrode assembly 10.

FIG. 1b is a longitudinal sectional view illustrating a part of a battery, according to another embodiment of the present invention. FIG. 1c is an enlarged view illustrating an upper portion of the electrode assembly 10 of FIG. 1b. FIG. id is an enlarged view illustrating an upper portion of the first uncoated portion 11 of FIG. 1c.

Referring to FIG. 1b, in a state where the tab coupling portion 32 is mounted on an end portion of the first uncoated portion 11, welding may be performed on a certain region. Alternatively, at least a part of the first uncoated portion 11 may include a plurality of segments 11a in a winding direction of the electrode assembly 10. The plurality of segments 11a may be bent in a radial direction of the electrode assembly 10 to form the tab surface 102. The radial direction of the electrode assembly refers to a direction toward a core or an outer circumference. For example, as shown in FIG. 1b, at least part of the first uncoated portion 11 may include a plurality of segments 11a mutually separated in the winding direction of the electrode assembly 10. The plurality of segments 11a may be bent toward the core of the electrode assembly 10. Referring to FIGS. 1c and id, the plurality of segments 11a may overlap in multiple layers in the radial direction of the electrode assembly 10. The tab surface 102 may include a stack number increasing section in which the number of overlapping layers of the segments 11a is sequentially increased to a maximum value from the outer circumference of the electrode assembly 10 to the core and a stack number uniform section from a radial position at which the number of overlapping layers is the maximum value to a radial position at which an innermost segment exists.

In this case, in a state where the tab coupling portion 32 is mounted on the tab surface 102 of the first uncoated portion 11, welding may be performed on a certain region. That is, the tab coupling portion 32 may be coupled to a region where the plurality of segments 11a overlap in multiple layers. For example, the tab coupling portion 32 may be coupled to the tab surface to overlap the stack number uniform section. Referring to FIG. id, welding between the tab coupling portion 32 and the first uncoated portion 11 may be performed on a region of the tab surface 102 of the first uncoated portion 11 where the number of overlapping layers of the first uncoated portion 11 is 10 or more. A radial ratio of a section in which the number of overlapping layers is 10 or more may be designed to be 25% or more based on a radius of the electrode assembly excluding the core, by adjusting a length of the first uncoated portion 11.

When the current collector 30 is welded to the tab surface 102 of the first uncoated portion 11, it is preferable to increase an output of a laser in order to sufficiently secure welding strength. When the output of the laser is increased, the laser may pass through a region where the first uncoated portion 11 overlaps and may penetrate into the electrode assembly 10, thereby damaging the separator or the active material layer. Accordingly, in order to prevent penetration of the laser, it is preferable to increase the number of overlapping layers of the first uncoated portion 11 to a certain level or more. In order to increase the number of overlapping layers of the first uncoated portion 11, a height of the segment 11a should be increased. However, when the height of the segment 11a is increased, a swell may occur in the first uncoated portion 11 in a process of manufacturing the first electrode current collector. Accordingly, it is preferable that the height of the segment 11a is adjusted to an appropriate level.

As described above, when a radial extension ratio of the segment of the uncoated portion in which the number of overlapping layers is 10 or more is designed to be 25% or more based on a radius of the electrode assembly and the current collector 30 and a region where the segment of the uncoated portion overlaps in 10 or more layers are laser welded, even when an output of a laser is increased, the overlapping portion of the uncoated portion may sufficiently mask the laser, thereby preventing damage to the separator and the active material layer due to the laser.

Preferably, the output of the laser may be appropriately adjusted in a range of about 250 W to about 320 W or in a range of about 40% to about 90% of a maximum laser output specification, but the present invention is not limited thereto. When the output of the laser satisfies the numerical range, welding strength may be sufficiently increased. In an embodiment, welding strength may be increased to be 2 kgf/cm$^2$ or more, and more preferably, to 4 kgf/cm$^2$ or more. The welding strength may be preferably set to 8 kgf/cm$^2$ or less, and more preferably, set to 6 kgf/cm$^2$ or less. The welding strength is defined as a tensile force (kgf/cm$^2$) per unit area of the current collector 30 when the current collector begins to be separated from the tab surface region. In detail, a tensile force is applied to the current collector after welding of the current collector is completed, and a magnitude thereof is gradually increased. When the tensile force is increased, the uncoated portion begins to be separated from a welding interface. In this case, a value obtained by dividing the tensile force applied to the current collector by the area of the current collector is the welding strength.

FIG. id is a partial cross-sectional view illustrating a tab surface region where, in an electrode assembly having a radius of 22 mm and a core radius of 4 mm and included in a battery having a form factor of 4680, the first uncoated portion 11 of the first electrode current collector divided into a plurality of segments is bent from an outer circumference to a core to overlap in 10 or more layers. In FIG. id, an electrode assembly region and a core region with no segments are not shown. A height of the segments starts from 3 mm and is increased by 1 mm whenever a radius of the electrode assembly is increased by 1 mm. After reaching a length 6 mm, 7 mm, or 8 mm in FIG. id, the height of the segments remains substantially the same.

Referring to FIG. id it is found that the number of overlapping layers of the first uncoated portion 11 is gradually increased from the outer circumference to the core, and as the length of the first uncoated portion 11 is increased, a maximum value of the number of overlapping layers is increased.

For example, when the length of the first uncoated portion 11 is 8 mm, the number of overlapping layers of the first uncoated portion 11 divided into a plurality of segments is increased to 18 in an interval from the outer circumference to 7 mm, is maintained at the maximum value of 18 in an interval further 8 mm toward the core, and is reduced by 1 or 2 in a radius interval adjacent to the core. The height of the segment is increased stepwise from 3 mm to 8 mm in a radius interval from 7 mm to 12 mm. In the present invention, the stack number uniform section is defined as a radius interval from a radial position at which the number of overlapping layers reaches a maximum value to a point at which an innermost segment is arranged as shown in FIG. id. Accordingly, a ratio of the stack number uniform section in which the segments 11a of the first uncoated portion 11 overlap in 10 or more layers is 44.4% (8/18) with respect to the radius of the electrode assembly excluding the core (4 mm).

In another example, when the length of the first uncoated portion 11 is 7 mm, the number of overlapping layers of the first uncoated portion 11 divided into a plurality of segments is increased to 15 in an interval from the outer circumference of the electrode assembly to 6 mm, is maintained at the maximum value of 15 in an interval further 9 mm toward the core, and is reduced by 1 or 2 in a radius interval adjacent to the core. The height of the segment is increased stepwise from 3 mm to 7 mm in a radius interval from 7 mm to 11 mm. Accordingly, a ratio of the stack number uniform section in which the segments 11a of the first uncoated portion 11 overlap in 10 or more layers is 50% (9/18) with respect to the radius of the electrode assembly excluding the core (4 mm).

In another example, when the length of the first uncoated portion 11 is 6 mm, the number of overlapping layers of the first uncoated portion 11 divided into a plurality of segments is increased to 12 in an interval from the outer circumference of the electrode assembly to 5 mm, is maintained at the maximum value of 12 in an interval further 10 mm toward the core, and is reduced by 1 or 2 in a radius interval adjacent to the core. The height of the segment is increased from 3 mm to 6 mm in a radius interval from 7 mm to 10 mm. Accordingly, a ratio of the stack number uniform section in which the segments 11a of the first uncoated portion 11 overlap in 10 or more layers is 55.6% (10/18) with respect to the radius of the electrode assembly excluding the core (4 mm).

According to an embodiment, it is found that a length of a section in which the number of overlapping layers is sequentially increased is increased from 5 mm to 7 mm as a length of the first uncoated portion 11 is increased, and in particular, a condition that a ratio of the stack number uniform section in which the number of overlapping layers is 10 or more is 25% or more based on a radius of an electrode assembly excluding a core is satisfied.

In the present invention, the stack number uniform section may be increased or decreased by a radius of the core, a minimum value and a maximum value of a height of the segment in a segment height variable interval, and a height increment of the segment in a radial direction of the electrode assembly. Accordingly, it is obvious to one of ordinary skill in the art that the ratio is designed to be 25% or more by adjusting factors affecting the ratio of the stack number uniform section. In an example, when both the minimum value and the maximum value of the height of the segment are increased in the segment height variable interval, the number of stacked layers may be increased and the ratio of the stack number uniform section may be reduced to about 25%.

The stack number uniform section is a region where a current collector may be welded. Accordingly, when the ratio of the stack number uniform section is adjusted to be 25% or more, the welding strength of the current collector may be secured within a desirable range and it may be advantageous in terms of the resistance of a welding interface.

In another aspect of the present invention, when the first uncoated portion 11 has such a bent shape, a space occupied by the first uncoated portion 11 may be reduced, thereby improving energy density. Also, because a coupling area between the first uncoated portion 11 and the current collector 30 is increased, a coupling force may be improved and resistance may be reduced.

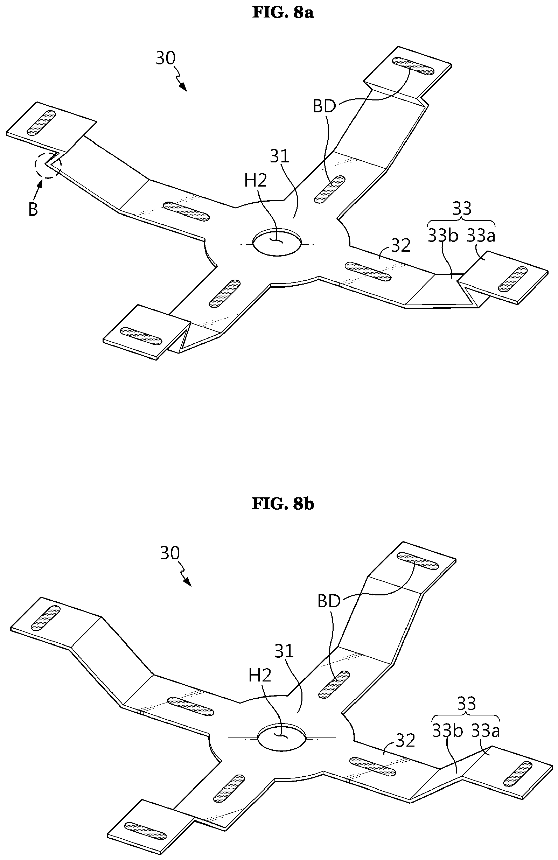

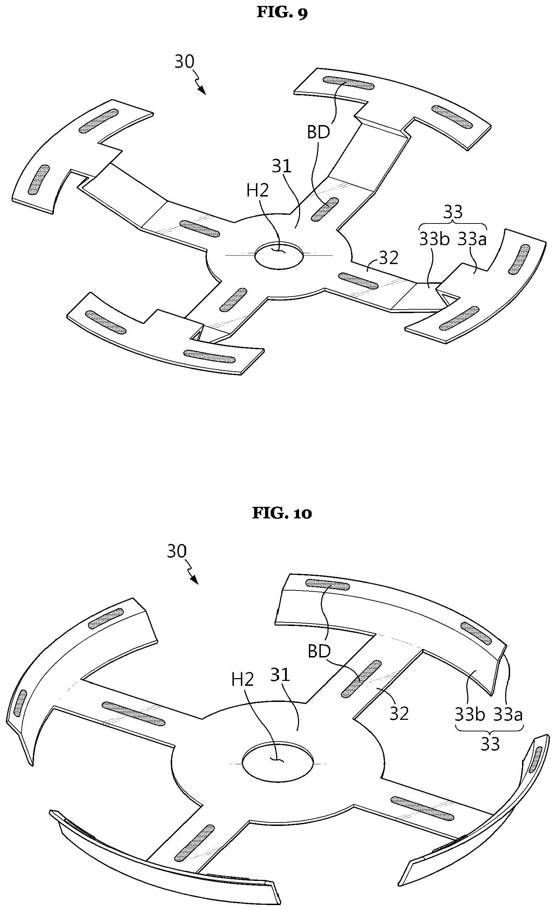

FIGS. 8a through 10 are views for describing a welding region between the current collector 30 and the first uncoated portion 11.

Referring to FIGS. 8a through 10, a welding bead BD may be formed in a welding region between the first uncoated portion 11 and the tab coupling portion 32. The welding bead BD refers to a substantially circular welding portion formed when spot welding is performed at a specific point. For example, in FIG. 11, the welding bead BD having a substantially circular shape formed as a result of spot welding is illustrated. When a plurality of welding beads BD are connected, a specific welding pattern may be formed. For example, referring to FIG. 8a, the plurality of welding beads BD may be gathered to form a substantially linear welding pattern. In an embodiment, the plurality of welding beads BD formed between the first uncoated portion 11 and the tab coupling portion 32 may form a welding pattern extending in a radial direction of the electrode assembly 10. Preferably, the welding beads BD formed between the first uncoated portion 11 and the tab coupling portion 32 may form a linear welding pattern extending in the radial direction of the electrode assembly 10. For example, a welding pattern formed between the first uncoated portion 11 and the tab coupling portion 32 may have a linear shape in which spot welding is connected. A width of the welding bead BD formed between the first uncoated portion 11 and the tab coupling portion 32 may be equal to or greater than about 0.1 mm. This is because, when laser technology is considered, a minimum width of the welding bead BD is equal to or greater than about 0.1 mm.

A longitudinal end portion of the tab coupling portion 32 may be arranged more inside than an innermost point of the beading portion 21 formed on the battery housing 20. In more detail, a boundary region between the tab coupling portion 32 and the housing coupling portion 33 may be arranged more inside in a direction toward the winding central hole H1 than the innermost point of the beading portion 21 formed on the battery housing 20. According to this structure, damage to a coupling portion between components which may occur when the current collector 30 is excessively bent in order to locate an end portion of the housing coupling portion 33 on the beading portion 21 may be prevented. In other words, when viewed along a longitudinal axis of the battery housing 20, the at least one tab coupling portion 32 may not overlap the beading portion 21.

In order to secure a coupling force and reduce electrical resistance by increasing a coupling area between the current collector 30 and the electrode assembly 10, not only the tab coupling portion 32 but also the central portion 31 may be coupled to the first uncoated portion 11. An end portion of the first uncoated portion 11 may be bent to be parallel to the tab coupling portion 32. As such, when the end portion of the first uncoated portion 11 is bent and coupled to the tab coupling portion 32 to be parallel to the tab coupling portion 32, a coupling area may be increased, a coupling force may be improved, and electrical resistance may be reduced. Also, a total height of the electrode assembly 10 may be minimized and energy density may be improved.

The at least one housing coupling portion 33 may extend from an end portion of the tab coupling portion 32 and may be coupled to the beading portion 21 on an inner surface of the battery housing 20. For example, the at least one housing coupling portion 33 may extend from the end portion of the tab coupling portion 32 to a sidewall of the battery housing 20. A plurality of housing coupling portions 33 may be provided. For example, referring to FIG. 4a, the plurality of housing coupling portions 33 may be spaced apart from one another along a circumference of the central portion 31. Referring to FIG. 1a, the plurality of housing coupling portions 33 may be coupled to the beading portion 21 on the inner surface of the battery housing 20. As shown in FIGS. 2 and 3, when a top surface of the beading portion 21 extends in a direction substantially parallel to a bottom surface of the battery housing 20, that is, a direction substantially perpendicular to the sidewall of the battery housing 20, and the housing coupling portion 33 also extends in the same direction, the housing coupling portion 33 may stably contact the beading portion 21. Also, as such, when the housing coupling portion 33 stably contacts the beading portion 21, welding between two components may be smoothly performed, and thus, a coupling force between the two components may be improved and an increase in resistance at a coupling portion may be minimized. Also, due to such a structure in which the current collector 30 is coupled to the beading portion 21 of the battery housing 20, not an inner surface of a cylindrical portion of the battery housing 20, a distance between the current collector 30 and the beading portion 21 may be reduced. Accordingly, a dead space inside the battery housing 20 may be minimized and the energy density of the battery 1 may be improved.

Referring to FIGS. 3 and 4a, the housing coupling portion 33 includes a contact portion 33a that is coupled to the beading portion 21 on an inner surface of the battery housing 20 and a connecting portion 33b that connects the tab coupling portion 32 to the contact portion 33a.

The contact portion 33a is coupled to the inner surface of the battery housing 20. When the beading portion 21 is formed on the battery housing 20, the contact portion 33a may be coupled to the beading portion 21 as described above. In this case, as described above, for stable contact and coupling, the beading portion 21 and the contact portion 33a may extend in a direction substantially parallel to a bottom surface of the battery housing 20, that is, a direction substantially perpendicular to a sidewall of the battery housing 20. The contact portion 33a may have a flat surface coupled to a top surface of the beading portion 21 facing the opening portion. That is, the contact portion 33a includes at least a flat portion substantially parallel to the bottom surface of the battery housing 20.

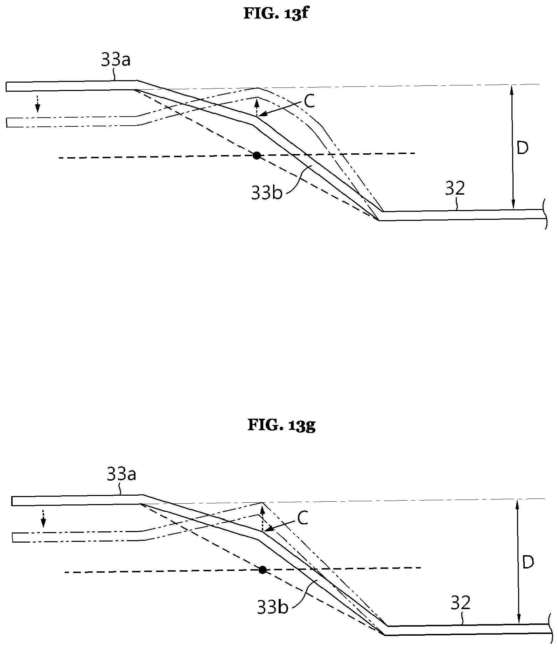

In an embodiment of the present invention, referring to FIG. 13f, the connecting portion 33b may have an upwardly convex structure. For example, the connecting portion 33b may have an upwardly convex curved shape. Alternatively, as shown in FIG. 13f, the connecting portion 33b may include at least one bent part C. Preferably, when viewed along a longitudinal axis of the battery housing, the at least one bent part C may be bent at an obtuse angle so as not to overlap. More preferably, a boundary point between the contact portion 33a and the connecting portion 33b may be bent at an obtuse angle. That is, as shown in FIG. 13f, an inclination of the connecting portion 33b may be reduced stepwise or gradually toward the beading portion.

In another embodiment of the present invention, referring to FIG. 4a, the connecting portion 33b may include at least one bending portion B whose extension direction is changed at least once between the central portion 31 and the contact portion 33a. That is, the connecting portion 33b may have a structure that may be contracted and extended within a certain range, for example, a spring-like structure or a bellows-like structure. The connecting portion 33b may be elastically biased upward by the bending portion B. According to this structure of the connecting portion 33b, even when there is a height distribution of the electrode assembly 10 within a certain range, the contact portion 33a may be in close contact with the beading portion 21 in a process of accommodating the electrode assembly 10 to which the current collector 30 is coupled in the battery housing 20. Also, according to this structure of the connecting portion 33b, a shape may be more stably achieved during a sizing process.

In another embodiment of the present invention, as shown in FIGS. 2 and 3, a boundary region between the contact portion 33a and the connecting portion 33b may be bent. Alternatively, as shown in FIG. 1a, a boundary region between the contact portion 33a and the connecting portion 33b may have a complementary shape corresponding to an inner surface of the beading portion 21. In particular, the boundary region between the contact portion 33a and the connecting portion 33b may be coupled to the beading portion 21 with no gap while having a shape matching the inner surface of the beading portion 21. According to this structure, the beading portion 21 may effectively support the current collector 30. Also, according to this structure, unnecessary interference between the beading portion 21 and the connecting portion 33b may be prevented. Accordingly, stable coupling between the contact portion 33a and the beading portion 21 may be effectively maintained.

According to another aspect of the present invention, a protruding outermost point of the bending portion B may be spaced by a certain interval from an innermost point of the beading portion 21. For example, referring to FIG. 3, the bending portion B may not contact the beading portion 21. According to this structure, unnecessary interference between the beading portion 21 and the connecting portion 33b may be prevented. Accordingly, stable coupling between the contact portion 33a and the beading portion 21 may be effectively maintained.

According to another aspect of the present invention, due to the bending portion B, an angle between the contact portion 33a and the connecting portion 33b may be an acute angle. For example, referring to FIGS. 2, 4b, and 8b, the connecting portion 33b does not include a bending portion. Accordingly, an angle between the contact portion 33a and the connecting portion 33b may be an obtuse angle. In contrast, referring to FIGS. 3 and 4a, the connecting portion 33b includes a bending portion. Accordingly, an angle between the contact portion 33a and the connecting portion 33b may be an acute angle. According to this structure, because an angle between the contact portion 33a and the connecting portion 33b is an acute angle, interference between the beading portion 21 and the connecting portion 33b may be prevented. Accordingly, stable coupling between the contact portion 33a and the beading portion 21 may be maintained. Although one bending portion B is provided in the drawings of the present invention, the present invention is not limited thereto and a plurality of bending portions B may be provided.

It is preferable that a vertical distance between the contact portion 33a and the central portion 31 in a state where an external force is not applied to the current collector 30 and thus there is no deformation is equal to a vertical distance between a top surface of the beading portion 21 and the central portion 31 when the electrode assembly 10 to which the current collector 30 is coupled is mounted in the battery housing 20 or is smaller within a range in which the connecting portion 33b is stretchable. In a case where the connecting portion 33b is configured to satisfy the above condition, when the electrode assembly 10 to which the current collector 30 is coupled is mounted in the battery housing 20, the contact portion 33a may naturally be in close contact with the beading portion 21.

In addition, according to such a contractible and stretchable structure of the connecting portion 33b, even when vibration and/or impact occurs during the use of the battery 1 and thus the electrode assembly 10 vertically moves, impact according to the movement of the electrode assembly 10 may be reduced, within a certain range.

In another aspect of the present invention, the connecting portion 33b may have an upwardly convex curved shape. For example, the connecting portion 33b may protrude toward a winding center of the electrode assembly 10. A shape of the connecting portion 33b is determined to prevent damage to a coupling portion between the current collector (first current collector) 30 and the electrode assembly 10 and/or a coupling portion between the current collector (first current collector) 30 and the battery housing 20 during a sizing process.

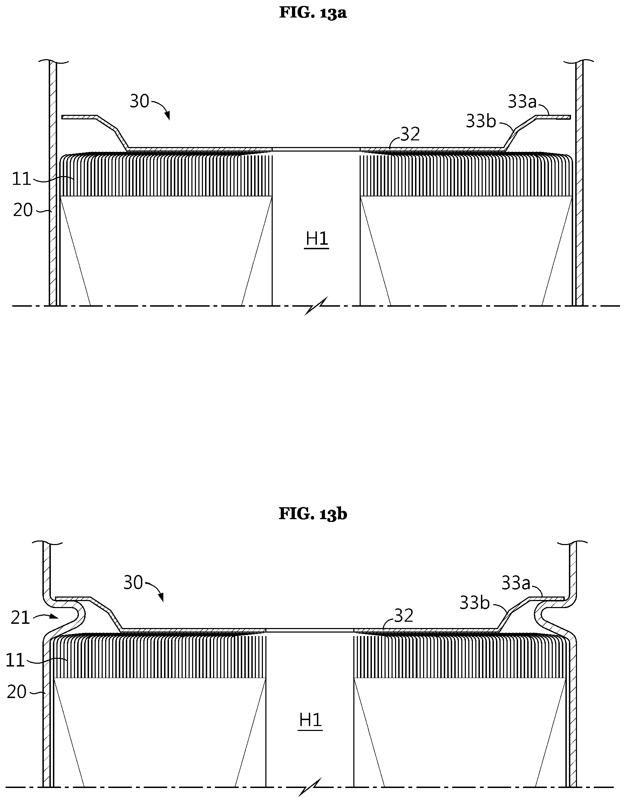

FIGS. 13a through 13d are views for describing a process of manufacturing the battery 1 of the present invention.

FIG. 13a is a view for describing a welding process of the current collector 30. After the current collector 30 is placed on the electrode assembly 10 that is accommodated in the battery housing 20, a process of welding the current collector 30 and the first uncoated portion 11 of the electrode assembly 10 which protrudes upward is illustrated. In this case, the tab coupling portion 32 of the current collector 30 is welded to a tab surface formed by the plurality of segments 11a of the first uncoated portion 11.

Next, FIG. 13b is a view for describing a beading process of the battery housing 20. In a state where the current collector 30 is welded to the electrode assembly 10, a beading knife may move toward the inside of the battery housing 20. Accordingly, the beading portion 21 formed by press-fitting a part of the battery housing 20 into the battery housing 20 is provided on a side surface of the battery housing 20. Because the beading portion 21 is arranged under than the contact portion 33a of the current collector 30, an inner surface of the beading portion 21 and the contact portion 33a may be welded to each other.

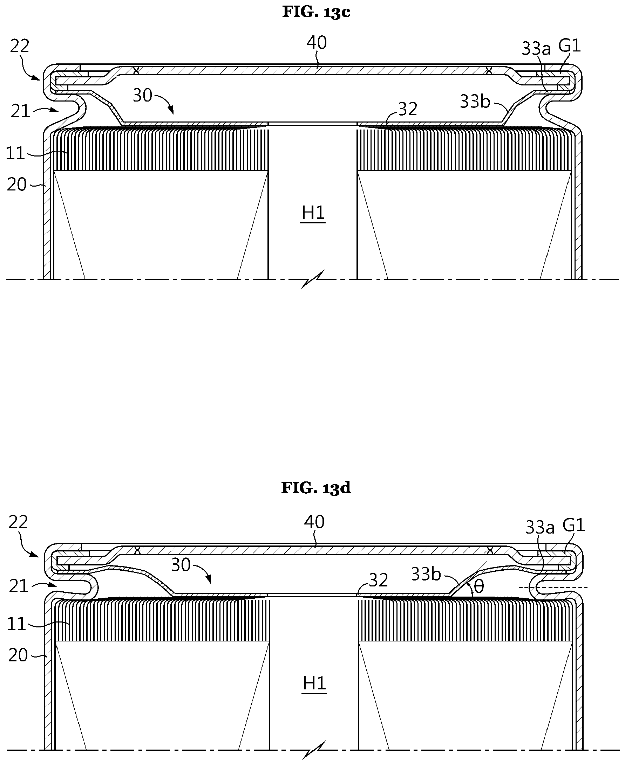

Next, FIG. 13c is a view for describing a crimping process of the battery housing 20. The contact portion 33a of the current collector 30 may be placed on a top surface of the beading portion 21. The cap 40 whose end portion is surrounded by the sealing element G1 may be placed on a top surface of the contact portion 33a. Next, the battery housing 20 is bent to surround a circumferential edge of the cap 40, and fixes the cap 40 and the current collector 30. Due to this bent shape of the crimping portion 22, the cap 40 and the current collector 30 are fixed to the beading portion 21.

Next, FIG. 13d is a view for describing a sizing process of the battery housing 20. A sizing process is a compression process for reducing a height of the beading portion 21 of the battery housing 20 in order to reduce a total height of the battery 1, when the battery 1 is manufactured. According to the sizing process, because the battery housing 20 is compressed in a longitudinal direction, a part of the electrode assembly 10 may be compressed by the beading portion 21. In another aspect, according to the sizing process, because the battery housing 20 is compressed in the longitudinal direction (vertical direction), the current collector 30 may be vertically bent under pressure. That is, the tab coupling portion 32 may be bent upward, and thus, welding between the tab coupling portion 32 and the first uncoated portion 11 may be likely to be damaged. Accordingly, there is a demand for a shape of the current collector 30 in which a welding region between the tab coupling portion 32 and the first uncoated portion 11 is not damaged even after the sizing process.

For example, when the connecting portion 33b has an upwardly convex shape as shown in FIG. 13f, upward lifting of the tab coupling portion 32 may be suppressed as much as possible as shown in FIG. 13d. That is, when the battery housing 20 of FIG. 13c is vertically compressed, the current collector 30 of the present invention vertically receives stress. However, because the connecting portion 33b of the current collector 30 of the present invention has an upwardly convex shape, stress applied to the tab coupling portion 32 may be minimized. Accordingly, the tab coupling portion 32 may not be bent upward, and good welding with the first uncoated portion 11 may be maintained.

In more detail, referring to FIGS. 13f and 13g, the connecting portion 33b before a sizing process may have an upwardly convex shape based on an imaginary straight line that connects an end portion of the contact portion 33a to an end portion of the tab coupling portion 32. For example, at least one bent part C having an obtuse angle may be provided on the connecting portion 33b. The bent part C may be arranged over an imaginary plane that passes through the center of the imaginary straight line that connects the end portion of the contact portion 33a to the end portion of the tab coupling portion 32, and is parallel to a bottom surface of the battery housing 20. Preferably, a length of the connecting portion 33b between the tab coupling portion 32 and the bent part C may be greater than a length of the connecting portion 33b between the contact portion 33a and the bent part C.

According to this structure, during the sizing process of receiving pressure in a vertical direction, the contact portion 33a moves downward in an arrow direction and the connecting portion 33b is uplifted upward in an arrow direction (see dashed line). In more detail, the connecting portion 33b is uplifted upward to be over the beading portion 21. That is, a profile of the housing coupling portion 33 is changed before and after the sizing process as shown in FIG. 13f. A degree to which the connecting portion 33b is uplifted upward varies according to a change in a height of the battery housing 20 during the sizing process. Unlike in the drawing, a position of the bent part C may move upward only up to a height of the contact portion 33a. As such, because the connecting portion 33b may absorb most of stress due to the upward movement of the connecting portion 33b, stress applied to a welding region between the tab coupling portion 32 and the first uncoated portion 11 is relatively small. Accordingly, according to the present invention, a phenomenon where the tab coupling portion 32 is lifted upward may be prevented. Also, according to the above structure, because a length of the connecting portion 33b between the tab coupling portion 32 and the bent part C is greater than a length of the connecting portion 33b between the contact portion 33a and the bent part C, the insertion of the current collector 30 into the battery housing 20 may be facilitated and stress distribution may be effectively achieved.

In another embodiment of the present invention, referring to FIG. 13g, a profile of the battery collector plate 30 after a sizing process may be deformed to be different from that in FIG. 13f. For example, in FIG. 13f, the connecting portion 33b may be deformed into an upwardly convex curved shape after the sizing process, whereas in FIG. 13g, the connecting portion 33b may be deformed into a straight line shape that is bent at the bent part C. In more detail, in FIG. 13g, after the sizing process, the connecting portion 33b may be deformed to be upwardly convex while each of a part of the connecting portion 33b between the tab coupling portion 32 and the bent part C and a part of the connecting portion 33b between the contact portion 33a and the bent part C maintains a straight line shape.

As a result of examining a shape of the current collector 30 capable of preventing distortion and/or lifting of the current collector 30, the present inventors have found that, when the connecting portion 33b has an upwardly convex structure, damage to welding between the tab coupling portion 32 and the first uncoated portion 11 is significantly reduced.

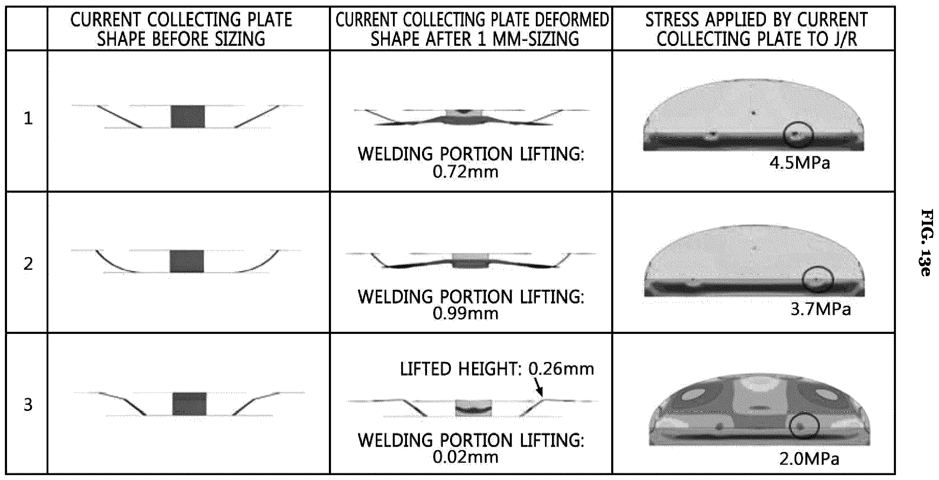

FIG. 13e is a view illustrating a degree of damage to a welding region of the current collector 30 after a sizing process according to a shape of the current collector 30 before a sizing process.

Referring to FIG. 13e, Experimental Example 1 is an experimental example in which the connecting portion 33b before sizing had a straight line shape. Experimental Example 2 is an experimental example in which the connecting portion 33b before sizing was convex downward. Experimental Example 3 is an experimental example in which the connecting portion 33b before sizing was convex upward. As a result of performing a 1 mm-sizing process for Experimental Examples 1 through 3, in Experimental Example 1 in which the connecting portion 33b had a straight line shape, a welding region with the tab coupling portion 32 was lifted by about 0.72 mm. In Experimental Example 2 in which the connecting portion 33b was convex downward, a welding region with the tab coupling portion was lifted by about 0.99 mm. That is, it was found that when the connecting portion 33b was convex downward, a lifting phenomenon was increased compared to when the connecting portion 33b had a straight line shape. In Experimental Example 3 in which the connecting portion 33b was convex upward, a welding region with the tab coupling portion 32 was lifted by about 0.02 mm. It means that a lifting phenomenon was significantly reduced compared to Experimental Examples 1 and 2. That is, in Experimental Example 3 in which the connecting portion 33b was convex upward, it was found that damage to a welding region between the tab coupling portion and the first uncoated portion was minimized. This is because a degree of lifting of the current collector 30 is affected by stress applied by the current collector 30 to the electrode assembly 10. That is, in Experimental Example 1 in which the connecting portion 33b had a straight line shape and Experimental Example 2 in which the connecting portion 33b was convex downward, because stress applied to a welding portion between the current collector 30 and the electrode assembly 10 in a sizing process was about 4.5 MPa and about 3.7 MPa which were very large, it was found that a lifting phenomenon of the current collector 30 was severe. In contrast, in Experimental Example 3 in which the connecting portion 33b was convex upward, because stress applied to a welding portion between the current collector 30 and the electrode assembly 10 in a sizing process was about 2.0 MPa which was lower than those in Experimental Examples 1 and 2, it was found that a lifting phenomenon of the current collector 30 was relatively small.

Accordingly, preferably, as shown in FIG. 13f, a gradient of the connecting portion 33b may not be constant and a gradient of an upper portion may be less than a gradient of a lower portion based on a certain point (e.g., the bent part C). The certain point may be arranged above a middle point of the connecting portion 33b. Alternatively, the connecting portion 33b may have an upwardly convex shape based on an imaginary straight line that connects the tab coupling portion 32 to the contact portion 33a. The convex shape may be a shape in which a straight line and a straight line are connected, a curved shape, or a combined shape thereof. In an example, as shown in FIG. 13f, the connecting portion 33b may include at least one bent part C based on the certain point. Preferably, the at least one bent part C may be bent at an obtuse angle so as not to overlap, when viewed along a longitudinal axis of the battery housing 20. In another modified example, an inclination of the connecting portion 33b may be reduced stepwise or gradually toward the beading portion 21.

In another aspect of the present invention, referring to FIG. 13d, an angle θ between the tab coupling portion 32 and the connecting portion 33b may range from, for example, 0° to 90°. For example, when a height of an upper end of the electrode assembly 10 is increased to correspond to a height of the beading portion 21 in a sizing process, the tab coupling portion 32 and the contact portion 33a may be arranged at the same height. That is, in this case, the angle θ between the tab coupling portion 32 and the connecting portion 33b is 0°. Even when the sizing process is performed, it is not preferable that the contact portion 33a is arranged under the tab coupling portion 32. This is because, in this case, the first uncoated portion 11 may be excessively pressed by the beading portion 21 to be damaged. Accordingly, it is preferable that the angle θ between the tab coupling portion 32 and the connecting portion 33b is equal to or greater than 0°. In another aspect, the angle θ between the tab coupling portion 32 and the connecting portion 33b may be increased up to 90° according to a shape in which a length, a thickness, or a gradient of the connecting portion 33b is changed stepwise or gradually. However, in order to avoid contact with the cap 40, it is not preferable that the angle θ exceeds 90°.

In another aspect of the present invention, the connecting portion 33b may support the cap 40. For example, the connecting portion 33b may be bent upward due to a sizing process. In this case, the connecting portion 33b that is bent upward may contact the cap 40. In this case, the connecting portion 33b may support the cap 40 upward. Accordingly, the current collector 30 may be firmly fixed in a vertical direction due to the sizing process. Accordingly, even when vibration and/or impact occurs during the use of the battery 1, because the current collector 30 fixes the electrode assembly 10 in the vertical direction, unnecessary vertical movement of the electrode assembly 10 inside the battery housing 20 may be prevented.

In another aspect of the present invention, a beading portion top surface and a beading portion bottom surface may be asymmetric with respect to an imaginary reference plane that passes through an innermost point of the beading portion 21 to be parallel to a bottom surface of the battery housing. For example, referring to FIG. 13d, because the battery housing 20 is compressed in the vertical direction due to the sizing process, the beading portion 21 is also compressed in the vertical direction. Accordingly, the beading portion top surface and the beading portion bottom surface may be asymmetric with respect to the imaginary reference plane that passes through the innermost point of the beading portion 21.

In another aspect of the present invention, a press-fitting depth of the beading portion 21 may be defined as PD. For example, referring to FIG. 11, a distance from an inner surface of the battery housing 20 to an innermost point of the beading portion 21 may be defined as the press-fitting depth PD. Meanwhile, a shortest distance from an end portion of the contact portion 33a to a vertical line that passes through the innermost point of the beading portion 21 may be defined as an overlap length OV. That is, referring to FIG. 11, when the beading portion 21 is projected in a vertical direction, the overlap length OV refers to a radial extension of a region where the projection and the current collector 30 overlap each other. In this case, the battery 1 of the present invention may satisfy the following relation.

$$(R_{1,min} + W_{bead,min})/PD_{max} \leq OV/PD \leq (PD_{max} - R_{2,min})/PD_{max}$$

In order for the contact portion 33a of the current collector 30 to be weldably placed on the beading portion 21, it is preferable that the ratio is equal to or greater than $(R_{1,min}+W_{bead,min})/PD_{max}$. Referring to FIG. 11, in order for the contact portion 33a of the current collector 30 to be weldably placed on the beading portion 21, a region that is overlapped more than the radius of curvature R1 of the beading portion 21 is required. For example, when the contact portion 33a overlaps only by the radius of curvature R1 of the beading portion 21, the flat section F does not exist, and thus, the contact portion 33a may contact the beading portion 21 at only one contact point. That is, the contact portion 33a may not be stably placed on the beading portion 21. Accordingly, the contact portion 33a requires a region that is additionally overlapped in addition to the radius of curvature R1 of the beading portion 21. In this case, it is preferable that a length of the region that is additionally overlapped is equal to or greater than the welding bead width $W_{bead}$. That is, the contact portion 33a and the beading portion 21 may substantially overlap in the region that is additionally overlapped, and welding may be performed in this region. Accordingly, when the length of the region that is additionally overlapped is equal to or greater than the welding bead width $W_{bead}$, stable welding may be performed without departing from the overlapped region. That is, a minimum overlap length required for the contact portion 33a to be weldably placed on the beading portion 21 is $R_{1,min}+W_{bead,min}$.

In another aspect, in order for the contact portion 33a of the current collector 30 to be weldably placed on the beading portion 21, it is preferable that the ratio is equal to or less than $(PD_{max}-R_{2,min})/PD_{max}$. Referring to FIG. 11, there is the radius of curvature R2 at a boundary region between the beading portion 21 and an inner surface of the battery housing 20. Accordingly, when the contact portion 33a of the current collector 30 moves to the boundary region between the inner surface of the battery housing 20 and the beading portion 21 at which the radius of curvature R2 is formed, the contact portion 33a is lifted without being closely attached to the beading portion 21 due to the radius of curvature R2. Accordingly, a maximum overlap length required for the contact portion 33a to be closely placed on the beading portion 21 is $PD_{max}-R_{2,min}$.

In an example, a maximum value $PD_{max}$ of the press-fitting depth PD of the beading portion 21 may be about 10 mm, minimum values $R_{1,min}$ and $R_{2,min}$ may each be about 0.05 mm, and $W_{bead,min}$ may be about 0.1 mm. In this case, a ratio of the overlap length OV to the press-fitting depth PD of the beading portion 21 may range from about 1.5% to about 99.5%. In order for the contact portion 33a of the current collector 30 to be weldably placed on the beading portion 21, it is preferable that the ratio is equal to or greater than about 1.5%. A lower limit of the OV/PD ratio may be determined from the maximum value $PD_{max}$ of the press-fitting depth of the beading portion, the minimum value $R_{1,min}$ of the radius of curvature R1, and a minimum width of the contact portion 33a that should contact a top surface of the beading portion 21 for welding of the contact portion 33a, that is, a length of the minimum width $W_{bead,min}$ of the welding bead BD. In detail, in an example, the maximum value $PD_{max}$ of the press-fitting depth may be 10 mm, the minimum contact width of the contact portion 33a required for welding of the contact portion 33a, that is, a length of the minimum width $W_{bead,min}$ of the welding bead BD may be 0.1 mm, and the minimum value $R_{1,min}$ of the radius of curvature R1 may be 0.05 mm. In this condition, because a minimum value of the overlap length OV is 0.15 mm (= 0.1 mm + 0.05 mm) and $PD_{max}$ is 10 mm, a lower limit of the OV/PD ratio is 1.5%. Meanwhile, a point at which the contact portion 33a of the current collector 30 may contact with a maximum width on a flat portion of the beading portion top surface is a point spaced by the radius of curvature R2 from an inner surface of the battery housing. Accordingly, when an end portion of the contact portion 33a is arranged at the point, the overlap length OV is maximized. An upper limit of the OV/PD ratio may be determined from the maximum value of the press-fitting depth and the minimum value $R_{2,min}$ of the radius of curvature R2. In detail, the maximum value of the press-fitting depth may be 10 mm, and the minimum value of the radius of curvature R2 may be 0.05 mm. In this condition, because the maximum value of the overlap length OV is 9.95 mm (= 10 mm - 0.05 mm) and $PD_{max}$ is 10 mm, an upper limit of the OV/PD ratio is 99.5%.

In another aspect of the present invention, a welding position where the beading portion 21 and the contact portion 33a are welded may be defined as W. In more detail, the welding position W may refer to a distance from an innermost point of the beading portion 21 to a central point of an outermost welding bead BD in a radial direction. In this case, the welding position W and the press-fitting depth PD may satisfy the following relation.

$$(OV_{min}-0.5*W_{bead,min})/PD_{max} \leq W/PD \leq (OV_{max}-0.5*W_{bead,min})/PD_{max}$$

The welding positon W of the beading portion 21 and the contact portion 33a may be determined from an overlap length of the contact portion 33a and the beading portion 21 and the minimum width $W_{bead,min}$ of the welding bead BD. The welding position W is a central point of the welding bead BD.

Referring to FIG. 11, a welding position when the contact portion 33a is minimally placed on the beading portion 21 may be defined as W1. An overlap length in this case is $OV_{min}$ as described above. Because welding may be stably performed when the welding bead BD is formed within an overlapped region, the welding bead BD should be completely included in the overlapped region. Accordingly, the welding position W1 should be a point spaced apart by at least $0.5*W_{bead,min}$ from $OV_{min}$ toward the inside of the beading portion 21. Accordingly. W1 may satisfy the following relation.

$$W1 = OV_{min}\text{-}0.5*W_{bead,min}$$

$$= R_{1,min}+W_{bead,min}\text{-}0.5*W_{bead,min}$$

$$= R_{1,min}+0.5*W_{bead,min}$$

Because a PD value should be maximized in order to minimize Wi/PD, a minimum value of W/PD is $(OV_{min}\text{-}0.5*W_{bead,mm})/PD_{max}$.

In another aspect, referring to FIG. 11, a welding position when the contact portion 33a is maximally placed on the beading portion 21 may be defined as W2. An overlap length in this case is $OV_{max}$ as described above. Because welding may be stably performed when the welding bead is formed within an overlapped region, the welding bead BD should be completely included in the overlapped region. Accordingly, the welding position W2 should be a point spaced apart by at least $0.5*W_{bead,min}$ from $OV_{max}$ toward the inside of the beading portion 21. Accordingly, W2 may satisfy the following relation.

$$W2 = OV_{max}\text{-}0.5*W_{bead,min}$$

$$= PD_{max}\text{-}R_{2,min}\text{ -}0.5*W_{bead,min}$$

In order maximize W2/PD, $\{1\text{-}(R_{2,min}+0.5*W_{bead,min})/PD\}$ that is a value obtained by dividing $(PD_{max}\text{-}R_{2,min}\text{-}0.5*W_{bead,min})$ by PD should be maximized. That is, when a PD value is maximized, a W2/PD value is also maximized. Accordingly, a maximum value of W/PD is $(OV_{min}\text{-}0.5*W_{bead,min})/PD_{max}$.

In an example, a minimum width required to weld the contact portion 33a to the beading portion 21 may be 0.1 mm. That is, 0.1 mm corresponds to a minimum width of the welding bead BD that may be formed by using laser welding. Accordingly, the welding position W1 when the contact portion 33a minimally contacts a top surface of the beading portion 21 corresponds to a point spaced apart by $(R_{1,min}+0.5*0.1$ mm$)$ from an innermost point of the beading portion 21. $R_{1,min}$ that is a minimum value of the radius of curvature R1 is, for example, 0.05 mm. When a laser is irradiated to the point, the welding bead BD having a width of 0.1 mm is formed on a contact surface between the contact portion 33a and the beading portion 21. A width of the welding bead BD corresponds to a minimum contact width of the contact portion 33a. The welding position W1 based on the press-fitting depth PD of the beading portion 21 is a point spaced apart by 0.1 mm from the innermost point of the beading portion 21.

When the contact portion 33a maximally contacts the top surface of the beading portion 21, an end portion of the contact portion 33a is arranged at a point spaced apart by a radius of curvature from an inner surface of the battery housing. $R_{2,min}$ that is a minimum value of the radius of curvature R2 is, for example, 0.05 mm. In this case, the welding position W2 which may be closest to an end of the contact portion 33a is a point spaced apart by 0.05 mm from the end of the contact portion 33a. When a laser is irradiated to the point, the welding bead having a minimum width of 0.1 mm may be formed to contact the end of the contact portion 33a. The welding position W2 when the contact portion 33a maximally contacts the top surface of the beading portion 21 is a point spaced apart by $(PD\text{-}R_{2,min}\text{-}0.05$ mm$)$ from the innermost point of the beading portion 21. In an example, when $R_{2,min}$ is 0.05 mm, a maximum value of the welding position W2 is a point spaced apart by PD-0.1 mm from the innermost point of the beading portion 21.

As described above, when $R_{1,min}$ and $R_{2,min}$ are each 0.05 mm, the welding position W of the contact portion 33a based on the press-fitting depth PD may be set within a range of (0.1 mm) to (PD-0.1 mm) based on the innermost point of the beading portion 21. Because a ratio of the welding position W1 based on the press-fitting depth PD is a value when the press-fitting depth PD is maximized, a minimum value (%) of Wi/PD is 1% (=100*0.1 mm/10 mm). Also, because a maximum value of Wi/PD of the welding position W2 based on the press-fitting depth PD is a value when the press-fitting depth PD is maximized, a maximum value (%) of W2/PD is 99% (=100*(10 mm-0.1 mm)/10 mm). For short, a welding position region based on the press-fitting depth PD may be a region that is equal to or greater than 1% and equal to or less than 99% based on the press-fitting depth PD.

Referring to FIG. 11, a distance from an innermost point of the beading portion 21 when the overlap length is OV to a central point of the outermost welding bead BD in a radial direction may be defined as W. In this case, the battery 1 may satisfy the following relation.

$$W = OV - 0.5 * W_{bead,min}$$

In another aspect, the beading portion 21 may include the flat section F parallel to a bottom surface of the battery housing 20 in at least a region, and a length of the flat section F of the beading portion 21 contacting the current collector 30 may be OV - R1. That is, referring to FIG. 11, the flat section F corresponds to a length obtained by subtracting the radius of curvature R1 of the beading portion 21 from the overlap length OV.

In another aspect of the present invention, when the overlap length is OV, a radial extension of a welding pattern which is a set of the welding beads BD formed between the beading portion 21 and the contact portion 33a may be equal to or greater than $W_{bead,min}$ and equal to or less than OV - R1.

Referring to FIG. 11, because a minimum width of the welding bead BD is $W_{bead,min}$, a minimum value of a radial extension of the welding pattern which is formed between the beading portion 21 and the contact portion 33a should be at least $W_{bead,min}$. A plurality of welding beads BD may be formed over the entire flat section F of the beading portion 21. In this case, the plurality of welding beads BD may form a certain welding pattern. Referring to FIG. 11, a maximum value of the radial extension of the welding pattern which is formed between the beading portion 21 and the contact portion 33a may satisfy the following relation.

Maximum value of the radial extension of the welding which is formed between the beading portion 21 and the contact portion 33a

$$= W - W1 + \text{minimum width of the welding bead BD}$$

$$= [(OV - 0.5*W_{bead,min}) - (R1 + 0.5*W_{bead,min})] + W_{bead,min}$$

$$= OV - R1$$

In another aspect of the present invention, a ratio of the radial extension of the welding pattern to a length of the flat section F may range from about 10% to about 40%. Preferably, the ratio may range from about 20% to about 30%. When the ratio satisfies the range, welding strength may be increased as a welding area is increased. Accordingly, the battery 1 according to the present invention may secure high impact resistance.

In another aspect of the present invention, a ratio of the area where the current collector 30 does not contact a top surface of the electrode assembly 10 to the area of a circle having an outer diameter of the electrode assembly 10 as a diameter may be defined as an aperture ratio of the current collector 30. The aperture ratio may be calculated as follows.

$$\text{Aperture ratio (\%)}$$

$$= 1 - (\text{area where the current collector contacts the top surface of the electrode}$$
$$\text{assembly})/(\text{area of the circle having the outer diameter of the electrode assembly as the}$$
$$\text{diameter})$$

$$= (\text{area where the current collector does not contact the top surface of the electrode}$$
$$\text{assembly})/(\text{area of the circle having the outer diameter of the electrode assembly as the}$$
$$\text{diameter})$$

The aperture ratio of the current collector 30 may be, for example, equal to or greater than about 30% and less than 10%, and preferably, may be equal to or greater than about 60% and less than 100%. Assuming that the current collector 30 of FIG. 8a is placed on and coupled to the electrode assembly 10, a region where the current collector 30 contacts the electrode assembly 10 may be the central portion 31 and the tab coupling portion 32. That is, a ratio of the area where the current collector 30 contacts the electrode assembly 10 to the area of a circle having an outer diameter of the electrode assembly 10 as a diameter may be equal to or less than about 70%, and preferably, may be equal to or less than about 40%. When an aperture ratio of the current collector 30 is within the range, an electrolytic solution may be smoothly penetrated into the electrode assembly 10 through an opening region of the current collector 30 having the current collector hole H2 during injection of the electrolytic solution. That is, when the aperture ratio of the current collector 30 is within the range, the electrolytic solution may be penetrated into the electrode assembly 10 through the opening region of the current collector 30 and the winding central hole H1 formed in the electrode assembly 10, and in particular, because there is a fine gap between overlapped surfaces of the segments 11a and between adjacent segments 11a, the electrolytic solution may be smoothly penetrated into the electrode assembly 10 due to capillary action through the gap.

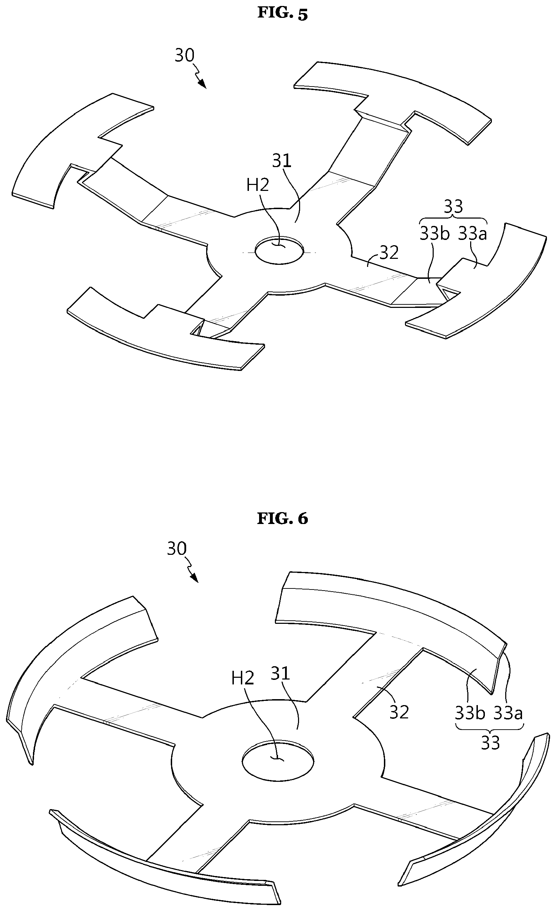

Next, referring to FIG. 5, the current collector 30 according to another embodiment of the present invention is illustrated. The current collector 30 according to another embodiment of the present invention is only different in a shape of the contact portion 33a from the current collector 30 of FIG. 4a, and thus, other structures of the current collector 30 described above may be substantially the same.

Referring to FIG. 5, at least a part of the contact portion 33a may extend along an inner circumferential surface of the battery housing 20. For example, the contact portion 33a may have an arc shape that extends along the beading portion of the battery housing 20. Also, although not shown in FIG. 5, in order to maximize a contact area, the current collector 30 may be configured so that a sum of an extending length of the contact portion 33a of at least one housing coupling portion 33 is substantially the equal to an inner circumference of the battery housing 20. In this embodiment, a coupling area is maximized, and thus, a coupling force may be improved and electrical resistance may be reduced.

Next, referring to FIG. 6, the current collector 30 according to another embodiment of the present invention is illustrated. The current collector 30 according to another embodiment of the present invention is only different in shapes of the contact portion 33a and the connecting portion 33b from the current collector 30 of FIG. 5, and thus, other structures of the current collector 30 described above may be substantially the same.

Referring to FIG. 6, at least a part of the connecting portion 33b may extend along an inner circumferential surface of the battery housing 20. In detail, the contact portion 33a may have an arc shape that extends along the beading portion of the battery housing 20, and the connecting portion 33b may have an arc shape that extends along the contact portion 33a. According to this structure, because the area of the current collector 30 is additionally increased when compared to the current collector 30 of FIG. 5, the effect of reducing electrical resistance may be maximized.

Referring to FIG. 6, the current collector 30 may not include the bending portion B, unlike the current collector 30 of FIGS. 4a and 5. When the current collector 30 does not include the bending portion B, raw materials required to manufacture the current collector 30 may be reduced. Accordingly, manufacturing costs of the current collector 30 may be reduced.

Referring to FIG. 1a, the cap 40 covers the opening portion formed on a side of the battery housing 20. The cap 40 may be fixed by the crimping portion 22 formed on an upper end of the battery housing 20. In this case, in order to improve a fixing force and improve the sealing property of the battery housing 20, the sealing element G1 may be arranged between the battery housing 20 and the cap 40. However, in the present invention, the cap 40 is not a component that should function as a passage of current. Accordingly, as long as the battery housing 20 and the cap 40 may be firmly fixed and the sealing property of the opening portion of the battery housing 20 may be secured through the application of another structure well known in the related art, the application of the sealing element G1 is not essential.

Assuming that the sealing element G1 is applied, the sealing element G1 that is arranged between the opening portion of the battery housing 20 and the current collector 30 may be configured so that a portion of the current collector 30 contacting the beading portion 21 is arranged between the beading portion 21 and the sealing element G1. The sealing element G1 may have a substantially annular shape surrounding the cap 40. The sealing element G1 may simultaneously cover a top surface, a bottom surface, and a side surface of the cap 40. A radial extension of a portion of the sealing element G1 covering the bottom surface of the cap 40 may be equal to or less than a radial extension of a portion of the sealing element G1 covering the top surface of the cap 40. When a radial extension of a portion of the sealing element G1 covering the bottom surface of the cap 40 is excessively large, the sealing element G1 may press the current collector 30 in a process of vertically compressing the battery housing 20 during a sizing process, thereby damaging the current collector 30 or the battery housing 20. In particular, when a radial extension of a portion of the sealing element G1 covering the bottom surface of the cap 40 is excessively large, the sealing element G1 may excessively press the connecting portion 33b in a process of vertically compressing the battery housing 20 during a sizing process, thereby deforming the connecting portion 33b or damaging a part of the connecting portion 33b. Accordingly, it is necessary to keep a radial extension of a portion of the sealing element G1 covering the bottom surface of the cap 40 to a certain level.

In contrast, a portion of the sealing element G1 covering the top surface of the cap 40 does not interfere with the current collector 30 due to its structural and positional characteristics. In another aspect, the battery housing 20 and the cap 40 do not necessarily need to be insulated from each other. That is, because a portion of the sealing element G1 covering the top surface of the cap 40 needs only a sealing function and does not need insulation or other separate functions, there are relatively few restrictions on its length.

For example, as shown in FIG. 1a, a radial extension of a portion of the sealing element G1 covering the bottom surface of the cap 40 may be the equal to a radial extension of a portion of the sealing element G1 covering the top surface of the cap 40. Alternatively, as shown in FIGS. 2 and 3, a radial extension of a portion of the sealing element G1 covering the bottom surface of the cap 40 may be less than a radial extension of a portion of the sealing element G1 covering the top surface of the cap 40.

The contact portion 33a may be arranged and fixed between the beading portion 21 of the battery housing 20 and the sealing element G1. That is, the contact portion 33a may be fixed due to a crimping force of the crimping portion 22 in a state where the contact portion 33a is arranged between the beading portion 21 of the battery housing 20 and the sealing element G1.

In this case, a thickness of the sealing element G1 may vary according to a circumferential direction. For example, a thickness of the sealing element G1 may be alternately increased and decreased in the circumferential direction.

In an example, the sealing element G1 may have the same compressibility in a region where the sealing element G1 contacts the contact portion 33a and in a region where the sealing element G1 does not contact the contact portion 33a. That is, in an uncompressed state, the sealing element G1 may be configured so that a thickness of the sealing element G1 varies in the circumferential direction.

In another example, the sealing element G1 may be configured so that a compressibility in a region where the sealing element G1 does not contact the contact portion 33a is less than that in a region where the sealing element G1 contacts the contact portion 33a. That is, in an uncompressed state, the sealing element G1 may be configured to have a constant thickness in the circumferential direction, and may be configured so that a thickness varies only in a certain region when compressed due to a crimping force later.

In another example, the sealing element G1 may be configured so that a thickness in a region where the sealing element G1 does not contact the contact portion 33a is greater than that in a region where the sealing element G1 contacts the contact portion 33a. That is, although not shown, the sealing element G1 may have a relatively high compressibility in a region where the sealing element G1 contacts the contact portion 33a.

In another aspect, a welding portion may be formed between the beading portion 21 of the battery housing 20 and the contact portion 33a of the current collector. For example, the fixing of the contact portion 33a may not be reliable only with a crimping force. In addition, when the sealing element G1 is contracted by heat or the crimping portion 22 is deformed by external impact, a coupling force between the current collector and the battery housing 20 is likely to be reduced. Accordingly, the current collector 30 may be fixed to the battery housing 20 through welding in a state where the contact portion 33a is placed on the beading portion 21 of the battery housing 20. Next, the cap 40 surrounded by the sealing element G1 may be placed on an upper end of the contact portion 33a and the crimping portion 22 may be formed, to complete a manufacturing process of the battery 1. In this case, examples of the welding method may include, but are not limited to, laser welding, resistance welding, and ultrasonic welding. As such, according to a structure in which the contact portion 33a is arranged between the beading portion 21 and the sealing element G1 and the contact portion 33a is coupled to the beading portion 21 through welding, a coupling force of a welding portion may be increased and surface adhesion may be ensured even with wobble for a long time. Accordingly, safety problems such as cycle fading may be minimized.

FIGS. 8a through 10 are views for describing a welding region between the contact portion 33a and the beading portion 21.

Referring to FIGS. 8a through 10, the welding bead BD may be formed in a welding region between the contact portion 33a and the beading portion 21. For example, when a beading portion top surface and a beading portion bottom surface are inclined at a certain angle with respect to a bottom surface of the battery housing 20 as shown in FIG. 1a, the contact portion 33a may be mounted on an inclined top surface of the beading portion 21. Alternatively, as shown in FIGS. 2 and 3, when each of the beading portion top surface and the beading portion bottom surface includes the flat section F parallel to the bottom surface of the battery housing 20 in at least a region, the contact portion 33a may be mounted on a flat top surface of the beading portion 21. Next, the contact portion 33a may be welded to the beading portion 21.

FIG. 11 is a view for describing a position, a length, and a width of the welding bead BD formed in a welding region between the contact portion 33a and the beading portion 21.

Referring to FIG. 11, the contact portion 33a may be welded to a flat top surface of the beading portion 21.

Referring to 8a through 10, when a plurality of welding beads BD may be gathered, a certain welding pattern may be formed. For example, referring to FIG. 8a, a plurality of welding beads BD may be gathered to form a welding pattern having a substantially straight line shape. For example, a welding pattern formed between the beading portion 21 and the contact portion 33a may have a linear shape in which spot welding is connected. A width of the welding bead BD formed between the beading portion 21 and the contact portion 33a may be equal to or greater than about 0.1 mm. This is because, when laser technology is considered, a minimum width of the welding bead BD is equal to or greater than about 0.1 mm.

At least one welding bead BD may be formed between the beading portion 21 and the contact portion 33a. For example, a plurality of welding beads BD may be formed in a circumferential direction between the beading portion 21 and the contact portion 33a. In particular, a plurality of welding beads BD formed between the beading portion 21 and the contact portion 33a may be formed in the same contact portion 33a. For example, the plurality of welding beads BD formed in the same contact portion 33a may be symmetrically formed in the same contact portion 33a. The plurality of welding beads BD formed in the same contact portion 33a may be formed at an interval of a certain angle, for example, 30°. In detail, the plurality of welding beads BD formed in the same contact portion 33a may be arranged within a circumferential angle range of 30° or less based on the center of a circle formed by the beading portion 21 in the same contact portion 33a.

The welding beads BD formed between the beading portion 21 and the contact portion 33a may form a welding pattern having a straight line shape extending in the circumferential direction. Alternatively, the welding beads BD formed between the beading portion 21 and the contact portion 33a may form a welding pattern having an arc shape extending in the circumferential direction. According to an embodiment of the present invention, a circumferential length of the contact portion 33a may be the equal to a circumferential length of the tab coupling portion 32. Also, a circumferential length of the contact portion 33a may be the equal to a circumferential length of the connecting portion 33b. For example, as shown in FIG. 4a, the tab coupling portion 32, the connecting portion 33b, and the contact portion 33a may extend to have the same width.

In another aspect, an extension direction of a welding pattern formed between the first uncoated portion 11 and the tab coupling portion 32 and an extension direction of a welding pattern formed between the beading portion 21 and the contact portion 33a may be different from each other. Preferably, an extension direction of a welding pattern formed between the first uncoated portion 11 and the tab coupling portion 32 and an extension direction of a welding pattern formed between the beading portion 21 and the contact portion 33a may be substantially perpendicular to each other. Referring to FIGS. 8a and 8b, a welding pattern formed between the first uncoated portion 11 and the tab coupling portion 32 may be formed in a radial direction. A welding pattern formed between the beading portion 21 and the contact portion 33a may be formed in a circumferential direction of the battery housing 20. That is, an extension direction of the welding pattern formed between the first uncoated portion 11 and the tab coupling portion 32 and an extension direction of the welding pattern formed between the beading portion 21 and the contact portion 33a may be substantially perpendicular to each other. According to this structure, coupling strength between the current collector 30 and the electrode assembly 10 may be increased. That is, according to this structure, because the current collector 30 is fixed by welding performed in various directions, even when the current collector 30 receives vibration or impact in a specific direction, the current collector 30 may be firmly fixed.

According to another embodiment of the present invention, a circumferential length of the contact portion 33a may be greater than a circumferential length of the tab coupling portion 32. Also, preferably, a circumferential length of the contact portion 33a may be greater than a circumferential length of the connecting portion 33b. For example, referring to FIGS. 5 and 6, it may be found that a circumferential length of the contact portion 33a is greater than a circumferential length of the tab coupling portion 32. Also, referring to FIG. 5, it may be found that a circumferential length of the contact portion 33a is greater than a circumferential length of the connecting portion 33b. As such, when a circumferential length of the contact portion 33a is large, a coupling force between the beading portion 21 and the current collector 30 may be improved. Furthermore, when a circumferential length of the contact portion 33a and/or the connecting portion 33b is large, the internal resistance of a battery may be reduced.

Referring to FIGS. 5 and 6, the contact portion 33a may have an arc shape extending in a circumferential direction along the beading portion 21 of the battery housing. In more detail, the contact portion 33a may have an arc shape extending in opposite directions along the circumferential direction, from an intersection between the connecting portion 33b and the contact portion 33a.

Referring to FIG. 6, the connecting portion 33b may have an arc shape extending in the circumferential direction along the contact portion 33a. Because the contact portion 33a has an arc shape extending in the circumferential direction along the beading portion 21 of the battery housing, a coupling force between the beading portion 21 and the current collector may be improved. More preferably, a sum of lengths of the contact portions 33a extending in the circumferential direction may correspond to a length of an inner circumference of the battery housing. That is, although not shown, the current collector 30 may have an annular shape in which the contact portions 33a are connected to one another. According to this shape, a coupling force between the beading portion 21 and the current collector 30 may be further improved.

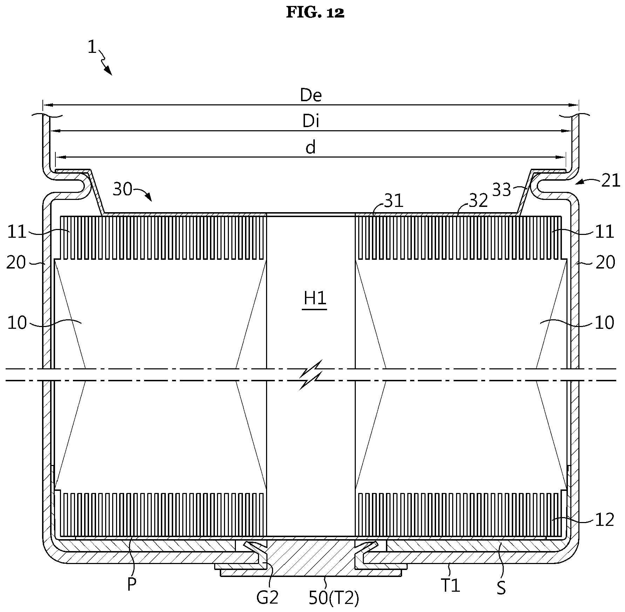

FIG. 12 is a view for describing a relationship between a diameter of an inner surface of a battery housing and a total diameter of a current collector.

Referring to FIG. 12, when a diameter of an outer surface of the battery housing is De, a diameter of an inner surface of the battery housing 20 is Di, and a total diameter of the current collector 30 is d, a relationship of De>Di>d may be satisfied.

The cap 40 may include a venting portion 41 formed to prevent an increase in internal pressure due to gas generated inside the battery housing 20. The venting portion 41 is formed in a part of the cap 40, and corresponds to a region that is structurally weaker than a peripheral region to be easily ruptured when internal pressure is applied. The venting portion 41 may be a region having a smaller thickness than the peripheral region.

The terminal 50 passes through the battery housing 20 from the opposite side to the opening portion of the battery housing 20 and is electrically connected to the second uncoated portion 12 of the electrode assembly 10. The terminal 50 may pass through a substantially central portion of a bottom surface of the battery housing 20. The terminal 50 may be coupled to the current collector (second current collector) P coupled to the second uncoated portion 12 or may be coupled to a lead tab (not shown) coupled to the second uncoated portion 12, to be electrically connected to the electrode assembly 10. Accordingly, the terminal 50 may have the same polarity as a second electrode of the electrode assembly 10, and may function as a second electrode terminal T2. When the second uncoated portion 12 is a positive electrode tab, the terminal 50 may function as a positive electrode terminal. Preferably, the terminal 50 has a riveted structure. A battery to which a riveting structure of the terminal 50 is applied may perform electrical wiring in one direction. Also, because the terminal 50 having the riveting structure has a large cross-sectional area and thus has low resistance, the terminal 50 is very suitable for rapid charging.

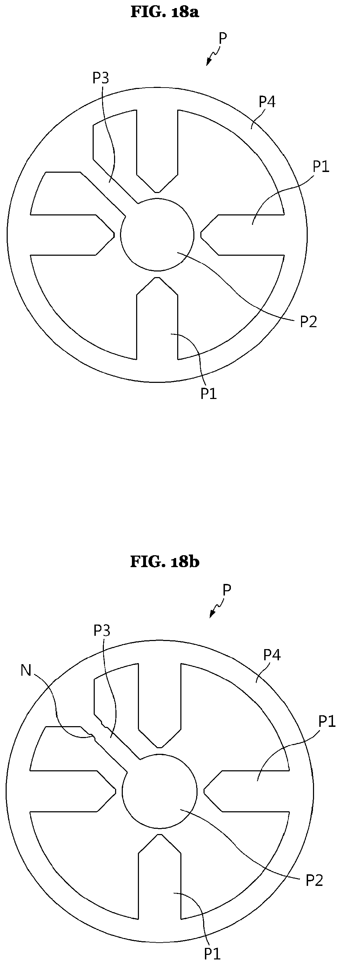

FIGS. 18a and 18b are views for describing the second current collector P, according to an embodiment of the present invention.

In another aspect of the present invention, referring to FIGS. 2 and 3, the second current collector P may be arranged between the second uncoated portion 12 and the terminal 50. Referring to FIGS. 18a and 18b, the second current collector P includes: a tab coupling portion P1 coupled to the second uncoated portion 12; and a terminal coupling portion P2 coupled to the terminal 50. The second current collector P may further include a connecting portion P3 and/or an edge portion P4.

In an aspect of the present invention, a plurality of tab coupling portions P1 may be provided. Preferably, the plurality of tab coupling portions P1 may be arranged at the same interval. Extending lengths of the plurality of tab coupling portions P1 may be the same. The terminal coupling portion P2 may be surrounded by the plurality of tab coupling portions P1.

Preferably, the terminal coupling portion P2 may be arranged at a position corresponding to the winding central hole H1 formed at a winding center of the electrode assembly 10. More preferably, the terminal coupling portion P2 may cover the winding central hole H1 of the electrode assembly 10. According to this structure, the terminal 50 and the terminal coupling portion P2 arranged over the winding central hole H1 of the electrode assembly 10 may be welded.

The tab coupling portion P1 and the terminal coupling portion P2 may be spaced apart from each other without being directly connected to each other. For example, the tab coupling portion P1 and the terminal coupling portion P2 may be indirectly connected by the edge portion P4. As such, in the second current collector P according to an embodiment of the present invention, because the tab coupling portion P1 and the terminal coupling portion P2 are connected through the edge portion P4 without being directly connected to each other, when impact and/or vibration occurs in the battery 1, impact applied to a coupling portion between the tab coupling portion P1 and the second uncoated portion 12 and a coupling portion between the terminal coupling portion P2 and the terminal 50 may be distributed. Accordingly, the second current collector P may minimize or prevent damage to a welding portion due to external impact. The second current collector P of the present invention has a structure in which stress may be concentrated on a boundary region between the edge portion P4 and the terminal coupling portion P2 when external impact is applied. Because the boundary region is not a region where a welding portion for coupling components is formed, product defects due to damage to the welding portion caused by external impact may be prevented.

The second current collector P may further include the connecting portion P3 connected to the terminal coupling portion P2. The connecting portion P3 may be narrower than the tab coupling portion P1. In this case, electrical resistance in the connecting portion P3 is increased and larger resistance is generated than in another portion when current flows through the connecting portion P3, and thus, when overcurrent occurs, a part of the connecting portion P3 is broken, thereby blocking the overcurrent. A width of the connecting portion P3 may be adjusted to an appropriate level by considering an overcurrent blocking function.

The second current collector P may further include the edge portion P4 having a substantially rim shape in which an empty space is formed. In this case, the tab coupling portion P1 may extend inward from the edge portion P4, and may be coupled to the second uncoated portion 12. Although the edge portion P4 has a substantially circular rim shape in FIG. 18a, the present invention is not limited thereto. The edge portion P4 may have a substantially quadrangular rim shape or another shape, unlike in FIG. 18a.

In another aspect of the present invention, referring to FIG. 18b, the connecting portion P3 may include a notch portion N formed to partially reduce a width of the connecting portion P3. When the notch portion N is provided, electrical resistance in a region where the notch portion N is formed is increased, and thus, when overcurrent occurs, the overcurrent may be rapidly blocked. Preferably, a position of the notch portion N may be included in a stack number uniform section (FIG. id). More preferably, a position of the notch portion N may be included in a portion of the stack number uniform section in which the number of overlapping layers is maintained at a maximum. Accordingly, a byproduct generated when the notch portion N is broken may be reliably prevented from being penetrated into the electrode assembly.

Referring to FIGS. 2 and 3 together with FIGS. 18a and 18b, in an aspect of the present invention, a longest radius from the center of the terminal coupling portion P2 of the second current collector P to an end of the tab coupling portion P1 may be greater than a longest radius from a central portion of the current collector 30 to an end of the tab coupling portion 32. For example, a radius of the edge portion P4 having a substantially rim shape may be greater than a longest radius from a central portion of the current collector 30 to an end of the tab coupling portion 32. This is because, when the beading portion 21 is press-fitted into the battery housing 20, a welding area between the tab coupling portion 32 of the current collector 30 and the first uncoated portion 11 is limited.

In another aspect of the present invention, the tab coupling portion P1 of the second current collector P may be coupled to a bent end portion of the second uncoated portion 12. That is, the tab coupling portion P1 of the second current collector P may be welded to a tab surface formed by a plurality of segments of the second uncoated portion 12. Preferably, a welding region may overlap a stack number uniform section (FIG. id) by at least 50% in a radial direction, and the larger the overlap ratio, the more preferable. More preferably, a welding region may overlap a portion of the stack number uniform section in which the number of overlapping layers is at a maximum in the radial direction by at least 50%, and the larger the overlap ratio, the more preferable. Substantially the same conditions as these welding conditions may be applied to the current collector 30.

In another aspect of the present invention, a welding region for coupling the tab coupling portion P1 of the second current collector P to the bent end portion of the second uncoated portion 12 may be further formed, and a distance from the center of the terminal coupling portion P2 of the second current collector P to the welding region may be the equal to or may have a distance deviation of about 5% or less from a distance from a central portion of the current collector 30 to a welding region on the tab coupling portion 32. In another aspect of the present invention, the welding region of the second current collector P may have a length greater than that of the welding region on the tab coupling portion 32 of the current collector 30.

In an example, a flat portion (see FIG. 1a) of the terminal 50 and the second current collector P are welded by a laser and are welded in a continuous or discontinuous line to have an arc pattern, a diameter of the arc welding pattern may be equal to or greater than 2 mm, and preferably may be equal to or greater than 4 mm. When the diameter of the arc welding pattern satisfies the condition, a tensile force of a welding portion may be increased to 2 kgf or more and thus sufficient welding strength may be secured.

In another example, when the flat portion of the terminal 50 and the second current collector P are welded by ultrasound and are welded in a circular pattern, it is preferable that a diameter of the circular welding pattern is equal to or greater than 2 mm. When the diameter of the circular welding pattern satisfies the condition, a tensile force of a welding portion may be increased to 2 kgf or more and thus sufficient welding strength may be secured.

A diameter of the flat portion of the terminal 50 corresponding to a weldable region may be adjusted in a range of 3 mm to 14 mm. When a radius of the flat portion of the terminal 50 is less than 3 mm, it is difficult to form a welding pattern having a diameter of 2 mm or more by using a laser welding tool, an ultrasonic welding tool, or the like. Also, when a radius of the flat portion of the terminal 50 exceeds 14 mm, a size of the terminal 50 may be excessively increased and the area occupied by an outer surface of the bottom of the battery housing 20 may be reduced, and thus, it is difficult to connect an electrical connection component (bus bar) through the outer surface.

Preferably, because a diameter of a welding pattern is equal to or greater than 2 mm and a diameter of a weldable region ranges from 3 mm to 14 mm to secure a tensile force of a welding portion of 2 kgf or more, a ratio of the area of the welding pattern to the area of the weldable region may range from 2.04 ($100*\pi 1^2/\pi 7^2$)% to 44.4 ($100*\pi 1^2/\pi 1.5^2$)%.

When the polarity and function of the terminal 50 are considered, the terminal 50 should maintain an insulated state from the battery housing 20 having the opposite polarity. To this end, the insulating gasket G2 may be applied between the terminal 50 and the battery housing 20. Alternatively, insulation may be achieved by coating an insulating material on a part of a surface of the terminal 50.

For the same reason, the second uncoated portion 12 and/or the current collector (second current collector) P should maintain an insulated state from the battery housing 20. To this end, the insulator S may be arranged between the second uncoated portion 12 and the battery housing 20 and/or between the current collector (second current collector) P and the battery housing 20. When the insulator S is applied, the terminal 50 may pass through the insulator S for electrical connection with the second uncoated portion 12.

Preferably, the insulator S and an inner surface of the bottom of the battery housing 20 may be in close contact with each other. 'Close contact' means that there is no space (gap) identified visually. In order to remove a space (gap), a distance from the inner surface of the bottom of the battery housing 20 to the flat portion of the terminal 50 may be equal to or slightly less than a thickness of the insulator S.

In the present invention, the entire surface of the battery housing 20 may function as a first electrode terminal T1. For example, when the first uncoated portion 11 is a negative electrode tab, the first electrode terminal T1 may be a negative electrode terminal. The battery 1 according to the present invention has a structure in which the terminal 50 exposed on a bottom surface of the battery housing 20 arranged opposite to an opening portion and a portion of the bottom surface of the battery housing 20 other than a portion occupied by the terminal 50 may be respectively used as the second electrode terminal T2 and the first electrode terminal T1. Accordingly, in the battery 1 according to the present invention, when a plurality of batteries 1 are electrically connected, both a positive electrode and a negative electrode may be connected, thereby simplifying an electrical connection structure. Also, because the battery 1 has a structure in which most of a bottom surface of the battery housing 20 arranged opposite to an opening portion may be used as an

EP 4 044 334 A2

electrode terminal, a sufficient area for welding components for electrical connection may be secured.

In another aspect, an electrode of the electrode assembly 10 may have a segmentation structure for ease of bending the uncoated portion 11.

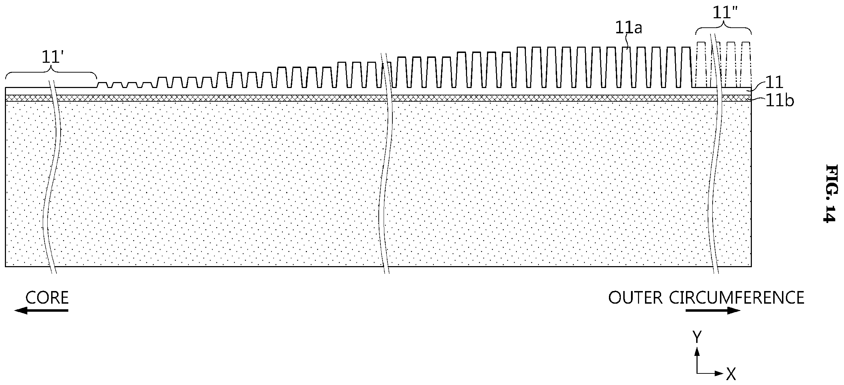

Referring to FIG. 14, an electrode plate includes a first electrode current collector having a sheet shape and formed of a conductive foil, an active material layer formed on at least one surface of the first electrode current collector, and the first uncoated portion 11 in which an active material is not coated on a long side end of a first electrode.

Preferably, the first uncoated portion 11 may include a plurality of segments 11a that are notched. The plurality of segments 11a may be divided into a plurality of groups, and the segments 11a included in each group may have the same height (length in a Y direction) and/or the same width (length in an X direction) and/or the same separation pitch. The number of segments 11a included in each group may be more or less than that illustrated. The segment 11a has a geometric shape in which at least one straight line and/or at least one curved line are combined. Preferably, the segment 11a may have a trapezoidal shape, but may be modified into any of shapes such as a quadrangular shape, a parallelogram shape, a semicircular shape, or a semi-elliptical shape.

Preferably, a height of the segment 11a may be increased stepwise in one direction parallel to a winding direction of the electrode assembly, for example, from a core side to an outer circumference side. Also, a core side-uncoated portion 11' adjacent to the core side may not include the segment 11a, and a height of the core-side uncoated portion 11' may be less than that of other uncoated regions. Also, an outer circumference-side uncoated portion 11" adjacent to the outer circumference side may not include the segment 11a, and a height of the outer circumference-side uncoated portion 11" may be less than that of other uncoated regions.

Optionally, an electrode plate may include an insulating coating layer 11b covering a boundary between the active material layer and the first uncoated portion 11. The insulating coating layer 11b may include an insulating polymer resin, and may optionally further include an inorganic filler. The insulating coating layer 11b may prevent an end portion of the active material layer from contacting a facing active material layer having the opposite polarity through a separator, and may structurally support bending of the segment 11a. To this end, when the electrode plate is wound for the electrode assembly 10, it is preferable that at least a part of the insulating coating layer 11b is exposed to the outside from the separator.

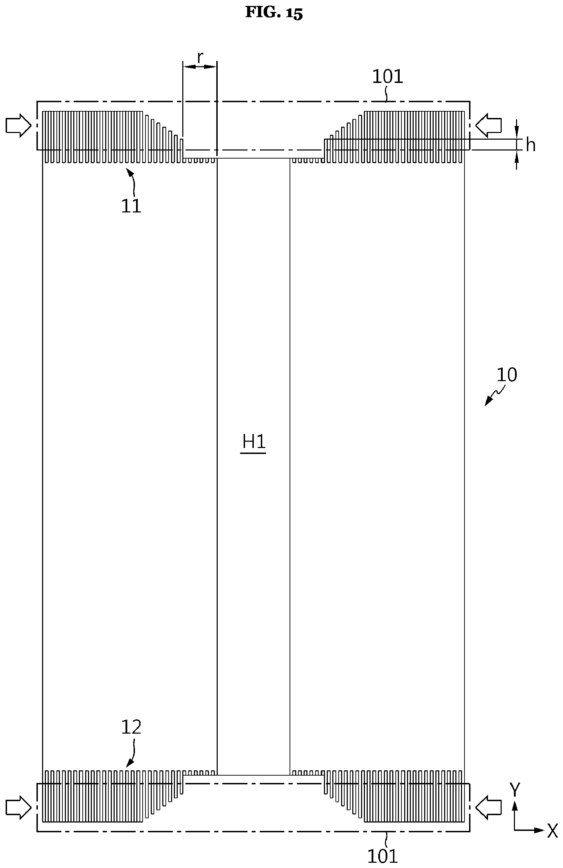

FIG. 15 is a cross-sectional view illustrating the electrode assembly 10, in which an uncoated portion segmentation structure of an electrode plate is applied to a first electrode current collector and a second electrode current collector, taken along a longitudinal direction Y, according to an embodiment of the present invention.

Referring to FIG. 15, the electrode assembly 10 may be manufactured by using a winding method. The second uncoated portion 12 protruding downward extends from the second electrode current collector, and the first uncoated portion 11 protruding upward extends from the first electrode current collector.

A pattern in which heights of the first and second uncoated portions 11, 12 are changed is schematically illustrated. That is, heights of the uncoated portions 11, 12 may be irregularly changed according to cut positions. For example, when a side portion of the segment 11a having a trapezoidal shape is cut, a height of an uncoated portion in a cross-section is less than a height of the segment 11a. Accordingly, it should be understood that heights of the uncoated portions 11, 12 shown in a cross-sectional view of the electrode assembly 10 correspond to an average of uncoated portion heights included in each winding turn.

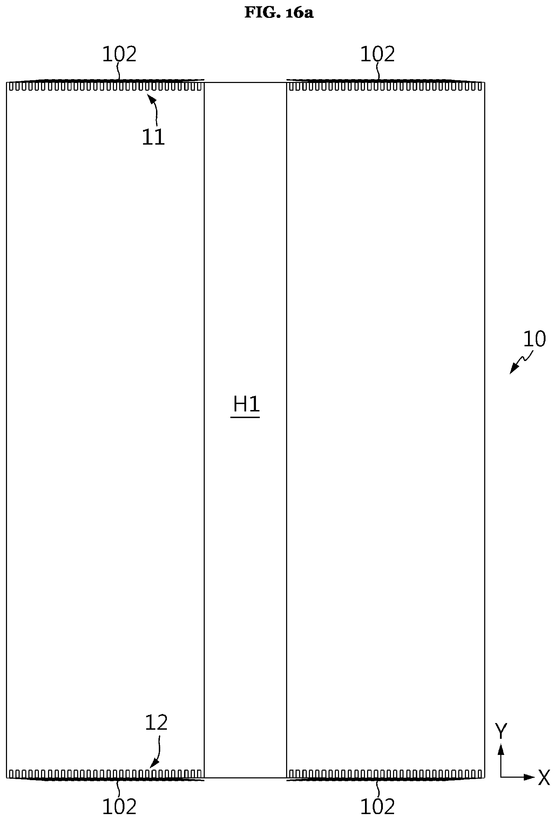

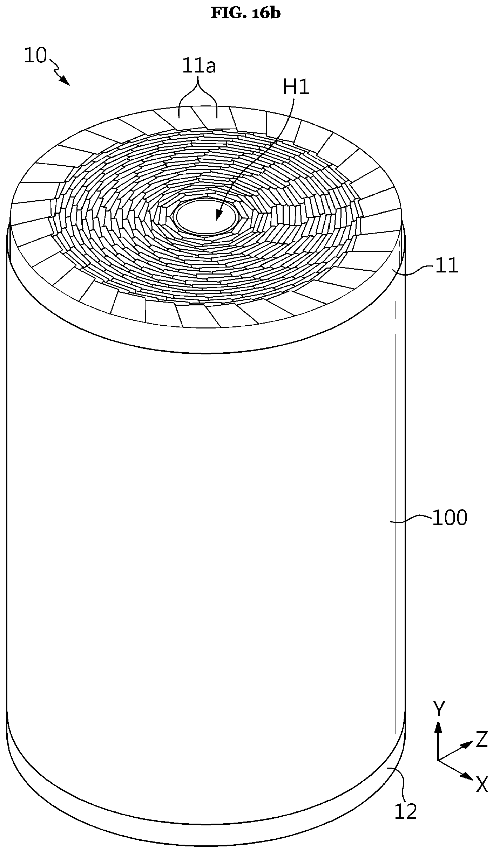

As shown in FIGS. 16a and 16b, the uncoated portions 11, 12 may be bent in a radial direction of the electrode assembly 10, for example, from an outer circumference side to a core side. In FIG. 15, a bent portion 101 is marked by a dashed line box. When the uncoated portions 11, 12 are bent, the segments 11a adjacent to one another in the radial direction overlap one another in multiple layers to form the tab surfaces 102 over and under the electrode assembly 10. In this case, the core-side uncoated portion 11' (see FIG. 14) has a low thickness and thus is not bent, and a height h of the segment 11a that is a bent innermost segment is equal to or less than a radial extension r of a winding region formed by the core-side uncoated portion 11' with no segment structure. Accordingly, the winding central hole H1 at the core of the electrode assembly 10 is not closed by the bent segments 11a. When the winding central hole H1 is not closed, there is no difficulty in an electrolyte injection process, and electrolyte injection efficiency is improved. Also, the terminal 50 and the second current collector P may be easily welded by inserting a welding tool through the winding central hole H1.

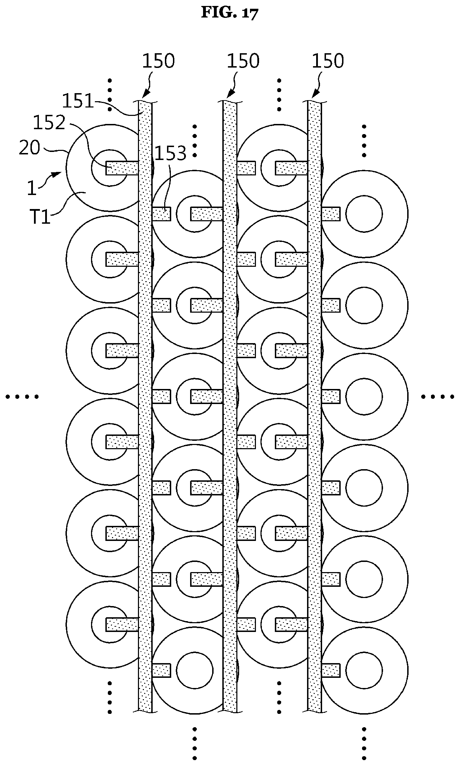

FIG. 17 is a view illustrating a state where the batteries 1 are electrically connected by using a bus bar 150, according to an embodiment of the present invention.

Referring to FIG. 17, the plurality of batteries 1 may be connected in series and in parallel in an upper portion by using the bus bar 150. The number of batteries 1 may be increased or decreased by considering the capacity of a battery pack 3.

In each battery 1, the terminal 50 may have a positive polarity and an outer surface of the bottom of the battery housing 20 may have a negative polarity, or vice versa.

Preferably, the plurality of batteries 1 may be arranged in a plurality of columns and rows. Columns are provided in a vertical direction based on the Fig. 17, and rows are provided in a left and right direction based on the Fig. 17. Also, in order to maximize space efficiency, the batteries 1 may be arranged in a closest packing structure. The closest packing structure is formed when a regular triangle is formed by connecting the centers of the terminals 50.

Preferably, the bus bar 150 may be arranged on adjacent batteries 1, and preferably, between the terminals 50. In an example, the bus bar 150 may be arranged between adjacent columns. Alternatively, the bus bar 150 may be arranged between adjacent rows.

Preferably, the bus bar 150 connects batteries arranged in the same column in parallel, and connects batteries arranged in two adjacent columns in series.

Preferably, the bus bar 150 may include a body portion 151, a plurality of first bus bar terminals 152, and a plurality of second bus bar terminals 153 for serial and parallel connection.

The body portion 151 may extend along a column of the batteries 1. Alternatively, the body portion 151 may extend along a column of the batteries 1, and may be regularly bent like a zigzag shape.

The plurality of first bus bar terminals 152 may protrude from a side of the body portion 151 to the terminal 50 of each battery 1, and may be electrically coupled to the terminal 50. The electrical connection with the terminal 50 may be performed by using laser welding, ultrasonic welding, or the like. Also, the plurality of second bus bar terminals 153 may protrude from the other side of the body portion 151 to the outer surface of the bottom of the battery housing 20 of each battery 1, and may be electrically coupled to the outer surface. The electrical connection with the outer surface may be performed by using laser welding, ultrasonic welding, or the like.

Preferably, the body portion 151, the plurality of first bus bar terminals 152, and the plurality of second bus bar terminals 153 may be formed of one conductive metal plate. The metal plate may be, but is not limited to, an aluminum plate or a copper plate. In a modified example, the body portion 151, the plurality of first bus bar terminals 152, and the plurality of second bus bar terminals 153 may be manufactured as separate pieces and then may be coupled to one another through welding or the like.

In the battery 1, because the terminal 50 having a positive polarity and the outer surface of the bottom of the battery housing 20 having a negative polarity are arranged in the same direction, the batteries 1 may be easily electrically connected by using the bus bar 150.

Also, because the terminal 50 of the battery 1 and the outer surface have large areas, a sufficient coupling area of the bus bar 150 may be secured and the resistance of the battery pack including the battery 1 may be sufficiently reduced.

As described above, the battery 1 of the present invention has a structure in which resistance is minimized by increasing a contact area between components, multiplexing a current path, minimizing a current path length, and the like. After a product is finally manufactured, AC resistance of the battery 1 measured by using a resistance measuring instrument between a positive electrode and a negative electrode, that is, between a top surface of the terminal 50 and an outer surface of a closed portion of the battery housing 20, may be equal to or less than about 4 m$\Omega$.

In the present invention, a battery may be, for example, a battery in which a form factor ratio (defined as a value obtained by dividing a diameter of the battery by a height, that is, a ratio between a height H and a diameter $\Phi$) is greater than about 0.4.

The term "form factor" used herein refers to a value indicating a diameter and a height of a battery. The battery according to an embodiment of the present invention may be, for example, a 46110 battery, a 4875 battery, a 48110 battery, a 4880 battery, or a 4680 battery. In the numerical value indicating the form factor, first two numbers indicate a diameter of a battery, next two numbers indicate a height of the battery.

When a battery has recently been applied to an electric vehicle, a form factor of a battery has increased to be larger than 1865, 2170, or the like. The increase in the form factor leads to increased energy density, enhanced safety against thermal runaway, and improved cooling efficiency.

The energy density of a battery may be further increased when an unnecessary space inside a battery housing is minimized along with the increase of the form factor. A battery according to the present invention has an optimal structure in which a coupling force of a coupling portion between a current collector and a battery housing may be improved, the capacity of a battery may be increased, and resistance may be reduced.

A battery according to an embodiment of the present invention may be a battery having a substantially cylindrical shape, whose diameter is about 46 mm, height is about 110 mm, and form factor ratio is about 0.418.

A battery according to another embodiment may be a battery having a substantially cylindrical shape, whose diameter is about 48 mm, height is about 75 mm, and form factor ratio is about 0.640.

A battery according to another embodiment may be a battery having a substantially cylindrical shape, whose diameter is about 48 mm, height is about 110 mm, and form factor ratio is about 0.436.

A battery according to another embodiment may be a battery having a substantially cylindrical shape, whose diameter is about 48 mm, height is about 80 mm, and form factor ratio is about 0.600.

A battery according to another embodiment may be a battery having a substantially cylindrical shape, whose diameter is about 46 mm, height is about 80 mm, and form factor ratio is about 0.575.

In the related art, batterys having a form factor ratio of about 0.4 or less have been used. That is, in the related art, for example, a 1865 battery, a 2170 battery, etc. have been used. The 1865 battery has a diameter of about 18 mm, a height of about 65 mm, and a form factor ratio of about 0.277. The 2170 battery has a diameter of about 21 mm, a height of about 70 mm, and a form factor ratio of about 0.300.

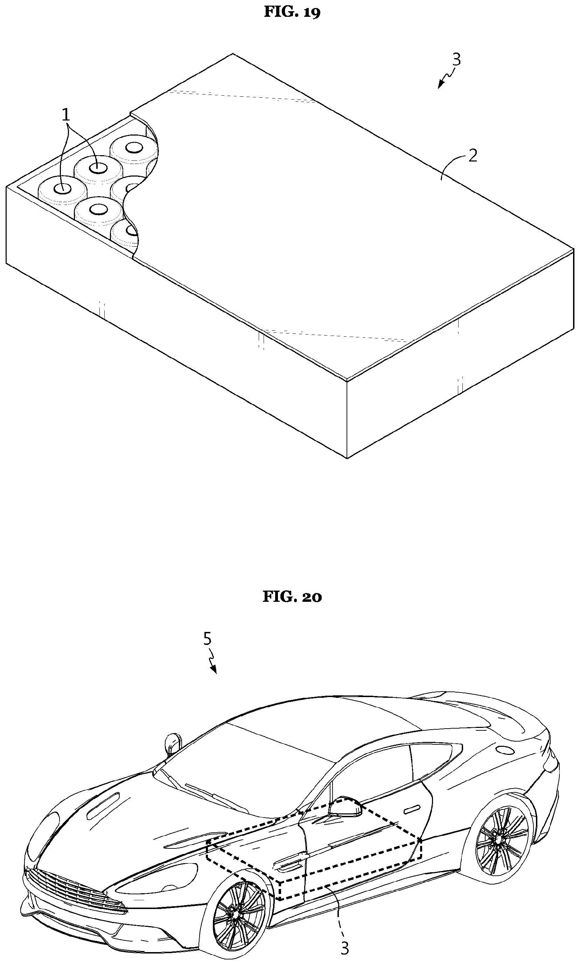

A battery according to an embodiment of the present invention may be included in a battery pack, and the battery pack may be mounted in a vehicle. Referring to FIG. 19, a battery pack 3 according to an embodiment of the present invention includes a battery assembly in which the plurality of batteries 1 according to an embodiment of the present invention are electrically connected, and a pack housing 2 in which the battery assembly is accommodated. In FIG. 19 of the present invention, for convenience of explanation, components for electrical connection such as a bus bar, a cooling unit, and a power terminal are not shown.

Referring to FIG. 20, a vehicle 5 according to an embodiment of the present invention may be, for example, an electric vehicle, a hybrid vehicle, or a plug-in hybrid vehicle, and includes the battery pack 3 according to an embodiment of the present invention. The vehicle 5 operates by receiving power from the battery pack 3 according to an embodiment of the present invention.

Although the embodiments of the present invention have been illustrated and described above, the present invention is not limited to the above-described specific embodiments. Various modified embodiments may be made by one of ordinary skill in the art without departing from the scope of the present invention as claimed in the claims.

In view of the above, it will be appreciated that the present invention also related to the following itemized embodiments:

ITEM 1. A battery comprising:

a rolled electrode assembly having a structure in which a first electrode and a second electrode each having a sheet shape and a separator located between the first electrode and second electrode are wound in one direction, the first electrode comprising a first uncoated portion not coated with an active material and exposed to the outside of the separator at a long side end thereof, at least a part of the first uncoated portion being used as an electrode tab by itself;
a battery housing in which the electrode assembly is accommodated through an opening portion formed at a side thereof;
a current collector comprising a tab coupling portion coupled to the first uncoated portion and a housing coupling portion extending from the tab coupling portion and electrically coupled to an inner surface of the battery housing; and
a cap covering the opening portion.

ITEM 2. The battery of item 1, wherein the battery housing comprises a beading portion formed on an end portion adjacent to the opening portion and press-fitted inward.

ITEM 3. The battery of item 1 or 2, wherein the battery housing comprises a crimping portion formed at a position between the opening portion and the beading portion, and extending and bent toward the opening portion.

ITEM 4. The battery of any of the preceding items, wherein the housing coupling portion is press-fixed by the crimping portion.

ITEM 5. The battery of any of the preceding items, wherein the housing coupling portion comprises:

a contact portion coupled to the beading portion of the battery housing; and
a connecting portion configured to connect the tab coupling portion to the contact portion.

ITEM 6. The battery of any of the preceding items, wherein the connecting portion has a structure that is convex upward based on an imaginary straight line that connects an end portion of the contact portion to an end portion of the tab coupling portion.

ITEM 7. The battery of any of the preceding items, wherein the connecting portion has a structure that is uplifted upward to be over the beading portion.

ITEM 8. The battery of any of the preceding items, wherein the connecting portion comprises at least one bent part.

ITEM 9. The battery of any of the preceding items, wherein the bent part is located over an imaginary plane that passes through a center of the imaginary straight line that connects the end portion of the contact portion to the end portion of the tab coupling portion, and is parallel to a bottom surface of the battery housing.

ITEM 10. The battery of any of the preceding items, wherein the at least one bent part is bent at an obtuse angle so as not to overlap when viewed along a longitudinal axis of the battery housing.

ITEM 11. The battery of any of the preceding items, wherein a boundary point between the contact portion and the connecting portion is bent at an obtuse angle.

ITEM 12. The battery of any of the preceding items, wherein an inclination of the connecting portion is reduced stepwise or gradually toward the beading portion.

ITEM 13. The battery of any of the preceding items, wherein an angle between the tab coupling portion and the connecting portion ranges from 0° to 90°.

ITEM 14. The battery of any of the preceding items, wherein the connecting portion supports the cap.

ITEM 15. The battery of any of the preceding items, wherein the tab coupling portion and the contact portion are located at a same height.

ITEM 16. The battery of any of the preceding items, wherein the contact portion comprises a flat surface coupled to a top surface of the beading portion facing the opening portion.

ITEM 17. The battery of any of the preceding items, wherein the beading portion comprises: a beading portion top surface located over an innermost point that is press-fitted inward; and a beading portion bottom surface located under the innermost point that is press-fitted inward.

ITEM 18. The battery of any of the preceding items, wherein at least one tab coupling portion of the current collector is located at a lower position than the beading portion bottom surface.

ITEM 19. The battery of any of the preceding items, wherein at least one of the beading portion top surface and the beading portion bottom surface is inclined at a certain angle with respect to a bottom surface of the battery housing.

ITEM 20. The battery of any of the preceding items, wherein the contact portion is mounted on an inclined top surface of the beading portion.

ITEM 21. The battery of any of the preceding items, wherein at least one of the beading portion top surface and the beading portion bottom surface is parallel to a bottom surface of the battery housing in at least a region.

ITEM 22. The battery of any of the preceding items, wherein the beading portion top surface and the beading portion bottom surface are asymmetric with respect to an imaginary reference plane that passes through the innermost point of the beading portion to be parallel to a bottom surface of the battery housing.

ITEM 23. The battery of any of the preceding items, wherein the contact portion is mounted on a flat top surface of the beading portion.

ITEM 24. The battery of any of the preceding items, wherein, when a press-fitting depth of the beading portion is PD, a minimum value of a radius of curvature of the beading portion is R1,min, a minimum value of a welding bead width is Wbead,min, and a minimum value of a radius of curvature at a boundary region between the beading portion and the inner surface of the battery housing is R2,min, PD ≥ R1,min+R2,min+Wbead,min.

ITEM 25. The battery of any of the preceding items, wherein a press-fitting depth of the beading portion ranges from 0.2 mm to 10 mm.

ITEM 26. The battery of any of the preceding items, wherein, when a press-fitting depth of the beading portion is PD, a maximum value of the press-fitting depth is PDmax, an overlap length that is a shortest distance from an end portion of the contact portion to a vertical line that passes through an innermost point of the beading portion is OV, a minimum value of a radius of curvature of the beading portion is R1,min,

a minimum value of a welding bead width is Wbead,min, and

a minimum value of a radius of curvature at a boundary region between the beading portion and the inner surface of the battery housing is R2,min,

$$(R1,min+Wbead,min)/PDmax \leq OV/PD \leq (PDmax-R2,min)/PDmax.$$

ITEM 27. The battery of any of the preceding items, wherein the contact portion is welded to the beading portion.

ITEM 28. The battery of any of the preceding items, wherein the contact portion is welded to a flat top surface of the beading portion.

ITEM 29. The battery of any of the preceding items, wherein a welding region between the contact portion and the beading portion is narrower than the flat top surface of the beading portion.

ITEM 30. The battery of any of the preceding items, wherein, when a press-fitting depth of the beading portion is PD, a maximum value of the press-fitting depth is PDmax, a distance from an innermost point of the beading portion to a central point of an outermost welding bead in a radial direction is W, an overlap length that is a shortest distance from an end portion of the contact portion to a vertical line that passes through the innermost point of the beading portion is OV, a minimum value of the overlap length OV is OVmin, a maximum value of the overlap length OV is OVmax, and a minimum value of a welding bead width is Wbead,min, $(OVmin-0.5*Wbead,min)/PDmax \leq W/PD \leq (OVmax-0.5*Wbead,min)/PDmax$.

ITEM 31. The battery of any of the preceding items, wherein at least one welding bead is formed between the beading portion and the contact portion, wherein the at least one welding bead forms a welding pattern having a straight line shape extending in a circumferential direction.

ITEM 32. The battery of any of the preceding items, wherein at least one welding bead is formed between the beading portion and the contact portion, wherein the at least one welding bead forms a welding pattern having an arc shape extending in a circumferential direction.

ITEM 33. The battery of any of the preceding items, wherein a welding bead formed between the beading portion and the contact portion forms a welding pattern, wherein the welding pattern has a linear shape in which spot welding is connected.

ITEM 34. The battery of any of the preceding items, wherein a plurality of welding beads formed between the beading portion and the contact portion are formed in a same contact portion.

ITEM 35. The battery of any of the preceding items, wherein a width of a welding bead formed between the beading portion and the contact portion is equal to or greater than 0.1 mm.

ITEM 36. The battery of any of the preceding items, wherein the first uncoated portion and the tab coupling portion are welded in a radial direction of the electrode assembly.

ITEM 37. The battery of any of the preceding items, wherein the tab coupling portion is welded to the first uncoated portion while being parallel to a bottom surface of the battery housing.

ITEM 38. The battery of any of the preceding items, wherein a plurality of welding beads formed between the first uncoated portion and the tab coupling portion form a welding pattern having a straight line shape extending in the radial direction of the electrode assembly.

ITEM 39. The battery of any of the preceding items, wherein a welding bead formed between the first uncoated portion and the tab coupling portion forms a welding pattern, wherein the welding pattern has a linear shape in which spot welding is connected.

ITEM 40. The battery of any of the preceding items, wherein a width of a welding bead formed between the first uncoated portion and the tab coupling portion is equal to or greater than 0.1 mm.

ITEM 41. The battery of any of the preceding items, wherein at least a part of the first uncoated portion comprises a plurality of segments divided in a winding direction of the electrode assembly, wherein the plurality of segments are bent in a radial direction of the electrode assembly to form a tab surface.

ITEM 42. The battery of any of the preceding items, wherein the plurality of segments overlap in multiple layers in the radial direction of the electrode assembly to form the tab surface, wherein the tab surface comprises a stack number increasing section in which the number of overlapping layers of the segments is sequentially increased to a maximum value from an outer circumference to a core of the electrode assembly and a stack number uniform section from a radius point at which the number of overlapping layers is the maximum value to a radius point at which an innermost segment exists.

ITEM 43. The battery of any of the preceding items, wherein the tab coupling portion is coupled to the tab surface to overlap the stack number uniform section.

ITEM 44. The battery of any of the preceding items, wherein the number of overlapping layers in the stack number uniform section is 10 or more.

ITEM 45. The battery of any of the preceding items, wherein the tab coupling portion is welded to the tab surface, and a welding region of the tab coupling portion overlaps the stack number uniform section by at least 50% in the radial direction of the electrode assembly.

ITEM 46. The battery of any of the preceding items, wherein the current collector comprises a circular current collector hole at a central portion of the current collector.

ITEM 47. The battery of any of the preceding items, wherein a diameter of the current collector hole is equal to or greater than a diameter of a winding central hole formed in a core of the electrode assembly.

ITEM 48. The battery of any of the preceding items, comprising a sealing gasket provided between the battery housing and the cap.

ITEM 49. The battery of any of the preceding items, wherein the contact portion is located between the sealing gasket and the beading portion.

ITEM 50. The battery of any of the preceding items, wherein a thickness of the sealing gasket varies in a circumferential direction.

ITEM 51. The battery of any of the preceding items, wherein a thickness of the sealing gasket is alternately increased and decreased in a circumferential direction.

ITEM 52. The battery of any of the preceding items, wherein the sealing gasket has a same compressibility in a region where the sealing gasket contact the contact portion and in a region where the sealing gasket does not contact the contact portion.

ITEM 53. The battery of any of the preceding items, wherein a compressibility of the sealing gasket in a region where the sealing gasket does not contact the contact portion is less than a compressibility of the sealing gasket in a region where the sealing gasket contacts the contact portion.

ITEM 54. The battery of any of the preceding items, wherein a thickness of the sealing gasket in a region where the sealing gasket does not contact the contact portion is greater than a thickness of the sealing gasket in a region where the sealing gasket contacts the contact portion.

ITEM 55. The battery of any of the preceding items, wherein the current collector has a leg structure extending in a radial direction in a state where the tab coupling portion and the housing coupling portion are connected to each other.

ITEM 56. The battery of any of the preceding items, wherein a plurality of leg structures are provided.

ITEM 57. The battery of any of the preceding items, wherein the leg structures are arranged in a radial shape, a cross shape, or a combined shape thereof about a central portion of the current collector.

ITEM 58. The battery of any of the preceding items, wherein a plurality of housing coupling portions are provided, and wherein the plurality of housing coupling portions are connected to one another and integrally formed.

ITEM 59. The battery of any of the preceding items, wherein the connecting portion comprises at least one bending portion whose extension direction is changed at least once.

ITEM 60. The battery of any of the preceding items, wherein a protruding outermost point of the bending portion is spaced apart by a certain interval from an innermost point of the beading portion.

ITEM 61. The battery of any of the preceding items, wherein, due to the bending portion, an angle between the contact portion and the connecting portion is an acute angle.

ITEM 62. The battery of any of the preceding items, wherein the connecting portion is elastically biased upward by the bending portion.

ITEM 63. The battery of any of the preceding items, wherein a circumferential length of the contact portion is same as a circumferential length of the tab coupling portion.

ITEM 64. The battery of any of the preceding items, wherein a circumferential length of the contact portion is same as a circumferential length of the connecting portion.

ITEM 65. The battery of any of the preceding items, wherein a circumferential length of the contact portion is greater than a circumferential length of the tab coupling portion.

ITEM 66. The battery of any of the preceding items, wherein a circumferential length of the contact portion is greater than a circumferential length of the connecting portion.

ITEM 67. The battery of any of the preceding items, wherein the contact portion has an arc shape extending in a circumferential direction along the beading portion of the battery housing.

ITEM 68. The battery of any of the preceding items, wherein the contact portion has an arc shape extending in opposite directions along a circumferential direction, from an intersection between the connecting portion and the contact portion.

ITEM 69. The battery of any of the preceding items, wherein a sum of lengths of the contact portions extending in the circumferential direction corresponds to a length of an inner circumference of the battery housing.

ITEM 70. The battery of any of the preceding items, wherein the connecting portion has an arc shape extending in the circumferential direction along the contact portion.

ITEM 71. The battery of any of the preceding items, wherein a boundary region between the tab coupling portion and the housing coupling portion is bent so that an end portion of the housing coupling portion faces the beading portion.

ITEM 72. The battery of any of the preceding items, wherein a connected portion between the contact portion and the connecting portion is bent.

ITEM 73. The battery of any of the preceding items, wherein a connected portion between the contact portion and the connecting portion has a complementary shape corresponding to an inner surface of the beading portion.

ITEM 74. The battery of any of the preceding items, wherein a connected portion between the contact portion and the connecting portion is coupled to the beading portion while having a shape matching an inner surface of the beading portion.

ITEM 75. The battery of any of the preceding items, wherein a boundary region between the tab coupling portion and the housing coupling portion is located more inside than an innermost point of the beading portion formed on the battery housing.

ITEM 76. The battery of any of the preceding items, wherein, when viewed along a longitudinal axis of the battery housing, the tab coupling portion does not overlap the beading portion.

ITEM 77. The battery of any of the preceding items, wherein the second electrode comprises a second uncoated portion that is not coated with an active material layer and is exposed to the outside of the separator at a long side end thereof, at least a part of the second uncoated portion being used as an electrode tab by itself,
wherein the battery further comprises a terminal provided opposite to the opening portion and electrically connected to the second uncoated portion.

ITEM 78. The battery of any of the preceding items, further comprising a second current collector formed between the second uncoated portion and the terminal and comprising a tab coupling portion coupled to the second uncoated portion and a terminal coupling portion coupled to the terminal.

ITEM 79. The battery of any of the preceding items, wherein the terminal coupling portion covers a winding central hole of the electrode assembly.

ITEM 80. The battery of any of the preceding items, wherein a longest radius from a center of the terminal coupling portion of the second current collector to an end of the tab coupling portion of the second current collector is greater than a longest radius from a central portion of the current collector to an end of the tab coupling portion of the current collector.

ITEM 81. The battery of any of the preceding items, wherein the tab coupling portion of the second current collector is coupled to a bent end portion of the second uncoated portion.

ITEM 82. The battery of any of the preceding items, wherein a welding region for coupling the tab coupling portion of the second current collector to the bent end portion of the second uncoated portion is further formed, wherein a distance from a center of the terminal coupling portion of the second current collector to the welding region of the second current collector is same as or has a distance deviation of 5% or less from a distance from a central portion of the current collector to a welding region on the tab coupling portion of the current collector.

ITEM 83. The battery of any of the preceding items, wherein the welding region of the second current collector has a length greater than a length of the welding region on the tab coupling portion of the current collector.

ITEM 84. The battery of any of the preceding items, wherein one or more holes for injecting an electrolytic solution are formed in the tab coupling portion.

ITEM 85. The battery of any of the preceding items, wherein a form factor ratio obtained by dividing a diameter of the battery by a height is greater than 0.4.

ITEM 86. The battery of any of the preceding items, wherein resistance measured between a positive electrode and a negative electrode is equal to or less than 4 m$\Omega$.

ITEM 87. A battery pack comprising the battery according to any one of items 1 to 86 and 92 to 106.

ITEM 88. The battery pack of item 87, wherein a plurality of batteries are arranged in a certain number of columns, wherein a terminal and an outer surface of a bottom of a battery housing of each battery are located to face upward.

ITEM 89. The battery pack of item 88, further comprising a plurality of bus bars configured to connect the plurality of batteries in series and in parallel,

wherein each of the plurality of bus bars is located over adjacent batteries,
wherein each of the plurality of bus bars comprises:

a body portion extending between adjacent terminals;
a plurality of first bus bar terminals extending from a side of the body portion and electrically coupled to an electrode terminal of a battery located at the side; and

a plurality of second bus bar terminals extending from the other side of the body portion and electrically connected to an outer surface of a bottom of a battery housing of a battery located at the other side.

ITEM 90. A vehicle comprising the battery pack according to item 87 and/or a battery according to any of items 1 to 86 or and 92 to 106.

ITEM 91. A current collector comprising:

at least one tab coupling portion coupled to a first uncoated portion of an electrode assembly; and
at least one housing coupling portion extending from the tab coupling portion and electrically coupled to a beading portion of a battery housing.

ITEM 92. A battery comprising:

a rolled electrode assembly having a structure in which a first electrode and a second electrode each having a sheet shape and a separator located between the first and second electrodes are wound in one direction, the first electrode comprising a first uncoated portion not coated with an active material layer and exposed to the outside of the separator at a long side end thereof,
at least a part of the first uncoated portion being used as an electrode tab by itself;
a battery housing in which the electrode assembly is accommodated through an opening portion formed at a side thereof;
a current collector electrically connected to the first uncoated portion and an inner surface of the battery housing; and
a sealing gasket located between the opening portion of the battery housing and the current collector, wherein a portion of the current collector contacting the inner surface of the battery housing is located between the inner surface of the battery housing and the sealing gasket.

ITEM 93. The battery of any of the preceding items, wherein the battery housing comprises a beading portion formed on an end portion adjacent to the opening portion and press-fitted inward.

ITEM 94. The battery of any of the preceding items, wherein an extension direction of a welding pattern formed between the first uncoated portion and the tab coupling portion and an extension direction of a welding pattern formed between the beading portion and the contact portion are perpendicular to each other.

ITEM 95. The battery of any of the preceding items, wherein an innermost point of the beading portion is located more inside in a radial direction than a distal point of the crimping portion.

ITEM 96. The battery of any of the preceding items, wherein the sealing gasket surrounds the cap, wherein a radial length of a portion of the sealing gasket covering a bottom surface of the cap is less than a radial length of a portion of the sealing gasket covering a top surface of the cap.

ITEM 97. The battery of any of the preceding items, wherein, when a total radial length of the tab coupling portion is T, an outer diameter of the electrode assembly is JR, and a height of an outermost segment of the electrode assembly is F, JR - 2*F ≤ T < JR.

ITEM 98. The battery of any of the preceding items, wherein, when a minimum value of a distance from the innermost point of the beading portion to the central point of the outermost welding bead in the radial direction is W1, and when a distance from the innermost point of the beading portion to the central point of an outermost welding bead in the radial direction when the overlap length is OV is W, W1 = R1 + 0.5 * Wbead,min, and W = OV - 0.5 * Wbead,min.

ITEM 99. The battery of any of the preceding items, wherein the beading portion has a flat section parallel to a bottom surface of the battery housing in at least a region, and when the overlap length is OV and a radius of curvature of the beading portion is R1, a length of the flat section of the beading portion contacting the current collector is OV - R1.

ITEM 100. The battery of any of the preceding items, wherein a radial width length of a welding pattern formed between the beading portion and the contact portion is equal to or greater than Wbead,min and equal to or less than OV - R1.

ITEM 101. The battery of any of the preceding items, wherein a ratio of the radial width length of the welding pattern to a length of the flat section ranges from 10% to 40%.

ITEM 102. The battery of any of the preceding items, wherein a ratio of an area where the current collector does not contact a top surface of the electrode assembly to an area of a circle having an outer diameter of the electrode assembly as a diameter is equal to or greater than 30% and less than 100%.

ITEM 103. The battery of any of the preceding items, wherein a ratio of an area where the current collector does not contact a top surface of the electrode assembly to an area of a circle having an outer diameter of the electrode assembly as a diameter is equal to or greater than 60% and less than 100%.

ITEM 104. The battery of any of the preceding items, wherein a diameter of the current collector hole is less than a diameter of a winding central hole formed in a core of the electrode assembly.

ITEM 105. The battery of any of the preceding items, wherein, when a diameter of the winding central hole is R3, a diameter of the current collector hole is equal to or greater than 0.5*R3 and less than R3.

ITEM 106. The battery of any of the preceding items, wherein, when a diameter of the winding central hole is R3, a diameter of the current collector hole is equal to or greater than 0.7*R3 and less than R3.

REFERENCE SIGNS

| 5: | vehicle |
| 3: | battery pack |
| 2: | pack housing |
| 1: | battery |
| 10: | electrode assembly |
| 11: | first uncoated portion |
| 11a: | segment |
| 12: | second uncoated portion |
| 101: | bent portion |
| 102: | tab surface |
| Hi: | winding central hole |
| 20: | battery housing |
| 21: | beading portion |
| 22: | crimping portion |
| 30: | current collector (first current collector) |
| H2: | current collector hole |
| 31: | central portion |
| 32: | tab coupling portion |
| 33: | housing coupling portion |
| 33a: | contact portion |
| 33b: | connecting portion |
| 40: | cap |
| 41: | venting portion |
| G1: | sealing element |
| 50: | terminal |
| G2: | insulating gasket |
| T1: | first electrode terminal |
| T2: | second electrode terminal |
| P: | current collector (second current collector) |
| P1: | tab coupling portion |
| P2: | terminal coupling portion |
| P3: | connecting portion |
| P4: | edge portion |
| S: | insulator |

F:      flat section
BD:     welding bead
PD:     press-fitting depth
OV:     overlap length

**Claims**

1.  A battery (1) comprising:

    a rolled electrode assembly (10) comprising a first electrode, a second electrode, and a separator arranged between the first electrode and the second electrode, wherein the first electrode and the second electrode each have a sheet shape, wherein the first electrode, the second electrode and the separator are wound in a winding direction,
    wherein the first electrode comprises a first uncoated portion (11) free of an active material coating, wherein the first uncoated portion (11) extends beyond an edge of the separator;
    a battery housing (20) in which the electrode assembly (10) is received, wherein the battery housing (20) has an opening portion formed at a side thereof;
    a current collector (30) comprising a tab coupling portion (32) coupled to the first uncoated portion (11) and a housing coupling portion (33) extending from the tab coupling portion (32) and coupled to an inner surface of the battery housing (20); and
    a cap (40) covering the opening portion.

2.  The battery of claim 1, wherein the battery housing (20) comprises a beading portion (21) formed on an end portion adjacent to the opening portion and press-fitted inward.

3.  The battery of claim 2, wherein the battery housing (20) comprises a crimping portion (22) formed at a position between the opening portion and the beading portion (21), wherein the crimping portion (22) extends and is bent toward the opening portion, wherein the housing coupling portion (33) is preferably press-fixed by the crimping portion (22).

4.  The battery of claim 2 or 3, wherein the housing coupling portion (33) comprises:

    a contact portion (33a) coupled to the beading portion (21) of the battery housing (20); and
    a connecting portion (33b) connecting the tab coupling portion (32) to the contact portion (33a).

5.  The battery of claim 4, wherein at least a part of the connecting portion (33b) is convex upward with respect to an imaginary straight line extending from an end portion of the contact portion (33a) to an end portion of the tab coupling portion (32).

6.  The battery of claim 4 or 5, wherein the connecting portion (33b) has a raised portion arranged higher than the beading portion (21).

7.  The battery of any of claims 4 to 6, wherein the connecting portion (33b) comprises at least one bent part (C), wherein the at least one bent part (C) is arranged over an imaginary plane that bisects the imaginary straight line that extends from the end portion of the contact portion (33a) to the end portion of the tab coupling portion (32) and is parallel to a bottom surface of the battery housing (20); and/or
    wherein the at least one bent part (C) is bent at an obtuse angle so as not to overlap with itself when viewed along a longitudinal axis of the battery housing (20).

8.  The battery of any of claims 4 to 7, wherein a boundary point between the contact portion (33a) and the connecting portion (33b) is bent, preferably at an obtuse angle.

9.  The battery of any of claims 4 to 8, wherein an inclination of the connecting portion (33b) decreases stepwise or gradually toward the beading portion (21).

10. The battery of any of claims 4 to 9, wherein an angle between the tab coupling portion (32) and the connecting portion (33b) ranges from 0° to 90°.

**11.** The battery of any of claims 4 to 10, wherein the connecting portion (33b) supports the cap (40).

**12.** The battery of any of claims 4 to 11, wherein the tab coupling portion (32) and the contact portion (33a) are arranged at a same height.

**13.** The battery of any of claims 4 to 12, wherein the contact portion (33a) comprises a flat surface coupled to a top surface of the beading portion (21) facing the opening portion.

**14.** The battery of any of claims 2 to 13, wherein the beading portion (21) comprises:

a beading portion top surface arranged over an innermost point that is press-fitted inward; and
a beading portion (21) bottom surface arranged under the innermost point that is press-fitted inward.

**15.** The battery of claim 14, wherein at least one tab coupling portion (32) of the current collector (30) is arranged at a lower position than the beading portion bottom surface.

**16.** The battery of claim 14 or 15, wherein at least one of the beading portion top surface and the beading portion bottom surface is inclined with respect to a bottom surface of the battery housing (20), wherein the contact portion (33a) is preferably arranged on an inclined top surface of the beading portion (21).

**17.** The battery of claim 14 or 15, wherein at least one of the beading portion top surface and the beading portion bottom surface is parallel to a bottom surface of the battery housing (20) in at least a region, wherein the contact portion (33a) is preferably mounted on a flat top surface of the beading portion (21).

**18.** The battery of any of claims 14 to 17, wherein the beading portion top surface and the beading portion bottom surface are asymmetric with respect to an imaginary reference plane that passes through the innermost point of the beading portion (21) and is parallel to a bottom surface of the battery housing (20).

**19.** The battery of any of claims 2 to 18, wherein,

a press-fitting depth PD of the beading portion (21) is greater than or equal to the sum of a minimum value of a radius of curvature of the beading portion (21) $R_{1,min}$,
a minimum value of a welding bead width $W_{bead,min}$, and
a minimum value of a radius of curvature at a boundary region between the beading portion (21) and the inner surface of the battery housing (20) $R_{2,min}$,
such that $PD \geq R_{1,min}+R_{2,min}+W_{bead,min}$.

**20.** The battery of any of claims 2 to 19, wherein a press-fitting depth of the beading portion (21) ranges from 0.2 mm to 10 mm.

**21.** The battery of any of claims 4 to 20, wherein

a ratio of an overlap length OV corresponding to a shortest distance from an end portion of the contact portion (33a) to a vertical line that passes through an innermost point of the beading portion (21) over a press-fitting depth PD of the beading portion (21) fulfils

$$(R_{1,min}+W_{bead,min})/PD_{max} \leq OV/PD \leq (PD_{max}-R_{2,min})/PD_{max},$$

wherein $PD_{max}$ is a maximum value of the press-fitting depth,
$R_{1,min}$ is a minimum value of a radius of curvature of the beading portion (21),
$W_{bead,min}$ is a minimum value of a welding bead width, and
$R_{2,min}$ is a minimum value of a radius of curvature at a boundary region between the beading portion (21) and the inner surface of the battery housing (20).

**22.** The battery of any of claims 4 to 21, wherein the contact portion (33a) is welded to the beading portion (21), preferably to a flat top surface of the beading portion (21), wherein a welding region between the contact portion (33a) and the beading portion (21) is more preferably narrower than the flat top surface of the beading portion (21).

23. The battery of any of claims 4 to 22, wherein a ratio of a distance W from an innermost point of the beading portion (21) to a central point of an outermost welding bead in a radial direction over a press-fitting depth PD of the beading portion (21) fulfils $(OV_{min}-0.5*W_{bead,min})/PD_{max} \leq W/PD \leq (OV_{max}-0.5*W_{bead,min})/PD_{max}$,

wherein $PD_{max}$ is maximum value of the press-fitting depth,
OV is an overlap length that is a shortest distance from an end portion of the contact portion (33a) to a vertical line that passes through the innermost point of the beading portion (21),
$OV_{min}$ is a minimum value of the overlap length OV,
$OV_{max}$ is a maximum value of the overlap length OV, and
$W_{bead,min}$ is a minimum value of a welding bead width.

24. The battery of any of claims 2 to 23, wherein at least one welding bead (BD) is formed between the beading portion (21) and the contact portion (33a), wherein a plurality of welding beads (BD) formed between the beading portion (21) and the contact portion (33a) are preferably formed in a same contact portion (33a) and/or wherein a width of the at least one welding bead (BD) formed between the beading portion (21) and the contact portion (33a) is preferably equal to or greater than 0.1 mm

25. The battery of any of the preceding claims, wherein the first uncoated portion (11) and the tab coupling portion (32) are welded in a radial direction of the electrode assembly (10).

26. The battery of any of the preceding claims, wherein the tab coupling portion (32) is welded to the first uncoated portion (11) while being parallel to a bottom surface of the battery housing (20).

27. The battery of any of the preceding claims, wherein a plurality of welding beads (BD) formed between the first uncoated portion (11) and the tab coupling portion (32) form a welding pattern having a straight line shape extending in the radial direction of the electrode assembly (10).

28. The battery of any of the preceding claims, wherein at least a part of the first uncoated portion (11) comprises a plurality of segments (11a) mutually separated in the winding direction of the electrode assembly (10), wherein the plurality of segments (11a) are preferably bent in a radial direction of the rolled electrode assembly (10) forming a tab surface (102).

29. The battery of claim 28, wherein the plurality of segments (11a) overlap in multiple layers in the radial direction of the rolled electrode assembly (10) forming the tab surface (102),

wherein the tab surface (102) comprises a first radial section and a second radial section,
wherein, in the first radial section, the number of overlapping layers of the segments (11a) increases sequentially from a first radial position corresponding to an outer circumference of the rolled electrode assembly (10) to a second radial position at which the number of overlapping layers of the plurality of segments (11a) reaches a maximum value, wherein the second radial position is closer to the radial center than the first radial position, and wherein the second radial section covers a radial region from the second radial position to a third radial position corresponding to a radial position of an innermost segment of the plurality of segments (11a) wherein the third radial position is closer to the radial center than the second radial position.

30. The battery of claim 29, wherein the tab coupling portion (32) is coupled to the tab surface (102) overlapping the second radial section, wherein the number of overlapping layers in the second radial section preferably is 10 or more, wherein the tab coupling portion (32) is more preferably welded to the tab surface (102), and a welding region of the tab coupling portion (32) more preferably overlaps at least 50% of an extension of the second radial section in the radial direction of the electrode assembly (10).

31. The battery of any of the preceding claims, wherein the current collector (30) comprises a current collector hole (H2) at a central portion of the current collector (30), wherein a diameter of the current collector hole (H2) is equal to or greater than a diameter of a winding central hole formed in a core of the electrode assembly (10) or wherein a diameter of the current collector hole (H2) is less than a diameter of the winding central hole formed in a core of the electrode assembly (10).

32. The battery of any of claims 4 to 31, wherein the battery further comprises a sealing element (G1) arranged between the battery housing (20) and the cap (40),

wherein the contact portion (33a) is preferably arranged between the sealing element (G1) and the beading portion (21), and/or

wherein a thickness of the sealing element (G1) preferably varies in a circumferential direction, and/or

wherein a thickness of the sealing element (G1) is alternately increased and decreased in a circumferential direction; and/or

wherein a thickness of the sealing element (G1) in a region where the sealing element (G1) does not contact the contact portion (33a) is greater than a thickness of the sealing element (G1) in a region where the sealing element (G1) contacts the contact portion (33a).

33. The battery of claim 32, wherein the sealing element (G1) has a same compressibility in a region where the sealing element (G1) contact the contact portion (33a) and in a region where the sealing element (G1) does not contact the contact portion (33a); or

wherein a compressibility of the sealing element (G1) in a region where the sealing element (G1) does not contact the contact portion (33a) is less than a compressibility of the sealing element (G1) in a region where the sealing element (G1) contacts the contact portion (33a).

34. The battery of any of the preceding claims, wherein the current collector (30) comprises a plurality of leg structures extending in a radial direction in a state in which the tab coupling portion (32) and the housing coupling portion (33) are connected to each other, wherein the leg structures are preferably arranged in a radial shape, a cross shape, or a combined shape thereof about a central portion (31) of the current collector (30), wherein each of the leg structures preferably comprises a respective housing coupling portion (33) are provided, and

wherein the plurality of housing coupling portions (33) are preferably connected to one another and integrally formed.

35. The battery of any of claims 4 to 34, wherein the connecting portion (33b) comprises at least one bending portion (B) whose extension direction changes at least once, wherein an angle between the contact portion (33a) and the connecting portion (33b) is an acute angle due to the bending portion (B), and/or wherein the connecting portion (33b) is elastically biased upward by the bending portion (B).

36. The battery of any of claims 4 to 35, wherein a circumferential length of the contact portion (33a) is equal to or greater than a circumferential length of the tab coupling portion (32); and/or

wherein a circumferential length of the contact portion (33a) is equal to or greater than a circumferential length of the connecting portion (33b).

37. The battery of any of claims 4 to 36, wherein the contact portion (33a) has an arc shape extending in a circumferential direction along the beading portion (21) of the battery housing (20), wherein a sum of lengths of the contact portions (33a) extending in the circumferential direction optionally corresponds to a length of an inner circumference of the battery housing (20); and/or

wherein the contact portion (33a) has an arc shape extending in opposite directions along a circumferential direction, from an intersection between the connecting portion (33b) and the contact portion (33a); and/or wherein the connecting portion (33b) has an arc shape extending in the circumferential direction along the contact portion (33a).

38. The battery of any of claims 2 to 37, wherein a boundary region between the tab coupling portion (32) and the housing coupling portion (33) is bent so that an end portion of the housing coupling portion (33) faces the beading portion (21).

39. The battery of any of claims 4 to 38, wherein a boundary region between the contact portion (33a) and the connecting portion (33b) is bent; and/or has a complementary shape corresponding to an inner surface of the beading portion (21); and/or is coupled to the beading portion (21) having a shape matching an inner surface of the beading portion (21).

40. The battery of any of the preceding claims, wherein a boundary region between the tab coupling portion (32) and the housing coupling portion (33) is arranged radially inwards from an innermost point of the beading portion (21) formed on the battery housing (20).

41. The battery of any of the preceding claims, wherein the second electrode comprises a second uncoated portion (12) free of an active material coating, wherein the second uncoated portion (12) extends beyond an edge of the separator,

wherein the battery further comprises a terminal (50) arranged opposite to the opening portion and electrically connected to the second uncoated portion (12).

**42.** The battery of claim 41, further comprising a second current collector (P) formed between the second uncoated portion (12) and the terminal (50) and comprising a tab coupling portion coupled to the second uncoated portion (12) and a terminal coupling portion coupled to the terminal (50)., wherein the terminal coupling portion preferably covers a winding central hole of the electrode assembly (10); and/or
wherein the second current collector has an extension in the radial direction greater than an extension in the radial direction of the first collector

**43.** The battery of any of the preceding claims, wherein a form factor ratio obtained by dividing a diameter of the battery by a height of the battery is greater than 0.4.

**44.** The battery of any of the preceding claims, wherein a resistance measurable between the first electrode and the second electrode and/or between the second electrode and the first electrode is equal to or less than 4 mΩ.

**45.** The battery of any of claims2 to 44, wherein an extension direction of a welding pattern formed between the first uncoated portion (11) and the tab coupling portion (32) and an extension direction of a welding pattern formed between the beading portion (21) and the contact portion (33a) are perpendicular to each other.

**46.** The battery of any of claims 32 to 45, wherein the sealing element (G1) surrounds the cap (40),
wherein a radial extension of a portion of the sealing element (G1) covering a bottom surface of the cap (40) is less than a radial extension of a portion of the sealing element (G1) covering a top surface of the cap (40).

**47.** The battery of any of the preceding claims, wherein a ratio of an area where the current collector (30) does not contact a top surface of the electrode assembly (10) to an area of a circle having an outer diameter corresponding to a diameter of the electrode assembly (10) is equal to or greater than 30% and less than 100%, preferably equal to or greater than 60% and less than 100%.

**48.** The battery of claim 31, wherein, for a diameter of the winding central hole R3, a diameter of the current collector hole (H2) is equal to or greater than 0.5*R3 and less than R3 or equal to or greater than 0.7*R3 and less than R3.

**49.** A battery pack (3) comprising a plurality of batteries according to any of the preceding claims;
wherein the plurality of batteries are preferably arranged in columns,
wherein a terminal (50) and an outer surface of a top side of a battery housing (20) of each battery are preferably arranged facing a plurality of bus bars (150) configured to connect the plurality of batteries in series and in parallel.

**50.** A vehicle (5) comprising at least one battery (1) according to any of claims 1 to 48 and/or a battery pack (3) according to claim 49.

**FIG. 1a**

**FIG. 1b**

**FIG. 1c**

**FIG. 1d**

**FIG. 2**

**FIG. 3**

## FIG. 4a

## FIG. 4b

**FIG. 5**

**FIG. 6**

**FIG. 7**

## FIG. 8a

## FIG. 8b

**FIG. 9**

**FIG. 10**

**FIG. 11**

**FIG. 12**

**FIG. 13a**

**FIG. 13b**

**FIG. 13c**

**FIG. 13d**

| | CURRENT COLLECTING PLATE SHAPE BEFORE SIZING | CURRENT COLLECTING PLATE DEFORMED SHAPE AFTER 1 MM-SIZING | STRESS APPLIED BY CURRENT COLLECTING PLATE TO J/R |
|---|---|---|---|
| 1 | | WELDING PORTION LIFTING: 0.72mm | 4.5MPa |
| 2 | | WELDING PORTION LIFTING: 0.99mm | 3.7MPa |
| 3 | | LIFTED HEIGHT: 0.26mm<br>WELDING PORTION LIFTING: 0.02mm | 2.0MPa |

FIG. 13e

EP 4 044 334 A2

**FIG. 13f**

**FIG. 13g**

**FIG. 14**

**FIG. 15**

**FIG. 16a**

**FIG. 16b**

**FIG. 17**

## FIG. 18a

## FIG. 18b

**FIG. 19**

**FIG. 20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6677082 B
- US 6680143 B

- KR 1020190030016 A